# EUROPÄISCHE PATENTSCHRIFT

(11) **EP 1 108 765 B1**
(45) Veröffentlichungstag und Bekanntmachung des Hinweises auf die Patenterteilung: **08.07.2009**
(21) Anmeldenummer: 00125341.8
(22) Anmeldetag: 30.11.2000
(51) Int. Cl.: C09D 183/08, C08G 77/388, C04B 41/49, C14C 9/00

(54) **Hydrophobierung mit carboxylgruppenhaltigen Polysiloxanen**
Hydrophobisation with carboxyl group containing polysiloxanes
Hydrophobisation avec des polysiloxanes ayant des groupes carboxyliques

(30) Priorität: 13.12.1999 DE 19959949
(43) Veröffentlichungstag der Anmeldung: 20.06.2001
(60) Teilanmeldung: 07119099.5
(73) Patentinhaber: LANXESS Deutschland GmbH, 51369 Leverkusen (DE)
(72) Erfinder: Schäfer, Walter, Dr., 42799 Leichlingen (DE); Sackmann, Günter, Dr., 51379 Leverkusen (DE); Reiners, Jürgen, Dr., 51373 Leverkusen (DE); Hassel, Tilmann, Dr., 50259 Pulheim (DE); Schnee, Manfred, 51381 Leverkusen (DE); Novotny, Fritz, 51467 Bergisch Gladbach (DE)

(56) Entgegenhaltungen:
- EP-A- 0 095 676
- EP-B- 0 324 345
- WO-A-98/21369
- DE-A- 19 707 970
- US-A- 5 702 490

## Beschreibung

Die Erfindung betrifft Carboxylgruppen-haltige Polysiloxane zur Hydrophobierung von Substraten, insbesondere Papier, Textilien, Leder oder Pelzen, insbesondere von Leder und Pelzfellen, sowie ein Verfahren zu ihrer Herstellung, ein Hydrophobiermittelsystem, enthaltend dieses Polysiloxan sowie ein Verfahren zur Herstellung hydrophober Substrate.

Schuhoberleder, Täschnerleder, Bekleidungsleder oder auch Automobil- und Möbelleder können durch weichmachende Nachgerbstoffe und Hydrophobiermittel so ausgerüstet werden, dass ein geschmeidiges, wasserabweisendes Leder (Waterproof-Leder) resultiert, das auch unter dynamischer Beanspruchung keine Penetration von Wasser zuläßt. Zur Erzielung eines hohen Tragekomforts werden Leder mit hoher Wasserdampfpermeabilität verlangt. Dies ist zum Beispiel für Schuhe oder Bekleidungsleder erforderlich.

Carboxylgruppenhaltige Silicone sind aus DE-A-35 29 869, DE-A-38 00 629 und WO 95/22627 bekannt. Hierbei handelt es sich um carboxylgruppenhaltige Silicone, deren COOH-Gruppen über eine Alkylengruppe mit der Siliconhauptkette verbunden sind. Die Verfügbarkeit dieser Verbindungen im industriellen Maßstab ist jedoch begrenzt: Die Synthese könnte z.B. durch Platin-katalysierte Addition von endständig ungesättigten Säuren an SiH-funktionelle Siliconöle erfolgen, wobei Nebenreaktionen durch Einsatz von Schutzgruppen vermieden werden müssen. Zuletzt muß die Schutzgruppe noch durch Basen oder Säuren hydrolytisch entfernt werden. Solche Verfahren sind darüber hinaus auch teuer. Auch die Stabilität solcher Emulsionen bei der Lagerung ist noch nicht ausreichend und der hydrophobierende Effekt nicht befriedigend.

Gemäß DE-A-44 04 890 wird ein Verfahren zur Hydrophobierung von Leder mit carboxylgruppenhaltigen Polysiloxanen in einer wässrigen Emulsion in Gegenwart von Emulgatoren beschrieben, das dadurch gekennzeichnet ist, dass man kammartig carboxylfunktionalisierte Polysiloxane einsetzt, bei denen die Carboxylgruppen über Spacergruppen in Form von linearen oder verzweigten C₂ bis C₄₀-Alkylengruppen, die durch bestimmte Substituenten unterbrochen sein können, an die Polymerhauptkette gebunden sind. In den Beispielen wird Leder mit Polysiloxanen hydrophobiert, deren Carboxylgruppe über einen (CH₂)₁₀-Spacer mit der Polysiloxan-Hauptkette verbunden sind. Mit einer Mineralsalzfixierung wurden Maeser-Werte von 15000-30000 bzw. 20000 bis >100000 Flexe erzielt.

DE-C-196 46 916 betrifft die Verwendung von Carboxyamid-Polysiloxanen, die durch Umsetzung von aminofunktionellen Polysiloxanen mit Dicarbonsäureanhydriden erhältlich sind, zur Hydrophobierung von Materialien faseriger Struktur, insbesondere von Leder und Lederpelzen. Die Carboxyamid-Polysiloxane weisen einen Carboxylgruppengehalt von 0,02 bis 1,0 mMol/g sowie eine Molmasse Mn im Bereich von 2000 bis 60000 g/mol auf. Bei Einsatz dieser Verbindungen kann die Lederbehandlung in der wässrigen Flotte durchgeführt werden. Außerdem soll eine Nachbehandlung mit Metallsalzen und der Einsatz von Emulgatoren und Lösungsmitteln nicht nötig sein. Die in der DE-C-196 46 916 aufgeführten Verbindungen sind gemäß EP-A-95 676 herstellbar. Sie erreichen jedoch, wie den Anwendungsbeispielen der DE 196 46 916 zu entnehmen ist, nicht die Hydrophobwerte, die für Waterproof-Leder verlangt werden. In der Regel werden im Maeser-Test (in Anlehnung an ASTM D 2099-70) mehr als 50000 Flexe verlangt. Das ist die Anzahl der Knickungen, die das Leder im Wasserbad unter mechanischer Stauchung ohne Wasserdurchtritt überstehen muß. Die in der DE-C-196 46 916 genannten Leder werden erst nach einer gegenüber der Kontrolle (14600 Stauchungen) um 50 % erhöhten Stauchungszahl wasserdurchlässig (Seite 14, Zeile 45 bis 47). Daher ist trotz dieses Fortschritts der erreichbare Hydrophobiereffekt noch nicht ausreichend. In der Beschreibung wird auf die übliche Fixierung mit Ameisensäure verwiesen. Die Wirkung der Hydrophobierung kann durch eine Nachbehandlung mit einem in der Gerberei üblichen zwei-, drei- oder vierwertigen Metallsalz, insbesondere mit einem basischen Chromsulfat, mit Aluminiumsulfat, Zirkonsulfat, Titansulfat, Calciumchlorid oder Magnesiumsulfat verstärkt werden (Seite 9, Zeilen 25 bis 27). In den Beispielen wird von einer Fixierung mit einem Chromsalz auch Gebrauch gemacht. Trotzdem sind die Maeser-Werte noch zu niedrig für viele Anforderungen. Umgekehrt heißt das aber, dass die metallsalzfreie Fixierung immer noch verbesserungsbedürftig ist.

Bei der Verwendung von Carboxyamido-Polysiloxanen, carboxylgruppenhaltigen Polysiloxanen und insbesondere Polysiloxanen, die freie Aminogruppen enthalten, treten jedoch noch weitere Nachteile auf. Die mit üblichen Farbstoffen gefärbten Leder weisen eine ungleichmäßige Farbintensität auf, die sich vor allem in einer Zweiseitigkeit des Leder äußern kann. Damit ist ein Farbunterschied zwischen Narbenseite und Fleischseite des Leders gemeint, wobei die Fleischseite wesentlich intensiver gefärbt erscheint als die Narbenseite. Auch der Griff des Leders ist bei Einsatz der bekannten Silicone oft seidig, unerwünscht siliconartig oder fettig.

DE-A-196 29 986 betrifft ein Verfahren zum Hydrophobieren von Leder, welche in Abwesenheit von vegetabilen, synthetischen und mineralischen Gerbstoffen nur mit Polymergerbstoffen und gegebenenfalls zur Vorgerbung mit Aldehyden oder reaktiven Carbonylverbinbdungen gegerbt worden sind, bei dem man als Hydrophobiermittel Polysiloxane gemäß WO 95/22627 (kammartig carboxylfunktionalisierte Polysiloxane) einsetzt. Auch für diese Produkte wird eine Fixierung mit Zirkoniumsalzen beschrieben, um ausreichende Hydrophobiereffekte zu erzielen.

DE-A-196 39 782 beschreibt organopolysiloxanhaltige Zusammensetzungen auf Wasser-Basis, die beim Verdünnen mit Wasser im wesentlichen keine Alkohole freisetzen und als funktionelle Gruppen Glycidetheralkyl- und/oder (Meth)Acryloxy-alkyl-Gruppen enthalten, wobei jedes Silicium im Organopolysiloxan eine funktionelle Gruppe trägt. Darüber hinaus werden auch Aminoalkylreste als weitere funktionelle Gruppe beansprucht. Die Produkte werden durch Cohydrolyse wasserlöslicher Organosilane hergestellt und unter anderem zur Hydrophobierung von Textil, Leder, Cellulose- und Stärkeprodukten empfohlen. Carboxylgruppen werden als Substituenten nicht erwähnt.

DE-A-196 51 287 A1 betrifft ionische Organosiliciumverbindungen, deren Herstellung und Verwendung. Die beanspruchten Verbindungen werden bevorzugt durch Addition der Doppelbindung funktioneller Acrylester oder Acrylamide an Aminopolysiloxane erhalten. Die beanspruchten ionischen Organosiliciumverbindungen wirken komplexierend auf Übergangsmetalle und können so in der Lederausrüstung (Chrom-gegerbte Leder) dauerhaft anbinden und zu einer permanenten hydrophilen Ausrüstung mit erwünschtem Weichgriff führen. Ebenso haben sie in der Textilausrüstung den Vorteil neben sehr guten hydrophilen Eigenschaften und sehr guter Antistatik zu einem flauschigen Weichgriff zu führen (Seite 20, Zeilen 21 bis 27). Es handelt sich im Prinzip um Polysiloxane mit Betain-Charakter. Solche Produkte sind jedoch für eine Lederhydrophobierung, die auch unter dynamischen Belastungen einer Wasserpenetration standhalten muß, weniger geeignet, da die eingebauten Betain-Gruppen ihre Hydrophilie nicht verlieren (nach den Ausführungen der DE 196 51 287 aber erwünscht ist) und somit den Hydrophobeffekt ungünstig beeinflussen.

DE-A-197 07 970 betrifft polycarbonsäure-funktionelle Polyorganosiloxane. Deren Herstellung erfolgt bevorzugt durch Umsetzung von aminofunktionellen Polysiloxanen mit Polycarbonsäureanhydriden, wobei Tricarbonsäureanhydride und Tetracarbonsäureanhydride eingesetzt werden. An jede Aminogruppe des Silicons werden somit über eine Amidgruppe mindestens zwei Carboxylgruppen gebunden. Durch diese besondere Anordnung von mindestens zwei Carboxylgruppen pro polycarbonsäurefunktionellem Rest wird aufgrund des Chelateffekts eine hohe Affinität der polycarbonsäurefunktionellen Polyorganosiloxane zu kationischen Substraten, insbesondere Metallionen angeführt. Daher eignen sie sich besonders zur Behandlung von gegerbtem Leder (Seite 3, Zeilen 2 bis 5). In den Beispielen wird jedoch eine Arbeitsweise in organischen Lösemitteln vorgeschlagen, die in der Lederindustrie nicht mehr praxisrelevant ist: So liegen die Silicone als Lösungen in Petrolether bzw. Methylisobutylketon (MiBK) vor. Die angegebenen Hydrophobwerte (statische Wasseraufnahme und Bally-Penetrometer) reichen in der Regel nicht aus.

Aus DE-A-43 30 378 sind anionische Cyanamidgruppen enthaltende Urethane mit längeren Kohlenwasserstoffresten bekannt, die sich als Nachgerbstoffe für Leder und Textilien und Emulgatoren eignen. Als Emulgatoren haben die beanspruchten Verbindungen den Vorteil, dass sie nach der Anwendung dimerisieren oder oligomerisieren und dabei ihren ionischen Charakter und damit ihre hydrophilen Eigenschaften verlieren. Die Produkte sind jedoch in ihrer Hydrophobwirkung ebenfalls nicht ausreichend, wenn sie allein eingesetzt werden.

Aus der Veröffentlichung H. Birkhofer, Das Leder 43, Seiten 71-75 (1992), sind reaktive Hydrophobiermittel auf Basis von Polymeren mit reaktiven Gruppen bekannt. Alkylsulfosuccinate und Sulfobernsteinsäuregruppen enthaltende Polysiloxane benötigen keine Fixierung mit Mineralsalzen: M. Kaussen, H. Lohmann, H. Kilian, Das Leder 43 (9), Seiten 223-227 (1992) und DE 42 14 150. Die Hydrophobwirkung solcher Produkte ist jedoch ebenfalls noch verbesserungsbedürftig, da Sulfogruppen im allgemeinen dem ausgerüsteten Leder eine zu große Hydrophilie verleihen.

In EP-A- 579 267 und EP-A-372 746 werden amphiphile Copolymer-Dispersionen verwendet, die durch Copolymerisation von hydrophilen Monomeren, vorzugsweise Acrylsäure, und hydrophoben Monomeren, bevorzugt langkettigem Alkylmethacrylat, hergestellt werden. Man erhält Leder, die waschbar sind oder für die Chemischreinigung geeignet sind. Die Produkte erreichen ihre maximale Wirkung erst mit einer Nachgerbung mit Mineralgerbstoffen, besonders mit Chromsalzen.

EP-A-891 430 beschreibt die Verwendung von Copolymerisaten aus Dicarbonsäure (anhydriden), (Maleinsäureanhydrid) und niederen Olefinen (Isobuten) und hydrophoben Comonomeren (C₂₀-C₂₄-Olefine) in Nachgerbung/Fettung/Hydrophobierung von Leder, auch in Kombination mit Paraffin- oder Silicon-Hydrophobiermitteln. Auch diese Kombinationen entfalten ihre volle Hydrophobierwirkung erst nach einer Fixierung mit Mineralsalzen, insbesondere mit Chromsalzen.

EP-A-757 108 offenbart ein Verfahren zur Herstellung von hydrophobierten Ledern mit Silicon-Ölen, die in einem Copolymer aus einem ungesättigten wasserlöslichen sauren oder basischen Monomer und einem hydrophoben Comonomer dispergiert sind. Sehr gute Hydrophobeffekte können mit den eingesetzten Produkten nur in Verbindung mit einer Chromsalz-Fixierung erreicht werden.

Es sind also bereits zahlreiche Hydrophobiermittel vorgeschlagen worden. Die bekannten Produkte erfüllen die verschiedenen, hohen Anforderungen an die Hydrophobie des fertigen Leders, die Anforderungen hinsichtlich der Griffeigenschaften, der Reißfestigkeit, der Farbegalität, der Zurichtbarkeit und Wasserdampfdurchlässigkeit - meistens werden auch Kombination von mehreren dieser Eigenchaften verlangt - nur unzureichend. Darüber hinaus müssen sie mit Mineralsalzen fixiert werden, um das Optimum hinsichtlich der Hydrophobie zu erzielen. Mit Ameisensäure fixierte Hydrophobiermittel ergeben Leder, die bereits einen gewissen hydrophoben Charakter aufweisen, die sich jedoch für die Anwendung als Schuhoberleder nicht optimal eignen: Hydrophobe Leder sollen eine verminderte statische Wasseraufnahme und einen wasserabstoßenden Effekt aufweisen und zusätzlich auch unter hoher dynamischer Beanspruchung wasserdicht sein, einen weichen Griff haben und darüber hinaus auch für Wasserdampf durchlässig sein, um einen hohen Tragekomfort zu gewährleisten. Sie dürfen aber auch bei weichen Ledern die mechanische Festigkeit des Lederartikels nicht verändern, was für Schuhoberleder besonders wichtig ist. Darüber hinaus darf die Lederoberfläche nicht kleben oder den typischen Silicongriff aufweisen. Außerdem sollte die Fülle des Leders positiv beeinflußt werden. Weitere Anforderungen bestehen in der Lichtechtheit und Hitzestabilität des Leders. Erwünscht ist außerdem eine Permanenz der Hydrophobierung. Naß- und Farbechtheit sind für Bekleidungsleder besonders wichtig. Von der Applikation her müssen auch Anforderungen erfüllt sein, die dem Kunden den bequemen Einsatz ermöglichen: Die Produkte sollen dünnflüssig und mit Wasser verdünnbar sein. Darüber hinaus sollten sie die erforderliche Lagerstabilität aufweisen. Besonders Silicon-Produkte sind in dieser Hinsicht meist kritisch, da sie entweder zu grobteilig sind und dann zur Phasentrennung neigen oder zusätzliche Emulgatoren enthalten, die die Hydrophobie verschlechtern und benetzend wirken. Die mit Hydrophobiermitteln ausgerüsteten Leder dürfen auch keine unerwünschte Losnarbigkeit zeigen. Auch die Zurichtbarkeit hydrophober Leder ist ein großes Problem, da die Haftung wässriger Beschichtungen auf dem hydrophoben Untergrund unbefriedigend ist bzw. bei zu oberflächlichem Sitz des Silicons ein wässriges Beschichtungsmittel für die Lederzurichtung schon beim Versuch der Applikation abperlen würde.

Ein anwendungstechnisches Problem besteht weiter darin, den hydrophoben Wirkstoff in eine stabile und feinteilige Emulsion zu überführen, um bei der Anwendung in der Gerberei eine rasche und gleichmäßige Verteilung des Wirkstoffs in der Faßflotte zu erreichen. Die bisher verwendeten Emulgatoren verbleiben im Leder und wirken dem Hydrophobeffekt entgegen und sollten daher in Hydrophobiermitteln vermieden werden. Darüber hinaus besteht die Anforderung, eine vollständige Flottenauszehrung zu erreichen. Denn nicht aufgezogenes Produkt verursacht hohe Kosten für den Lederhersteller und belastet die Umwelt.

Die nach dem Stand der Technik eingesetzten Hydrophobiermittel bedürfen also weiterhin einiger Verbesserungen. Es sind Produkte erwünscht, die ausschließlich mit einer Ameisensäurefixierung vorzugsweise die gleiche Wirksamkeit zeigen wie mit der bisher üblichen Fixierung unter Verwendung von Chromsalzen oder anderen Mineralsalzen, und die oben genannten Anforderungen erfüllen. Es ist für den Anwender vorteilhaft, den zeitlichen Aufwand durch Verkürzung der einzelnen Schritte bei der Lederherstellung oder durch Zusammenfassung bestimmter Behandlungsschritte zu reduzieren. In diesem Sinne müssen Flottenwechsel und Waschvorgänge in der Praxis minimiert werden. Der Gerber erwartet weiterhin Produkte, die mit den üblichen Hilfsmitteln, die in der Nachgerbung, Färbung und Fettung eingesetzt werden, gut verträglich sind.
WO-A-9821369 betrifft die Verwendung von Carboxyamid-Polysiloxanen zur Lederhydrophobierung, die in Kombination mit Paraffinen eingesetzt werden können. US-A-5702490 betrifft ein Verfahren zum Hydrophobieren von Leder und Pelzfellen mit kammartig carboxylfunktionalisierten Polysiloxanen, die in Kombination mit Paraffinen eingesetzt werden können.
DE-A-19707970 betrifft Polycarbonsäure-funktionalisierte Polyorganosiloxane. EP-A-0324345 betrifft Verfahren zum Hydrophobieren von Leder, Pelzen und Lederaustauschmaterialien, bei dem carboxylfunktionalisierte Polysiloxane verwendet werden, die in Kombination mit Paraffinen eingesetzt werden können.
Die Aufgabe der vorliegenden Erfindung ist die Bereitstellung eines wässrigen Hydrophobiermittelsystems für Leder oder Pelze, das mit einer einfachen Säurefixierung ebenso hohe Wasserdichtigkeit erreicht wie mit einer klassischen Mineralsalzfixierung und darüber hinaus auch die Anforderungen an Weichheit, Farbegalität, Zurichtbarkeit, Wasserdampfdurchlässigkeit der damit hergestellten Leder erfüllt.

Aufgabe der Erfindung ist es auch, ein Hydrophobiermittelsystem bereitzustellen, das zusätzliche Emulgatoren enthält, welche die Hydrophobie nicht beeinträchtigen und beim Auftrocknen ihre Wirksamkeit als Emulgator verlieren (selbstinhibierende Emulgatoren)und das permanent im Leder fixiert wird.

Es wurde überraschend gefunden, dass die oben beschriebenen Nachteile der Hydrophobiermittel nach dem Stand der Technik vermieden werden, wenn man ein Hydrophobiermittelsystem einsetzt, wie es im Anspruch 1 beschrieben ist.

Bevorzugte Carboxygruppen-haltigen Polysiloxane a) weisen beispielsweise die folgenden Strukturen auf:

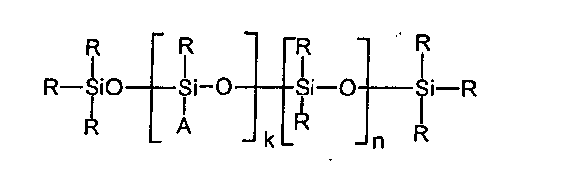

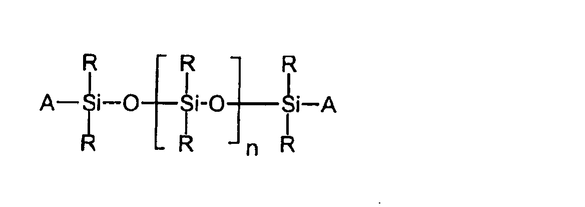

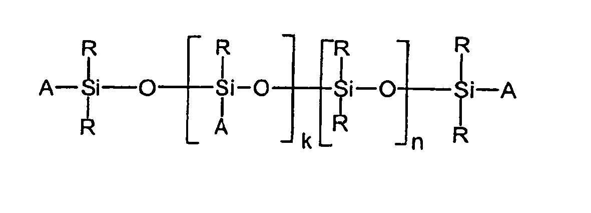

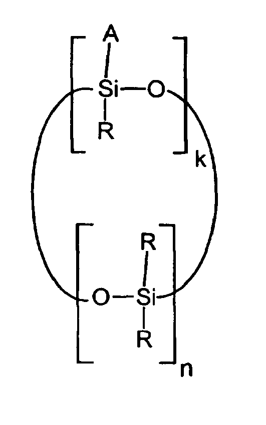

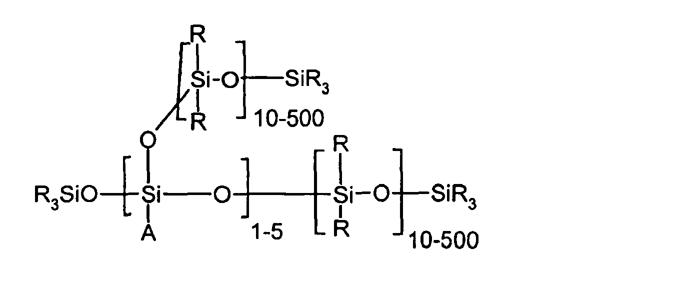

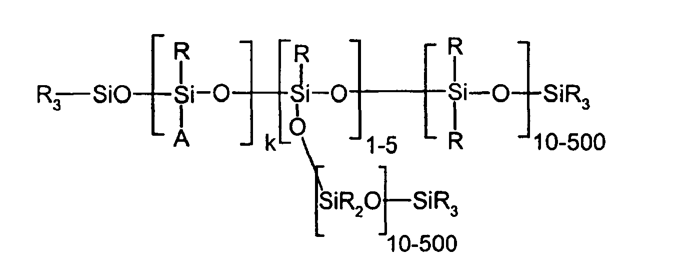

Lineare Polysiloxane a) sind besonders bevorzugt.

Unter "System" im Begriff "Hydrophobiermittelsystem" versteht man im Rahmen dieser Anmeldung, dass die Komponenten a) und b) des Systems als Einzelkomponenten beispielsweise in Form ihrer wässrigen Lösungen oder Dispersionen eingesetzt werden, oder in beliebiger Kombination miteinander vorliegen. Bevorzugt ist es, die Komponenten des Systems als Einzelkomponenten gleichzeitig oder nacheinander einzusetzen. Bevorzugt wird das Polysiloxan a) als letzte Komponente nach einer oder mehreren Komponenten B₁ bis B₄ eingesetzt. Weiterhin bevorzugt ist es, das Polysiloxan a) und Komponente B₄ nach einer oder mehreren Komponenten B₁ bis B₃ einzusetzen.

Bevorzugte Carboxylgruppen-haltige Polysiloxane a) sind solche, bei welchen in oben angegebener Formel (1) in der Bedeutung des Substituenten A die Reste R¹ bis R³ unabhängig voneinander für einen Rest der Formel (1a) 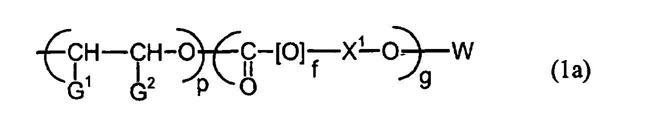 worin
- G¹ und G²: unabhängig voneinander für H oder CH₃ stehen,
- X¹: für einen zweiwertigen Kohlenwasserstoffrest mit 2 bis 30 C-Atomen steht,
- W: für H oder die Gruppe 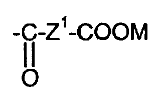 steht, wobei
Z¹ für einen zweiwertigen Kohlenwasserstoffrest mit 1 bis 20 C-Atomen steht und
M die obengenannte Bedeutung hat,
- p: für 0 bis 5 steht,
- f: für 0 oder 1 steht,
- g: für 0 bis 3 steht,
oder der Formel (1b) 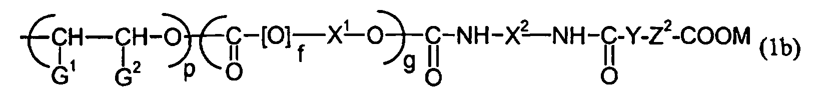 worin
- G1, G², X¹, W, p, f, g und M: die obengenannte Bedeutung haben und
- X²: für einen zweiwertigen Kohlenwasserstoffrest mit 2 bis 20 C-Atomen steht,
- Z²: für einen zweiwertigen Kohlenwassertoffrest mit 1 bis 20 C-Atomen steht, der gegebenenfalls durch eine weitere Gruppe -COOM, -NH₂, -OH substi- tuiert sein kann, wobei M die obengenannte Bedeutung hat, und
- Y: für -O-, -NH-, -N(C₁₋₄-Alkyl)- steht,
oder der Formel (1c)

-Z³-COOM (1c)

worin
- Z³: für einen Alkylenrest mit 1 bis 10 Kohlenstoffatomen steht, der gegebenen- falls durch eine weitere Gruppe -COOM substituiert sein kann, und
- M: die obengenannte Bedeutung hat, stehen.

Besonders bevorzugt sind Reste R¹ bis R³ der Formeln 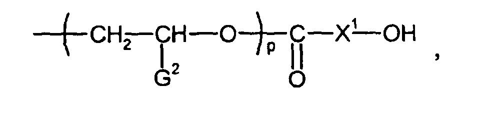 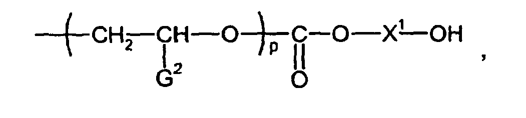 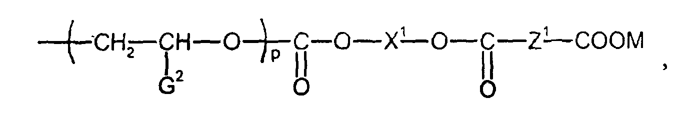 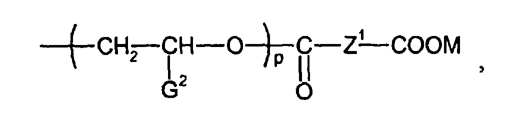 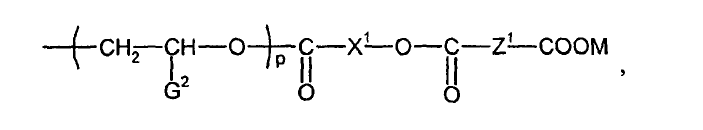 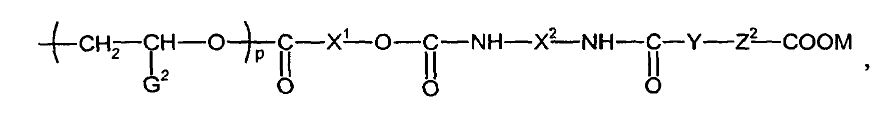 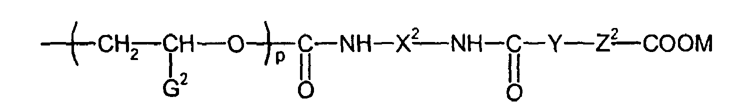 oder -Z³-COOM,
wobei
- G²: für H oder CH₃ steht, und
- X¹,X², Z^{1,} Z²,Z³,Y, M und p: die obengenannte Bedeutung haben.

Geeignete Reste X¹ sind beispielsweise

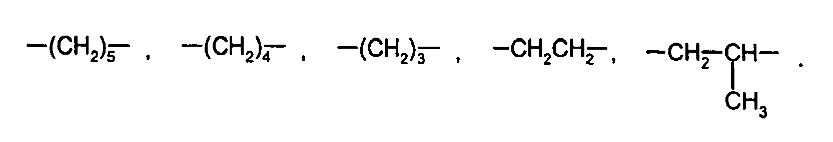

Geeignete Reste X² sind beispielsweise

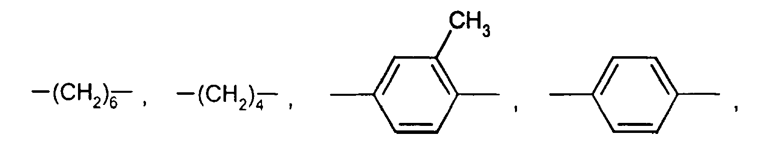

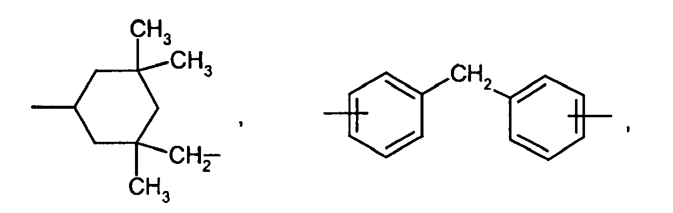

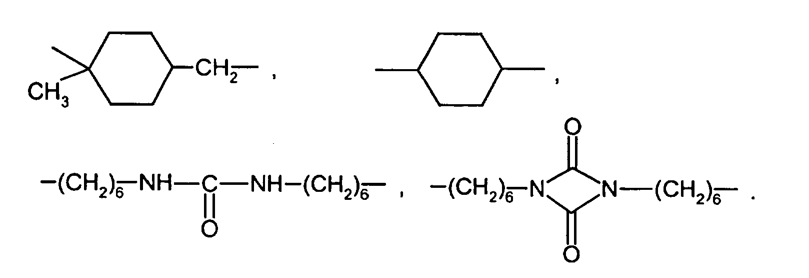

Geeignete Reste Z¹ sind beispielsweise

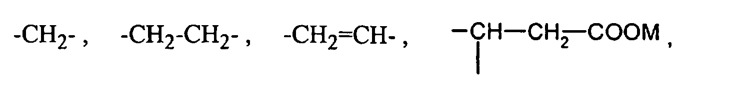

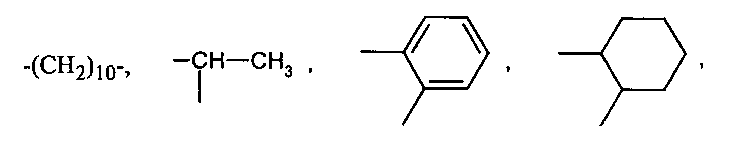

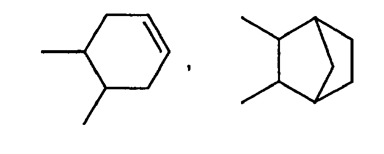

Geeignete Reste Z² sind beispielsweise

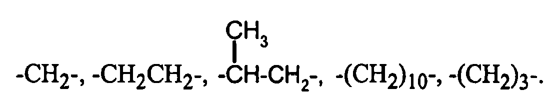

Geeignete Reste Z³ sind beispielsweise

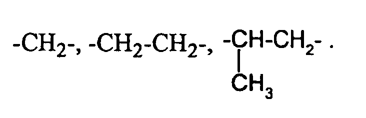

Bevorzugte Substituenten A sind

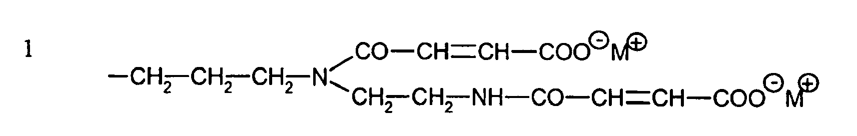

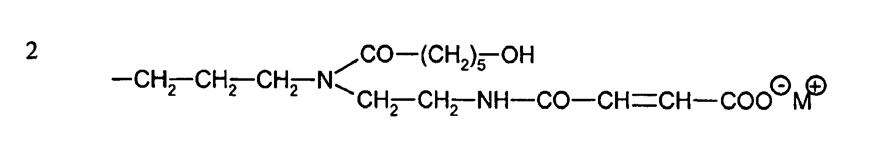

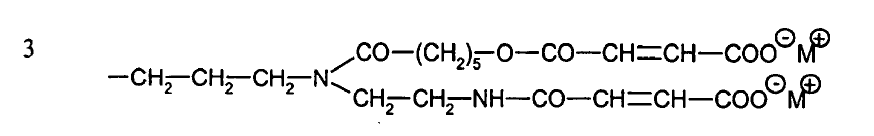

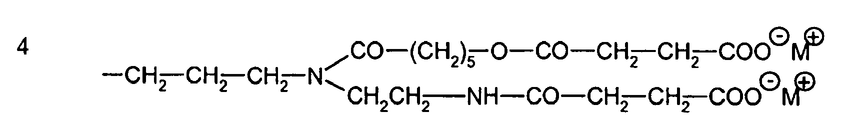

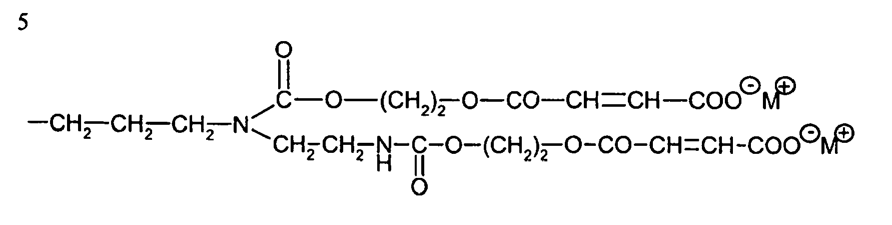

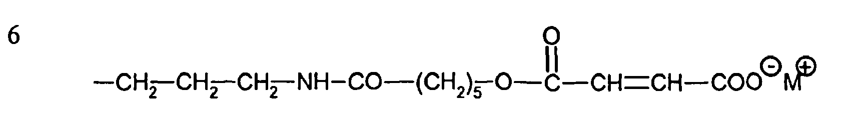

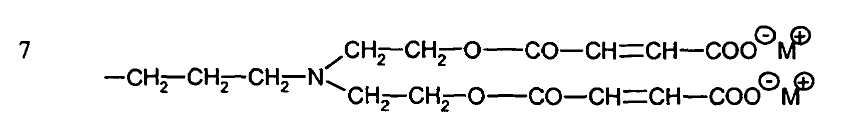

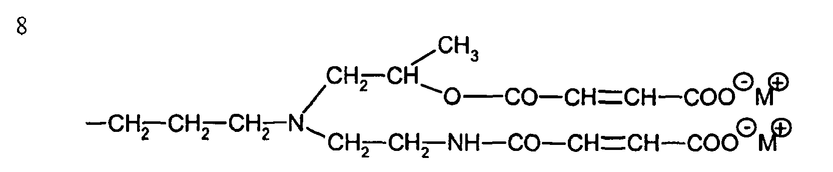

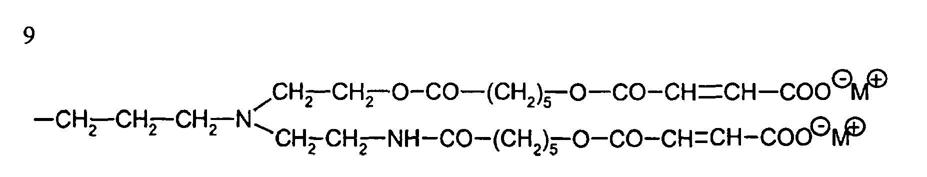

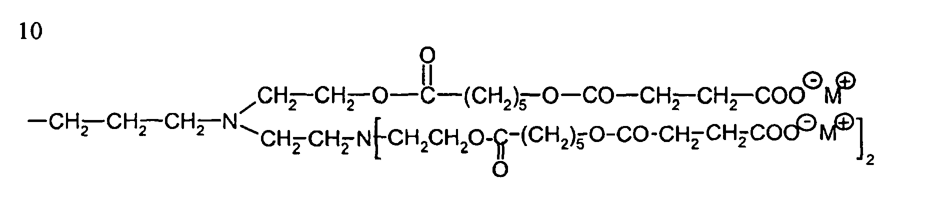

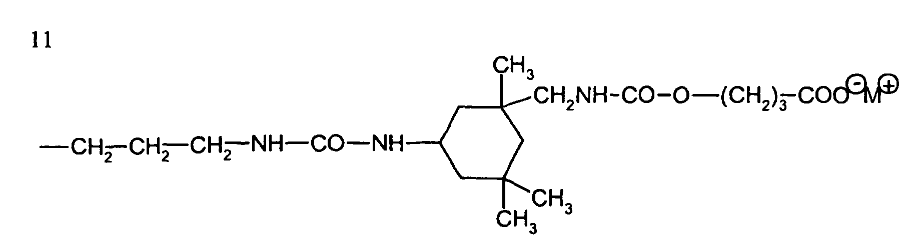

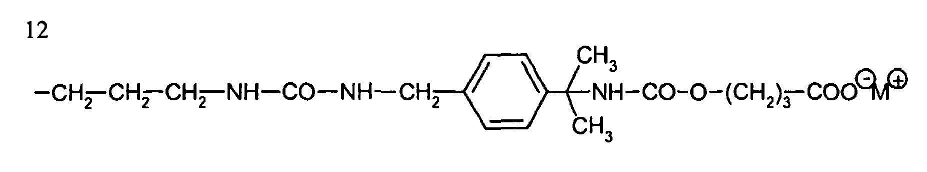

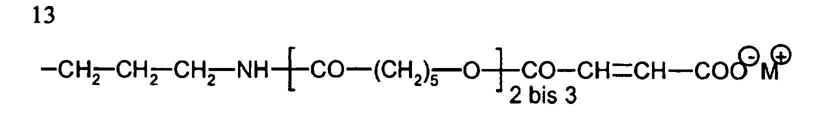

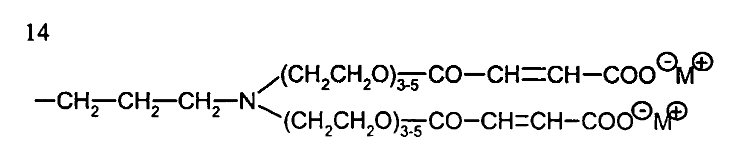

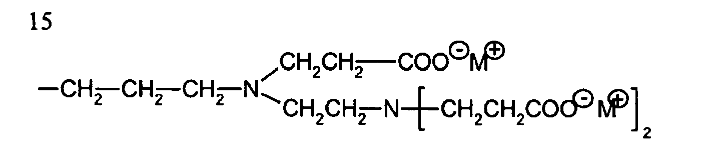

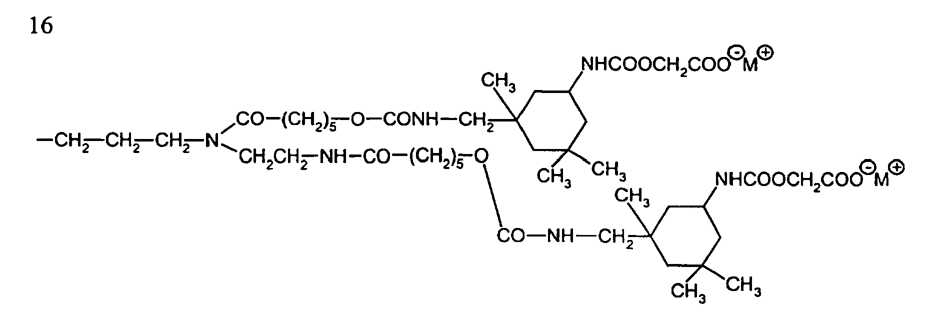

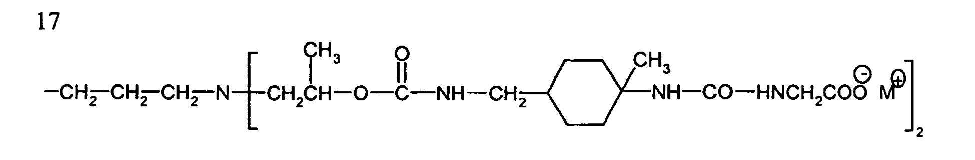

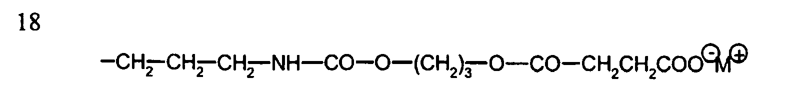

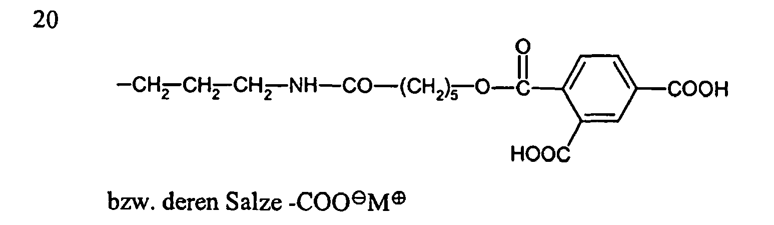

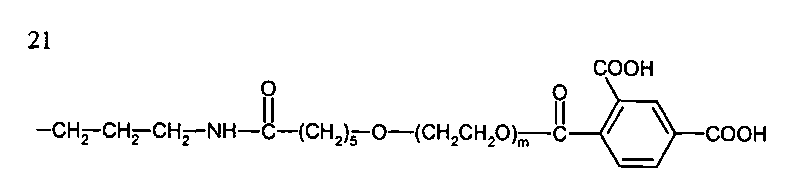

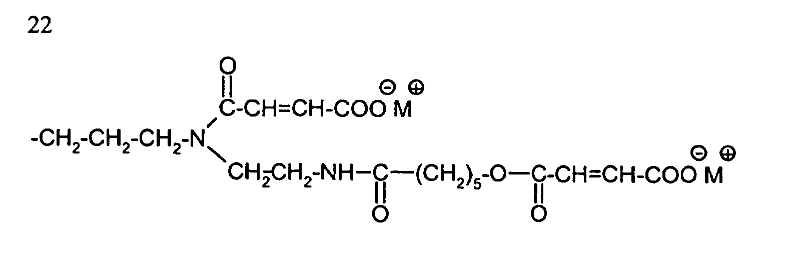

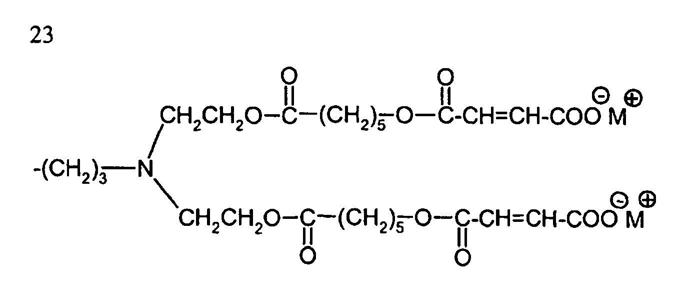

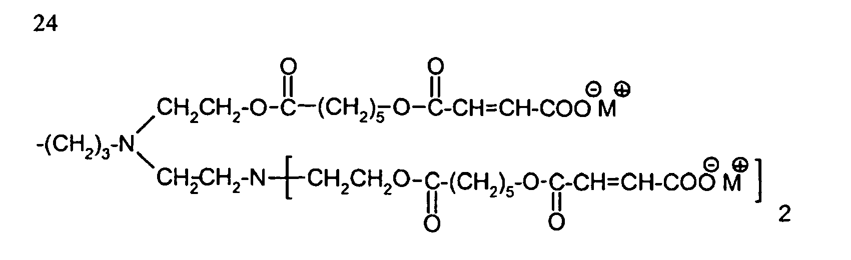

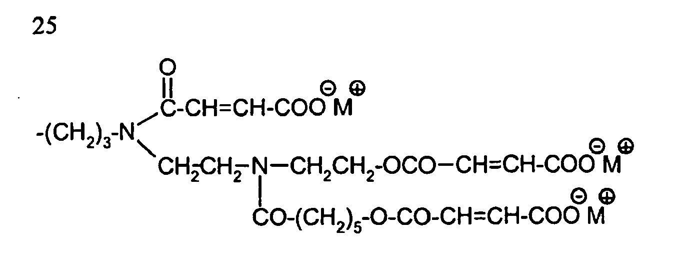

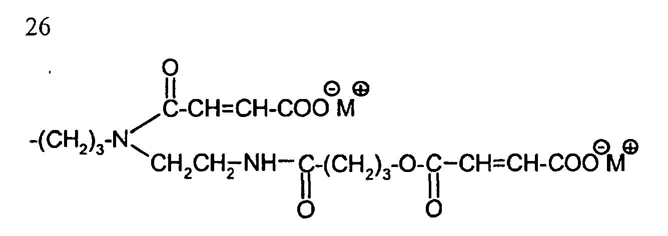

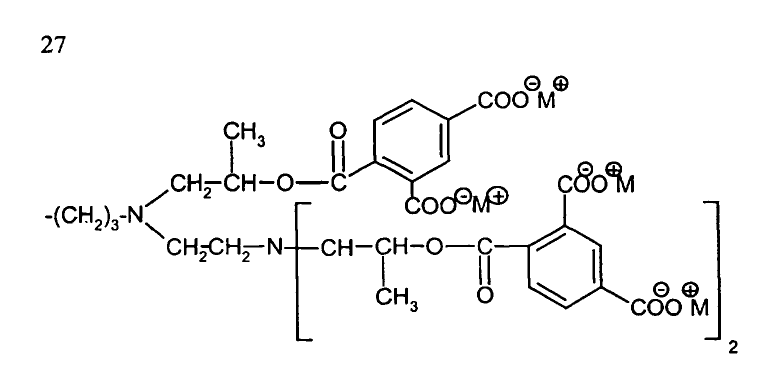

Erfindungsgemäße einzusetzende Polysiloxane a) sind aus funktionalisierten Siloxaneinheiten, wie die der Formeln (1) und gegebenenfalls der Formel (3a), und nicht funktionalisierten Siloxaneinheiten, wie die der Formel (2) und gegebenenfalls der Formel (3) aufgebaut. Vorzugsweise enthalten die Polysiloxane a) im statistischen Mittel 50 bis 1000, besonders bevorzugt 50 bis 400 nicht funktionalisierte Siloxaneinheiten (2) und 1 bis 50, besonders bevorzugt 1 bis 20 funktionalisierte Siloxaneinheiten (1), wobei die Siloxaneinheiten innerhalb der Polymerkette in beliebiger Reihenfolge angeordnet sein können. Vorzugsweise enthalten die linearen Polysiloxane a) 2 Endgruppen der Formeln (3) und/oder (3a), besonders bevorzugt Endgruppen der Formel (3). Es ist auch möglich, dass die Polysiloxane a) eine an sich bekannte cyclische Struktur aufweisen, wobei Sie dann nur Struktureinheiten der Formeln (1) und (2) enthalten. Dies ist der Fall, wenn a in Formel (1) für a = 1 steht und c in Formel (2) für c = 2 steht. Es ist weiterhin möglich, dass die carboxylgruppenhaltigen Polysiloxane a) eine verzweigte Struktur aufweisen. Das ist der Fall, wenn a in Formel (1) für a = 0 steht und/oder c in Formel (2) für c = 1 steht. Verzweigte Polysiloxane enthalten entsprechend dem Verzweigungsgrad am Ende jeder abzweigenden Siloxankette eine Endgruppe der Formel (3) oder (3a). Jede vom Verzweigungspunkt ausgehende Kette kann dabei eine unterschiedliche Zahl an Siloxaneinheiten der Formel (1) und/oder (2) enthalten, wobei die Summe dieser Einheiten der Definition von k und n entspricht. Ein Polysiloxan a) kann unterschiedliche Substituenten A enthalten. Es ist auch möglich, dass Polysiloxane mit unterschiedlichen Resten A in den Polysiloxanketten gemischt werden. Die erfindungsgemäß einzusetzenden Polysiloxane enthalten vorzugsweise funktionalisierte Siloxaneinheiten in folgendem Verhältnis, jeweils bezogen auf die Gesamtheit aller funktionalisierten Siloxaneinheiten in den Formeln (1) und (3a):
80-100 mol-%, bevorzugt 90-100 mol-% durch Carboxylgruppen (-COOM) funktionalisierte Siloxaneinheiten und
0-20 mol-%, bevorzugt 0-10 mol-% durch Hydroxylgruppen und/oder Aminogruppen (-NH-, -NH₂) funktionalisierte Siloxaneinheiten
0-10 mol-%, bevorzugt 0-5 mol-% durch Hydroxyl- und Carboxylgruppen (-COOM) funktionalisierte Siloxaneinheiten

Die Aminogruppen sind vorzugsweise solche, die aus einer gegebenenfalls unvollständigen Umsetzung resultieren (siehe Verfahren).

Bevorzugte Polysiloxane a) sind solche, die
- eine mittlere Molmasse von 1000 bis 100000 g/mol, besonders bevorzugt 2000 bis 50000 g/mol aufweisen, und/oder
- einen Gehalt an Carboxylgruppen bzw. deren Salzen von 0,05 bis 1,5 mMol COOM pro Gramm Polysiloxanwirkstoff aufweisen und/oder
- einen Gehalt an Hydroxylgruppen von 0 bis 0,15 mMol OH pro Gramm Polysiloxanwirkstoff aufweisen.

Carboxylgruppenhaltige Polysiloxane, schlißen solche ein, die mindestens eine Struktureinheit der Formel (1d)

[A¹RₐSiO_{(3-a)/2}]ₖ (1d)

und/oder mindestens eine Struktureinheit der oben angegebenen Formel (2) und gegebenenfalls mindestens eine Endgruppe ausgewählt aus den Formeln

R₃SiO_{1/2} (3)

und

A¹R₂SiO_{1/2} (3d)

enthalten, wobei
- A¹: für einen Rest aus der Gruppe 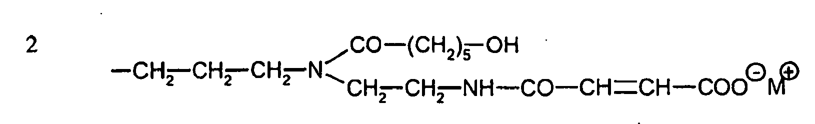 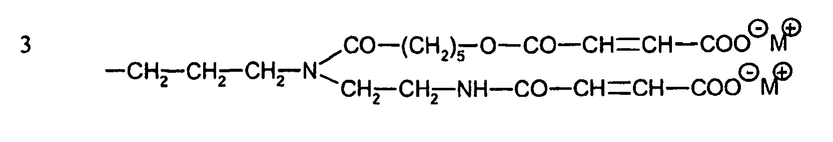 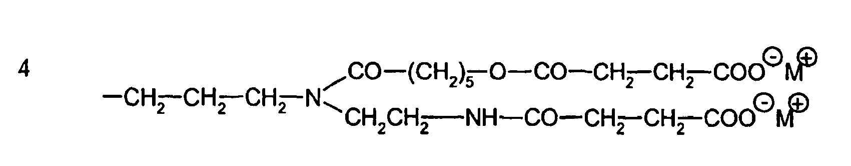 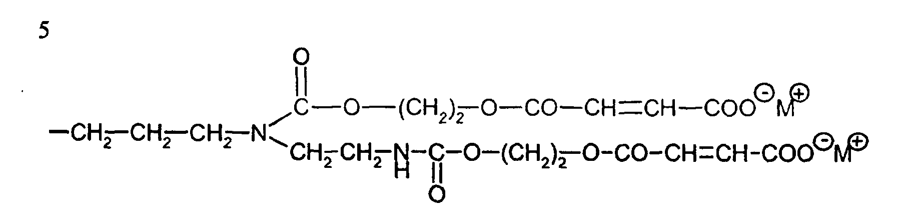 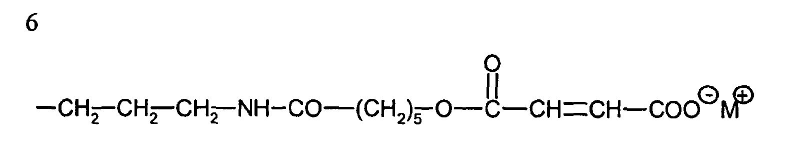 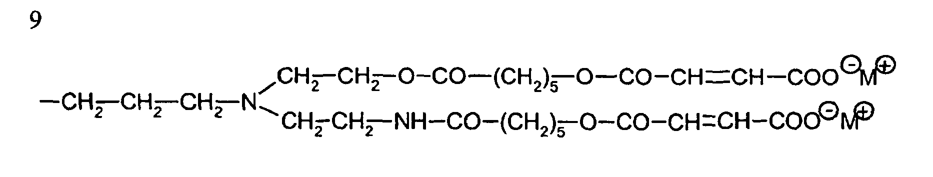 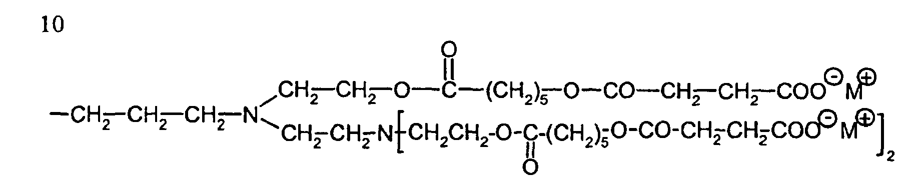 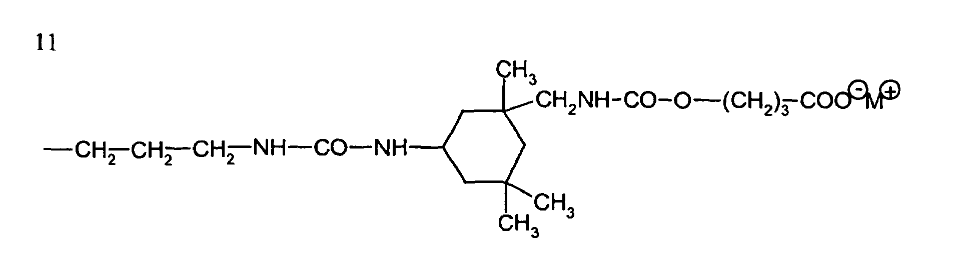 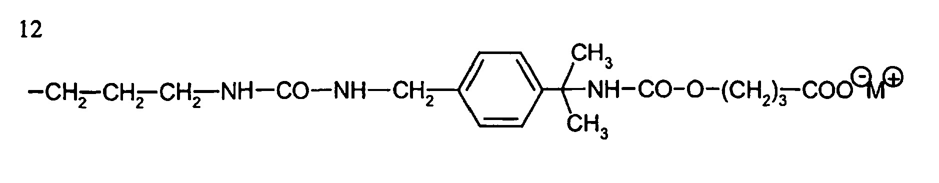 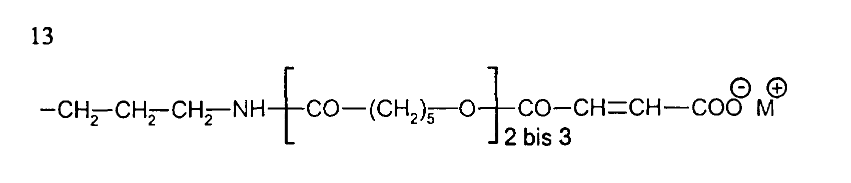 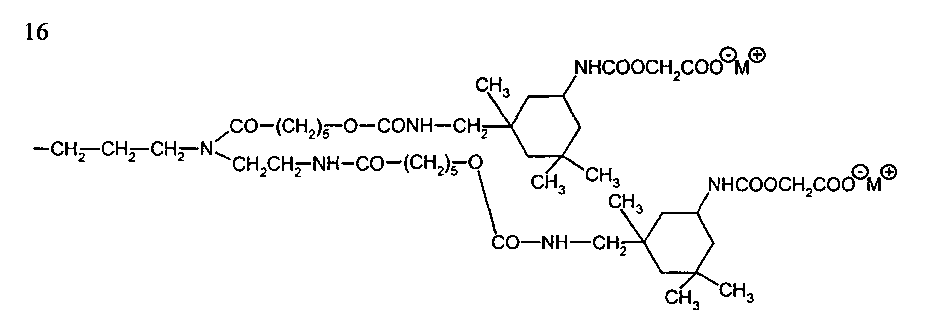 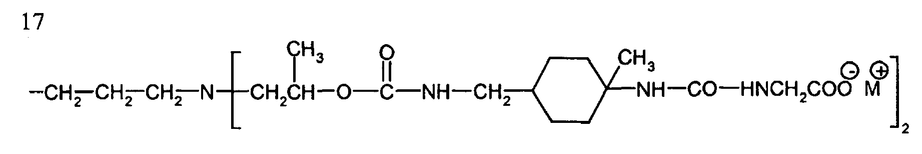 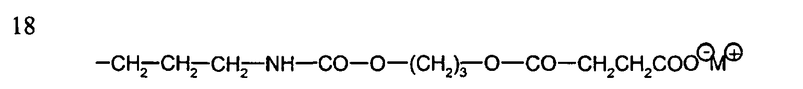 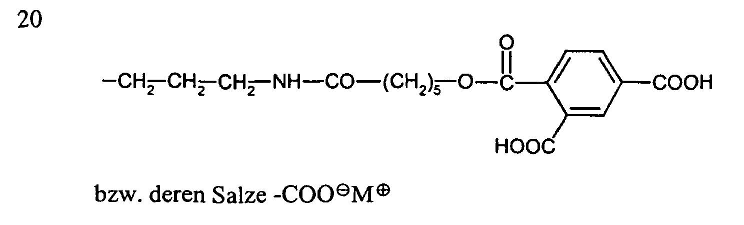 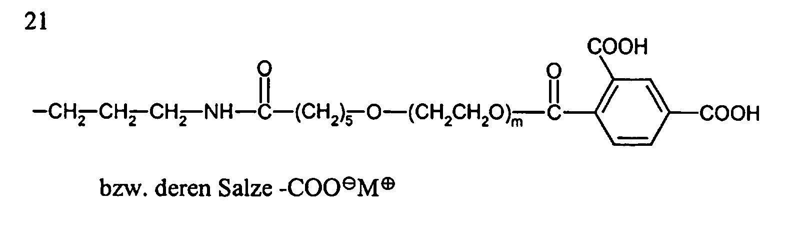 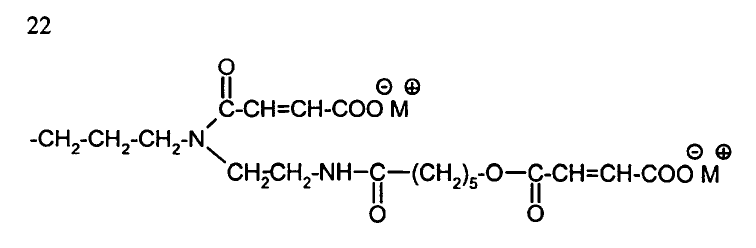 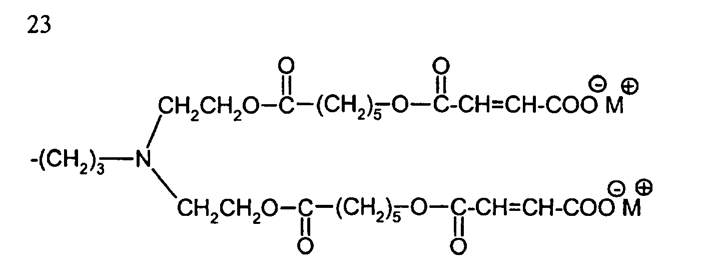 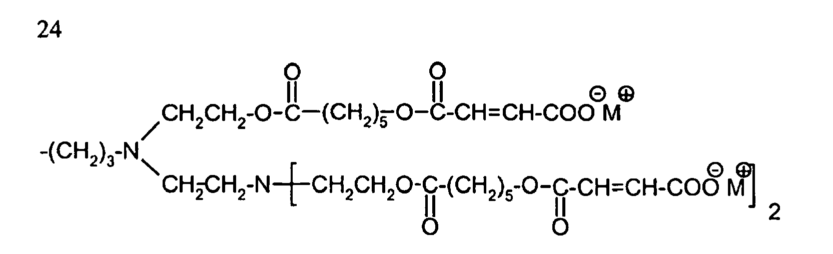 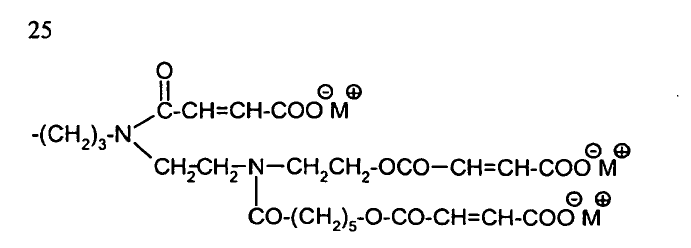 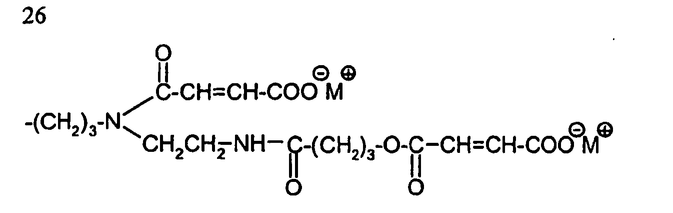
steht, wobei
M, R, a und k die obengenannte Bedeutung haben,
mit der Maßgabe, dass mindestens eine Endgruppe der Formel (3d) vorhanden ist, für den Fall, das die Polysiloxankette nur Struktureinheiten der Formel (2) enthält.

Die Polysiloxane sind aus funktionalisierten Siloxaneinheiten der Formel (1d) und gegebenenfalls (3d) und nicht funktionalisierten Siloxan-Einheiten der Formel (2) und gegebenenfalls Formel (3) aufgebaut. Vorzugsweise enthalten die Polysiloxane im statistischen Mittel 50 bis 1000, besonders bevorzugt 50 bis 400 nicht funktionalisierte Siloxaneinheiten und 1 bis 50, besonders bevorzugt 1 bis 20 funktionalisierte Siloxaneinheiten. Die Polysiloxane enthalten vorzugsweise funktionalisierte Siloxaneinheiten in folgendem Verhältnis, jeweils bezogen auf die Gesamtheit aller funktionalisierten Siloxanheinheiten in den Formeln (1d) und (3d):
80-100 mol-%, bevorzugt 80-98 mol-% durch Carboxylgruppen (-COOM) funktionalisierte Siloxaneinheiten und
0-20 mol-%, bevorzugt 2-20 mol-% durch Hydroxylgruppen funktionalisierte Siloxaneinheiten und/oder
0-10 mol-%, bevorzugt 0-5 mol-% durch Hydroxylgruppen und Carboxylgruppe (-COOM) funktionalisierte Siloxaneinheiten.

Geeignete erfindungsgemäße Polysiloxane sind auch solche, die an den Resten A¹ eine Hydroxylgruppe und mindestens eine Carboxylgruppe -COOM aufweisen, oder solche, deren Reste A¹ einen unterschiedlichen Gehalt an Carboxyl- und/oder Hydroxylgruppen aufweisen.

Weiterhin wird ein Verfahren zur Herstellung der Polysiloxane offenbart, das dadurch gekennzeichnet ist, dass man ein Aminopolysiloxan, das Struktureinheiten der Formel (2) 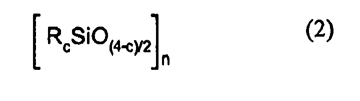 und Struktureinheiten der Formel (4)

[A'RₐSiO_{(3-a)/2}]ₖ (4),

und/oder gegebenenfalls Endgruppen der Formel

A'R₂SiO_{1/2} (4a)

und/oder gegebenenfalls Endgruppen der Formel (3)

R₃SiO_{1/2} (3)

enthält, in denen
- R, a, c, k und n: die oben genannte Bedeutung haben und
- A': für einen Rest der Formel 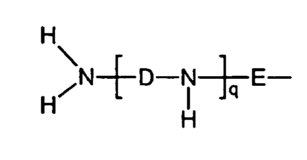
steht,
in der D, E und q die oben genannte Bedeutung haben,
- gegebenenfalls nach vorheriger Umsetzung mit C₁-C₁₀-Alkylenoxiden zu den entsprechenden Hydroxyalkyl-aminopolysiloxanen - mit einem Lacton (6a) 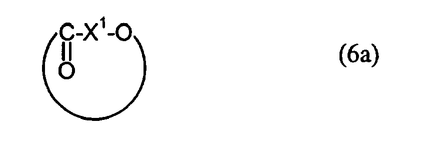
oder
cyclischem Carbonat (6b) 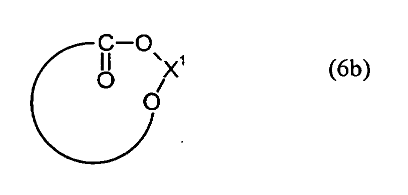 worin
- X¹: für einen zweiwertigen Kohlenwasserstoffrest mit 2 bis 30 C-Atomen steht,
umsetzt, und das erhaltene hydroxyfunktionalisierte Polysiloxan, das Struktureinheiten der Formel (2)

[R_{c}SiO(₄₋₂)_{/2}]ₙ (2)

und der Formel (5)

[A"RₐSiO_{(3-a)/2}]ₖ (5)

und/oder gegebenenfalls Endgruppen der Formel

A"R₂SiO_{1/2} (5a)

und/oder gegebenenfalls der Formel (3)

R₃SiO_{1/2} (3)

enthält, wobei
- R, a, c, k und n: die oben genannte Bedeutung haben und

- A": für den Rest 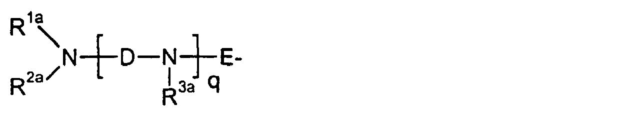 steht, wobei
q, D, E die obengenannte Bedeutung haben und
R^{1a}, R^{2a} und R^{3a} für H oder die Gruppe 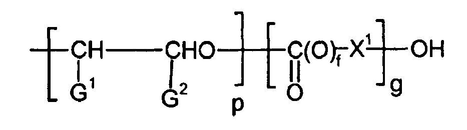 stehen, wobei
G¹, G², p, f, g und X¹ die obengenannte Bedeutung haben,
mit einem Polycarbonsäure-Derivat der Formel

R¹¹OOC-Z¹-COOR¹¹

oder einem Polycarbonsäureanhydrid der Formel (6c) 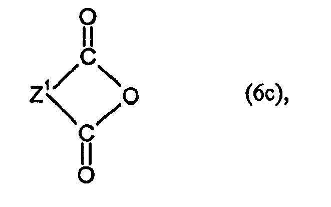 wobei
- Z¹: die oben genannte Bedeutung hat, und
- R¹¹: für C₁- bis C₄-Alkyl steht,
umsetzt und das erhaltene Polysiloxan, das Carboxylgruppen-haltige Struktureinheiten enthält (mit funktionellen Gruppen COOH), mit Basen in die Salzform (COO^{⊖}M^{⊕}) überführt, wobei M die oben angegebene Bedeutung hat.

Die Umsetzung von Aminen mit Lactonen oder Carbonaten ist an sich bekannt, ebenso die Umsetzung von Hydroxyverbindungen mit Anhydriden zu carboxylhaltigen Verbindungen (Halbesterbildung).

Die eingesetzten Aminopolysiloxane sind handelsüblich oder z.B. durch basenkatalysierte Umsetzung von Polydimethylsiloxanen mit Aminoalkyl-dialkoxy-alkylsilanen (Gleichgewichtsreaktionen) unter Abdestillieren das dabei gebildeten Alkohols erhältlich.

Weiterhin wid ein Verfahren zur Herstellung der Polysiloxane offenbart, die durch Reste A¹ substituiert sind, die durch Urethan- oder Harnstoffgruppen unterbrochen sind, das dadurch gekennzeichnet ist, dass man ein Aminopolysiloxan, das Struktureinheiten der oben angegebenen Formeln (2), (4) und/oder gegebenenfalls (4a) und/oder gegebenenfalls (3) enthält, oder ein daraus hergestelltes hydroxyfunktionelles Polysiloxan, das Struktureinheiten der oben angegebenen Formel (5) und gegebenenfalls der oben angegebenen Formel (5a) und/oder (3) enthält, mit einem Polyisocyanat der Formel (7)

X²(NCO)ₜ , (7)

wobei
- X²: für einen t-wertigen Rest mit 2 bis 30 C-Atomen steht und
- t: für 2 oder 3 vorzugsweise für 2 steht,
umsetzt, und das erhaltene NCO-funktionalisierte Polysiloxan mit einer Hydroxy-oder Aminocarbonsäure der Formel (8) bzw. (8a)

H₂N-Z²COOH (8)

HO-Z²-COOH (8a)

wobei Z² für einen zweiwertigen C₁- bis C₂₀-Kohlenwasserstoffrest steht, der durch Carboxy-, Amino- oder Hydroxylgruppen substituiert sein kann,
umsetzt, wobei die restlichen NCO-Gruppen vollständig umgesetzt werden,
und anschließend das carboxylgruppenhaltige Polysiloxan mit einer Base neutralisiert, wobei die Carboxylgruppen in die Salzform - COO^{⊖}M^{⊕} überführt werden.

Die erfindungsgemäß einzusetzenden Polysiloxane a) können in analoger Weise wie oben beschrieben hergestellt werden.

Bevorzugte Rohstoffe zur Herstellung der Polysiloxane sind, wie oben beschrieben, an sich bekannte Aminopolysiloxane, die durch Umsetzung von nicht funktionalisierten Polysiloxanen wie Polydimethylpolysiloxanen vorzugsweise mit einer Viskosität von 500 bis 12500 mPas bei 20°C, mit einem Aminosilan der Formel 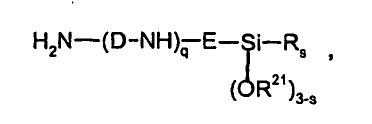 in der
s für 0 oder 1 steht, und E, D, R und q die oben genannte Bedeutung haben,
und
R²¹ für Methyl oder Ethyl steht,
vorzugsweise mit N-(2-Aminoethyl)-3-aminopropyl-dimethoxymethylsilan oder N-(2-Aminoethyl)-3-aminopropyl-diethoxymethylsilan oder 3-Aminopropyldi(m)ethoxymethylsilan in Gegenwart von basischen Katalysatoren, vorzugsweise NaOH, KOH, Thialkylammoniumhydroxide oder stark basische Ionenaustauscher, erhalten werden. Polysiloxane mit einer Viskosität zwischen 500 und 6000 mPas bei 20°C sind als Rohstoffe zur Herstellung der Aminopolysiloxane besonders bevorzugt.

Vorzugsweise werden Dimethylpolysiloxane und das entsprechende Aminosilan in einer solchen Menge eingesetzt, dass Aminogruppen enthaltende Polysiloxane gebildet werden, deren Basen-N-Gehalt 0,1 % bis 2,0 Gew-% beträgt, bevorzugt 0,2 bis 1,0 Gew.-% und besonders bevorzugt 0,25 bis 0,8 Gew.-%. Die Viskosität der Aminopolysiloxane liegt vorzugsweise bei 20°C (D = 100 s⁻¹) bei 50 bis 2000 mPas, bevorzugt bei 50 bis 1000, besonders bevorzugt bei 50 bis 500, weiter bevorzugt bei 50 bis 200 mPas.

Die Polysiloxane werden vorzugsweise aus den Aminopolysiloxanen, gegebenenfalls nach Umsetzung mit C₂-C₈-Alkylenoxiden, bevorzugt Ethylenoxid und/oder Propylenoxid, durch Umsetzung mit Lactonen, bevorzugt γ-Butyrolacton oder Caprolacton, und/oder durch Umsetzung mit cyclischen Carbonaten, bevorzugt Ethylencarbonat, Propylencarbonat oder Gemischen daraus und gleichzeitige oder anschließende Umsetzung mit Dicarbonsäure-Derivaten oder Dicarbonsäureanhydriden, bevorzugt Maleinsäureanhydrid, Bernsteinsäureanhydrid, Phthalsäureanhydrid, Maleinsäurediethylester, Tetrahydrophthalsäureanhydrid und anschließende Neutralisation der im erhaltenen Produkt vorhandenen Carboxylgruppen mit Basen. Bevorzugt ist eine Umsetzung mit Dicarbonsäure-Derivaten oder Anhydriden nach der Umsetzung mit dem Lacton bzw. cyclischen Carbonat. Die daran anschließende Dispergierung in Wasser ergibt die Emulsionen der Polysiloxane.

Außerdem ist es möglich, die vorhandenen Hydroxylgruppen in den mit Alkylenoxiden und/oder Lactonen oder Carbonaten derivatisierten Aminopolysiloxanen mit Polyisocyanaten umzusetzen, wobei bevorzugt nur ein Teil der NCO-Gruppen abreagiert und keine vernetzten Produkte entstehen. Die restlichen NCO-Gruppen werden vorzugsweise durch Reaktion mit Hydroxy- oder Aminocarbonsäuren umgesetzt, mit einer Base in das Salz überführt, und entsprechend in Wasser dispergiert. Im letztgenannten Fall entstehen Urethangruppen enthaltende Reste R¹ bis R³.

Vorzugsweise werden pro Äquivalent an basischer Aminogruppe, die im Aminogruppen enthaltenden Polysiloxan enthalten ist, 0,4 bis 1,05 Äquivalente an Lacton bzw. cyclischem Carbonat zur Acylierung eingesetzt. Das Molverhältnis von Polycarbonsäureanhydrid (bzw. Ester) zu Basen-N beträgt ebenfalls 0,8 : 1 bis 1,05 : 1. Vorzugsweise werden pro Äquivalent Stickstoff 0,5 bis 1,0 Äquivalente Lacton bzw. cyclisches Carbonat eingesetzt und anschließend 0,9 bis 1,05 Äquivalente Polycarbonsäureanhydrid eingesetzt. Die Reaktion wird vorzugsweise ohne Lösemittel im Temperaturbereich zwischen 10°C und 150°C, vorzugsweise zwischen 30 und 120°C durchgeführt. Man kann bei viskosen Produkten zur Verbesserung der Handhabung oder der Löslichkeit ein Lösemittel zusetzen, das gegenüber Anhydriden oder Lactonen inert ist. Beispielsweise seien genannt: Tetrahydrofuran, Aceton, NMP, Pyrrolidon, Diethylenglykoldimethylether, DMSO, Methylethylketon, Ethylacetat, Chloroform, Toluol. Bevorzugt ist eine Umsetzung in Aceton, Ethylacetat oder ohne Lösemittel.

Bevorzugt ist es auch, das Lösemittel nach der Umsetzung mit dem Lacton abzudestillieren, bevor die weitere Umsetzung mit dem Anhydrid erfolgt.

Weiterhin bevorzugt ist es, pro Äquivalent an basischer Aminogruppe, die im Aminopolysiloxan enthalten ist, 0,4 bis 1,05 Äquivalente an Alkylenoxid und/oder 0,4 bis 1,05 Äquivalente an cyclischem Carbonat oder Lacton einzusetzen und die erhaltenen Hydroxypolysiloxane mit dem Dicarbonsäureanhydrid im Molverhältnis OH : Anhydrid = 1 : 1 umzusetzen. Gegebenenfalls noch vorhandene Aminogruppen des eingesetzten Aminopolysiloxanrohstoffs werden bevorzugt quantitativ gleichzeitig mit den Hydroxygruppen mit dem Dicarbonsäureanhydrid umgesetzt.

Nach beendeter Reaktion werden die im Produkt vorhandenen Carboxylgruppen neutralisiert. Dabei wird pro Carboxyl-Äquivalent 0,8 bis 1,1 mol einer Base eingesetzt. Die Reaktion erfolgt bei 10°C bis 100°C, vorzugsweise bei 30°C bis 80°C.

Das neutralisierte Reaktionsprodukt hat vorzugsweise bei Raumtemperatur (20 bis 25°C) eine Viskosität zwischen 1000 und 100000 mPas, vorzugsweise zwischen 2000 und 80000 mPas (bei D = 10 s⁻¹ gemessen).

Die Dispergierung in Wasser erfolgt vorzugsweise in der Weise, dass man das neutralisierte Reaktionsprodukt aus carboxylgruppenhaltigem Polysiloxan und Base vorlegt und bei 20°C bis 90°C, vorzugsweise bei 20°C bis 70°C Wasser in einer Geschwindigkeit zudosiert, dass stets eine homogene Durchmischung erreicht wird. Es ist vorteilhaft, das Wasser am Anfang besonders langsam zuzugeben. Im Laufe der Dosierung kann die Geschwindigkeit der Zugabe gesteigert werden. Die Viskosität ist bei Zugabe von 30 bis 60% der Gesamtmenge des Wassers am höchsten. Bei hochviskosen Polysiloxanen ist es vorteilhaft, vor der Wasserzugabe ein Lösemittel zuzusetzen, das nach der Dispergierung leicht destillativ entfernt werden kann. Als Lösemittel eignen sich besonders Tetrahydrofuran, Isopropanol, Aceton, Methylethylketon, Ethanol, Cyclohexanol, Isobutanol. Besonders bevorzugt sind Aceton und Isopropanol sowie Gemische aus Aceton und Cyclohexanol und Gemische aus Isopropanol und Aceton.

Als Polyisocyanate eignen sich Hexamethylendiisocyanat, Isophorondiisocyanat, Toluylendiisocyanat, 1-Isocyanato-1-methyl-4-isocyanatomethyl-cyclohexan, Dimerisate und Trimerisate von Hexamethylendiisocyanat, die Uretdion-Strukturen Biuret- oder Isocyanuratstrukturen aufweisen sowie Bis-1,4-(1-Isocyanato-1,1-dimethyl-ethyl-2)-benzol, Bis-1,4(1-Isocyanato-2,2-dimethyl-ethyl-2)-benzol, Dimeryldiisocyanat, Cyclohexylen-1,4-diisocyanat. Bevorzugt sind Hexamethylendiisocyanat, Isophorondiisocyanat und n-Isocyanato-1-methyl-4-isocyanatomethylcyclohexan.

Als Basen zur Neutralisation der Carboxylgruppen des Polysiloxans eignen sich beispielsweise Natronlauge, Kalilauge, Ammoniak sowie primäre, sekundäre oder tertiäre Amine und Alkanolamine. Besonders bevorzugt sind Ammoniak, Triethylamin, Ethanolamin, Diethanolamin, Methyldiethanolamin, Triethanolamin, Morpholin, Dibutylamin, Cyclohexylamin, Isopropanolamin, Diethylamin, Piperidin, N-Methylpiperidin, 2,2'6,6'-Tetramethyl-piperidin-4-ol.

Geeignete Polycarbonsäure-Anhydride für die Umsetzung mit den Hydroxy- und Aminopolysiloxanen sind Maleinsäureanhydrid, Bernsteinsäureanhydrid, Norbomendicarbonsäureanhydrid, Phthalsäureanhydrid, Trimellithsäureanhydrid, Cyclohexandicarbonsäureanhydrid, Cyclohexendicarbonsäureanhydrid, Pyromellithsäuredianhydrid, bevorzugt Maleinsäureanhydrid und Bernsteinsäureanhydrid. Geeignete Polydicarbonsäurederivate sind Malonsäuredimethylester, Malonsäurediethylester, Maleinsäurediethylester, Maleinsäuredimethylester, Maleinsäure-monoethylester. Geeignete Lactone für die Umsetzung mit den Aminopolysiloxanen sind Propiolacton, γ-Butyrolacton, ε-Caprolacton, bevorzugt ε-Caprolacton.

Geeignete Carbonate für die Umsetzung mit den Aminopolysiloxanen sind Ethylencarbonat, Propylencarbonat, bevorzugt Ethylencarbonat.

Geeignete Alkylenoxide für die Hydroxyalkylierung der Aminopolysiloxane sind Ethylenoxid, Propylenoxid, Butylenoxid, Epoxycyclohexan, bevorzugt Ethylenoxid und Propylenoxid.

Bevorzugte Aminopolysiloxane als Rohstoffe für die Polysiloxane sind solche, die 2-Aminoethyl-3-aminopropyl-Substituenten oder 3-Aminopropyl-Substituenten aufweisen. Besonders bevorzugt sind Aminopolysiloxane, die seitenständige funktionelle Gruppen und Trimethylsilylendgruppen aufweisen. Im allgemeinen sind die Substitutenten statistisch über die Hauptkette des Polysiloxans verteilt. Weiterhin bevorzugt sind Aminopolysiloxane, die an beiden Kettenenden Aminogruppen tragen, und deren Kette ausschließlich aus Dimethylsiloxy-Einheiten besteht.

Bevorzugt sind weiter carboxylgruppenhaltige Polysiloxane, die durch vollständige (100%) oder nahezu vollständige (>95 %) Umsetzung der Aminogruppen des Aminopolysiloxans erhalten werden. Bei nicht stöchiometrischem Einsatz der Dicarbonsäureanhydride kommt es im Falle der diaminofunktionellen Polysiloxane bei einer nicht vollständigen (z.B. nur 50 %igen) Umsetzung der Aminogruppen zu einer unerwünschten Salzbildung zwischen Aminogruppen und Carboxylgruppen nach der Amidbildung, so dass unlösliche Produkte oder Gele entstehen können.

Es ist auch möglich, vor der Emulgierung mit Wasser paraffinische Komponenten zum Polysiloxan zuzugeben und anschließend zu emulgieren. Es kann vorteilhaft sein, Dispergiermaschinen oder Spalthomogenisatoren sowie Hochdruckdüsen einzusetzen, um eine Erhöhung der Scherkraft zu bewirken. Bevorzugt ist aber eine Emulgierung mit einem normalen Rühraggregat, da die Produkte sich in Wasser problemlos einarbeiten lassen.

Es ist auch möglich, das Polysiloxan invers zu dispergieren, indem man das Wasser vorlegt und den neutralisierten Polysiloxan-Wirkstoff bei 20 bis 100°C in der Wasserphase dispergiert. Die Inversdispergierung ist jedoch nicht bevorzugt.

Weiterhin werden wässrige Dispersionen der Polysiloxane offenbart. Bevorzugt enthalten diese Dispersionen 1 bis 60 Gew.-% Polysiloxan und 40 bis 99 Gew.-% Wasser.

Vorzugsweise sind die Polysiloxanemulsionen durch einen Festgehalt von 30 bis 50 Gew.-%,
eine Viskosität bei 20°C von unter 1000 mPas, bevorzugt unter 500, besonders bevorzugt unter 100 mPas,
eine mittlere Teilchengröße von 50 bis 700 nm, bevorzugt zwischen 100 und 300 nm, besonders bevorzugt zwischen 100 und 250 nm,
einem pH-Wert von 6 bis 8, bevorzugt 6,5 bis 7,5 sowie
einen Gehalt an Carboxylgruppen bzw. deren Salzen von 0,05 bis 1,5 mMol/g Polysiloxan-Wirkstoff charakterisiert.

Sie können zudem auch weitere Zusätze wie beispielsweise die nachfolgend genannten Paraffine, Öle oder Emulgatoren enthalten.

Geeignete Paraffine können fest oder flüssig sein, z.B. solche mit einem Schmelzpunkt von 10 bis 90°C, Paraffinöle, Mineralöle, Weißöle, natürliche Öle oder Fette wie Fischöle, natürliche oder synthetische Wachse wie Polyethylenwachse, oxidierte Polyethylenwachse, Polyisobuten-Wachse, Karnaubawachs oder Bienenwachs.

Die Menge der Paraffine, Öle und Wachse in der Emulsion kann 0 bis 70 %, insbesondere 0 bis 40 %, bezogen auf Polysiloxan a), betragen.

Geeignete Emulgatoren sind im Prinzip alle oberflächenaktiven Verbindungen mit nichtionischem oder anionischem, kationischem oder amphoterem Charakter, die sich zur Emulgierung der Polysiloxane sowie der Paraffine, Öle und Wachse eignen und die Hydrophobierung möglichst wenig beeinträchtigen. Insbesondere geeignet sind Dimethyldodecylamin-N-oxid, Dimethyltetradecylamin-N-oxid, sowie N-(C₈-C₃₀)-Acylaminosäuren wie N-Oleylsarcosin, N-Laurylsarcosin, N-Stearylsarcosin, N-Oleyl-asparaginsäure, N-Hexadecyl-asparaginsäure, N-Stearylasparaginsäure oder die entsprechenden Derivate der Glutaminsäure, Fettsäuren wie Ölsäure, Laurinsäure, Talgfettalkoholate und deren Ethoxylierungsprodukte sowie die Schwefelsäurehalbester der Fettalkohole und der Ethoxylierungsprodukte der Fettalkohole. Die Säuren liegen meist in Form der Alkalimetall-, Ammonium-, Trialkylammonium-, Mono-, Di-, Trialkanolammonium-Salze vor. Üblicherweise enthalten die Polysiloxanemulsionen 0,0 bis 30 Gew.-%, insbesondere 0,0 bis 20 Gew.-%, bevorzugt 0,0 bis 5 Gew.-% Emulgatoren oder Mischungen der genannten Emulgatoren aus der vorgenannten Gruppe. ,

Besonders bevorzugt sind Dispersionen von Polysiloxanen, die keinen zusätzlichen Emulgator aus der vorgenannten Gruppe enthalten, und deren Wirkstoff in neutralisierter Form eine Viskosität von 1000 bis 100000 mPas bei 20°C und 100 sec⁻¹, vzw. von 2000 bis 80000 mPas aufweist.

Weiterhin wird ein Verfahren zur Herstellung der wässrigen Dispersionen offenbart, das dadurch gekennzeichnet ist, dass man das Carboxylgruppen-haltige Polysiloxan, dessen COOH-Gruppen durch Basen neutralisiert sind und in der Salzform -COOM vorliegen, gegebenenfalls in Gegenwart eines geeigneten Lösemittels, in Wasser dispergiert und anschließend das gegebenenfalls vorhandene Lösemittel abdestilliert.

Die Dispergierung in Wasser erfolgt in der Weise, dass man das neutralisierte Reaktionsprodukt aus carboxylgruppenhaltigem Polysiloxan und Base vorlegt, vorzugsweise in einem Lösemittel löst und bei 20°C bis 90°C, vorzugsweise bei 20°C bis 70°C Wasser in einer Geschwindigkeit zudosiert, dass stets eine homogene Durchmischung erreicht wird. Es ist vorteilhaft, das Wasser am Anfang besonders langsam zuzugeben. Im Laufe der Dosierung kann die Geschwindigkeit der Zugabe gesteigert werden. Bei zu schneller Wasserzugabe kann es zu einer irreversiblen Abscheidung des hydrophoben Wirkstoffs kommen, während eine zu langsame Zugabe keine Probleme bereitet. Die Viskosität ist bei Zugabe von 30 bis 60 % der Gesamtmenge des Wassers am höchsten. Bei hochviskosen Siliconprodukten ist es zweckmäßig, vor dem Start der Wasserzugabe ein Lösemittel zuzusetzen, das nach der Dispergierung leicht destillativ entfernt werden kann. Als Lösemittel eignen sich besonders Tetrahydrofuran, Isopropanol, Aceton, Methylethylketon, Ethanol, Cyclohexanol, Isobutanol. Besonders bevorzugt sind Aceton und Isopropanol sowie Gemische aus Aceton und Cyclohexanol. Es ist auch möglich, vor der Emulgierung mit Wasser paraffinische Komponenten, Öle oder Wachse, zum Polysiloxan zuzugeben anschließend zu emulgieren. Es kann vorteilhaft sein, Dispergiermaschinen oder Spalthomogenisatoren sowie Hochdruckdüsen einzusetzen, um eine Erhöhung der Scherkraft zu bewirken. Bevorzugt ist aber eine Emulgierung mit einem normalen Rühraggregat, da sich die Produkte in Wasser problemlos einarbeiten lassen.

Es ist auch möglich, das Polysiloxan invers zu dispergieren indem man das Wasser vorlegt und den neutralisierten Polysiloxan-Wirkstoff bei 20 bis 100°C in der Wasserphase dispergiert. Die Inversdispergierung ist jedoch nicht bevorzugt.

Es ist weiter möglich, dem Polysiloxan vor der Dispergierung Additive zuzusetzen, insbesondere die nachfolgend beschriebenen Paraffine (Komponente B₃) oder Polyisocyanat-Additionsprodukte (Komponente B₄).
- B₁: ist ein anionisches Copolymerisat, hergestellt durch radikalisch initiierte Copolymerisation von (jeweils bezogen auf Monomergemisch)
- α): 10-90 Mol-% des Esters einer monoethylenisch ungesättigten C₃-C₅-Carbonsäure auf Basis eines Alkohols mit 4 bis 40 C-Atomen
- β): 90-10 Mol-% einer monoethylenisch ungesättigten Carbonsäure
- γ): 0-20 Mol-% eines monoethylenisch ungesättigten C₄-C₆-Dicarbonsäureanhydrids
- δ): 0-30 Mol-% eines C₂-C₈-Olefins (Isobuten, Diisobutylen) und
- ε): 0-10 Mol-% eines weiteren Comonomers aus der Gruppe Styrol, alpha-Methylstyrol, Vinylester von C₁-C₈-Carbonsäuren
und gegebenenfalls anschließende partielle Umsetzung der Anhydridgruppen mit einem primären oder sekundären C₁-C₄₀-Alkohol und/oder einem primären oder sekundären Amin mit einem oder zwei C₁-C₁₈-Alkyl- oder Alkenylresten, mit der Maßgabe, dass mindestens 20 Mol-% der den Anhydridgruppen entsprechenden Carboxylgruppen nicht mit Alkohol und/oder Amin umgesetzt werden, sondern mit einer Base neutralisiert werden,
wobei wenigstens 50 Mol-% der Carboxylgruppen neutralisiert werden. Bevorzugt liegt die Komponente B₁ als wässrige Dispersion vor.

### Beschreibung der Komponente B₁

Geeignete Copolymerisate der Komponente B₁ sind an sich bekannt und werden hergestellt durch radikalische Polymerisation in Lösung oder Emulsion in Gegenwart von Polymerisationsinitiatoren, gegebenenfalls Emulgatoren, Kettenreglern sowie üblichen Additiven wie Komplexbildnern.

Beispielsweise sind geeignete Copolymerisate bekannt aus der US-PS 5,316,860. Besonders bevorzugt sind Polyacrylate, hergestellt durch Polymerisation einer Monomermischung aus
B1-a) 50-90 % eines hydrophoben Monomers, wie C₁₂-C₃₀-Ester der (Mcth)Acrylsäure, insbesondere Cetyl-eicosyl(meth)acrylat oder Stearylmethacrylat und
B1-b) 10-50 % eines hydrophilen Monomers, wie Acrylsäure oder Methacrylsäure. Weiterhin geeignet sind anionische Copolymcrisat-Dispersion, hergestellt durch radikalisch initiierte Copolymerisation von
B1-f) 30-85 Mol-% des Esters einer monoethylenisch ungesättigten C₃-C₅-Carbonsäure auf Basis eines Alkohols mit 4 bis 40 C-Atomen
B1-g) 70-15 Mol-% einer monoethylenisch ungesättigten Carbonsäure
B1-h) 0-20 Mol-% eines monoethylenisch ungesättigten C₄-C₆-Dicarbonsäureanhydrids
B1-i) 0-30 Mol-% eines C₂-C₈-Olefins (Isobuten, Diisobutylen) und
B1-j) 0-10 Mol-% eines weiteren Comonomers aus der Gruppe Styrol, alpha-Methylstyrol, Vinylester von C₁-C₈-Carbonsäuren
und gegebenenfalls anschließende partielle Umsetzung der Anhydridgruppen mit einem primären oder sekundären C₁-C₄₀-Alkohol und/oder einem primären oder sekundären Amin mit einem oder zwei C₁-C₁₈-Alkyl- oder Alkenylresten, mit der Maßgabe, dass mindestens 20 Mol-% der den Anhydridgruppen entsprechenden Carboxylgruppen nicht mit Alkohol und/oder Amin umgesetzt werden, sondern mit einer Base neutralisiert werden, wobei wenigstens 50 Mol-% der Carboxylgruppen neutralisiert werden.

Geeignete Monomere zur Herstellung der Komponenten B₁ sind: Methacrylsäure, Acrylsäure, Methylmethacrylat, Methylacrylat, Butylacrylat, Ethylacrylat, 2-Ethylhexylacrylat, Octylmethacrylat, Octylacrylat, Talgfettalkohol-methacrylat, Talgfettalkohol-acrylat, Stearylmethacrylat, Stearylacrylat, Hexadecylmethacrylat, Hexadecylacrylat, Dodecylmethacerylat, Dodecylacrylat, Eicosanylmethacrylat, Eicosanylacrylat, Ester der Guerbetalkohole mit Methacrylsäure oder Acrylsäure, Styrol, alpha-Methylstyrol, Maleinsäureanhydrid, Diisobutylen oder Isobuten, Vinylacetat, Vinylpropionat.

Bevorzugte Komponenten B₁ sind amphiphile Copolymerisate aus einem hydrophoben Monomer aus der Gruppe Stearylmethacrylat, Hexadecylmethacrylat, Eicosanylmethacrylat, Dodecylmethacrylat, Octylmethacrylat, 2-Ethylhexylmethacrylat, und einem hydrophilen Monomer aus der Gruppe Methacrylsäure, Acrylsäure, Maleinsäureanhydrid sowie gegebenenfalls weiteren Comonomeren wie Styrol, Diisobutylen oder Isobuten.

Die Carboxylgruppen im Copolymerisat können in Form der freien Säuren oder als Salze vorliegen. Zur Neutralisation können Basen wie NaOH, KOH, Soda, Ammoniak oder Amine wie Triethylamin, Ethanolamin, Triethanolamin, Diisopropylamin, Diethanolamin, N-Methyldiethanolamin, Octylamin usw. eingesetzt werden. Bezogen auf Carboxylgruppen werden bevorzugt zur Neutralisation 0,5-1,0 Äquivalente an Base eingesetzt.

Besonders bevorzugt sind Copolymerisate, die hergestellt werden durch Copolymerisation einer Monomermischung von
20 - 90 Gew.-% eines hydrophoben Monomers, insbesondere Stearylmethacrylat, Hexadecylmethacrylat, Eicosanylmethacrylat, Dodecylmethacrylat, Octylmethacrylat, 2-Ethylhexylmethacrylat, und
80 - 10 Gew.-% eines hydrophilen Monomers, insbesonders Methacrylsäure, Acrylsäure, Maleinsäuranhydrid, und
0 - 30 Gew.-% eines weiteren Comonomers aus der Gruppe Styrol, alpha-Methylstyrol, Diisobutylen.

In einer besonders bevorzugten Ausführungsform werden Polyacrylat-Dispersionen eingesetzt, die durch radikalische Polymerisation in Gegenwart eines Kettenreglers hergestellt wurden und deren Carboxylgruppen mit einer Base neutralisiert wurden, wobei die eingesetzte Monomermischung aus 60 bis 85 Gew.-% Stearylmethacrylat oder C_{17,4}-Methylacrylat und 15-40 Gew.-% Acrylsäure besteht. Bevorzugt sind auch Dispersionen, die durch Dispergierung in Gegenwart der unten beschriebenen Komponente B₃ hergestellt werden. Als Komponente B₃ ist in dieser Ausführungsform insbesondere Weißöl oder ein flüssiges C₁₄-C₁₇-Paraffin-Öl oder ein bei 30-40°C schmelzendes Wachs besonders bevorzugt. Der Anteil der Komponente B₃, bezogen auf den Wirkstoff aus B₁+B₃, liegt bevorzugt zwischen 30 und 80 Gew.-%, der Anteil Festharz B₁ zwischen 20 und 70 Gew.-%.

Besonders bevorzugte Polyacrylat-Dispersionen haben eine mittlere Molmasse von 2000 bis 50000 g/mol, vorzugsweise 2000 bis 20000 g/mol. Solche Dispersionen können zum Beispiel nach EP 579 267, EP 498 634, US-PS 5,348,807 hergestellt werden.

Bevorzugt haben die Dispersionen der Komponente B₁ einen Feststoffgehalt von 10 bis 60 Gew.-%, vorzugsweise 20 bis 50 Gew.-%.

Geeignete Polyacrylat-Dispersionen sind an sich bekannt. Beispiele für besonders geeignete Polyacrylat-Dispersionen sind die von Rohm and Haas zu beziehenden Produkte der LUBRITAN^{®}/LEUKOTAN^{®}-Reihe, insbesondere Lubritan^{®} WP, Leukotan^{®} NS3, Lubritan^{®} XE/XE 3, Lubritan^{®} AS, Lubritan^{®} SP.

Überraschenderweise wurde gefunden, dass die Polyacrylate (Komponente B1) in Kombination mit den Komponenten B₃ dem Leder eine wesentlich bessere Hydrophobie und einen besseren Griff verleihen als die Polyacrylat-Dispersionen allein, wenn sie im Hydrophobiermittelsystem gemeinsam mit dem Polysiloxan a) eingesetzt werden.

Eine bevorzugte Komponente B₂ ist ein Polyasparaginsäure-Derivat mit einem als Zahlenmittel bestimmten Molekulargewicht von 700 bis 30 000, vorzugsweise 1 300 bis 16 000, erhältlich durch Umsetzung von
B2-A) Polysuccinimid mit einem als Zahlenmittel bestimmten Molekulargewicht von 500 bis 10 000, vorzugsweise 500 bis 6 000, insbesondere 1 000 bis 4 000, erhältlich durch Umsetzung von Maleinsäureanhydrid und NH₃-Lösung und anschließende Kondensation, mit
B2-B) 5 bis 90, vorzugsweise 20 bis 80 Mol-%, bezogen auf Succinimideinheiten des Polysuccinimids, primärem und/oder sekundärem Amin, dessen Stickstoffsubstituenten 1 bis 60, vorzugsweise 1 bis 36 Kohlenstoffatome enthalten, die durch Hydroxyreste substituiert und/oder durch Sauerstoffatome unterbrochen sein können, wobei mindestens 2,5 Mol-%, vorzugsweise mindestens 15 Mol-%, insbesondere mindestens 30 Mol-% der Stickstoff substituenten des Amins mindestens 12 Kohlenstoffatome enthalten, und
B2-C) mit 95 bis 10 Mol-%, vorzugsweise 80 bis 20 Mol-% ringöffnender Base in Gegenwart von Wasser.

Geeignete Komponenten B₂ sind an sich bekannt und in der DE 195 28 782 bzw. EP 842 300 beschrieben.

### Beschreibung der Komponente B₂

Das als Ausgangsprodukt für die erfindungsgemäß zu verwendenden Polyasparaginsäureamide dienende Polysuccinimid B2-A) ist aus z.B. EP 842 300 bekannt.

Ein geeignetes Verfahren geht von Maleinsäureanhydrid und Ammoniak aus, bei dem das Umsetzungsprodukt aus Maleinsäureanhydrid und NH₃ in Gegenwart eines Lösungsmittels thermisch kondensiert wird (vgl. EP 842 300). Das dabei gebildete Polysuccinimid liegt dann gelöst vor.

Man kann das als Ausgangsverbindung dienende Polysuccinimid auch durch thermische Dehydratisierung von Polyasparaginsäure herstellen.

Die Polyasparaginsäure-Derivate enthalten in einer bevorzugten Ausführungsform wiederkehrende Asparaginsäure-Einheiten folgender Strukturen

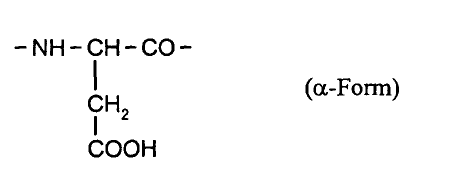

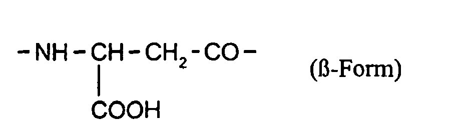

Im allgemeinen liegt der Anteil der β-Form bei mehr als 50 %, insbesondere mehr als 70 %, bezogen auf die Summe aus α-Form + β-Form.

Zusätzlich zu diesen wiederkehrenden Asparaginsäureeinheiten können weitere wiederkehrende Einheiten enthalten sein, z.B.

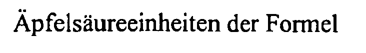

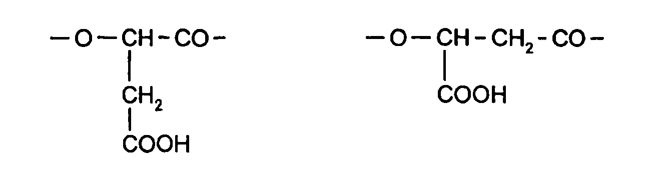

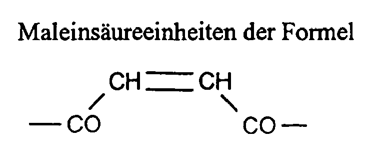

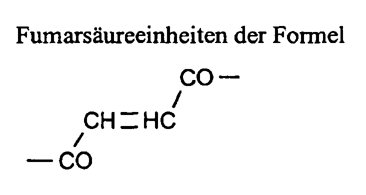

Die "weiteren" wiederkehrenden Einheiten können in Mengen bis zu 100 Gew.-%, bezogen auf die Summe aus α- und β-Form der Asparaginsäureeinheiten, in der Polyasparaginsäure enthalten sein.

Bevorzugte Polyasparaginsäuren besitzen als Gewichtsmittel durch Gelpermeationschromatographie (geeicht mit Polystyrol) bestimmte Molekulargewichte von 500 bis 10.000, vorzugsweise 1.000 bis 5.000, insbesondere 2.000 bis 4.000.

Die Dehydratisierung von Polyasparaginsäure zu Polysuccinimid kann bei erhöhter Temperatur, vorzugsweise bei 100 bis 240°C, gegebenenfalls in Gegenwart eines Katalysators, z.B. in Gegenwart von 0,01 bis 1 Gew.-%, bezogen auf Polyasparaginsäure, eines sauren Katalysators wie Schwefelsäure, Phosphorsäure, Methansulfonsäure, erfolgen.

Bevorzugte Amine B2-B) für die Umsetzung mit dem Polysuccinimid B2-A) umfassen sekundäre und - vorzugsweise - primäre Amine, wie z.B. monofunktionelle Polyetheramine mit einer primären oder sekundären Aminogruppe wie α-Methyl-ωamino-polyoxyethylen, N,N-Dimethylethylendiamin, Methylamin, Diethylamin, Butylamin, Stearylamin, Talgfettamin, Oleylamin, Undecylamin, Dodecylamin, Octylamin, Hexylamin, Eicosanylamin, Hexadecylamin, 2-Ethyl-hexylamin, Morpholin, Ethanolamin, Diethanolamin, Bis-2-hydroxy-propylamin, Bis-3-hydroxy-propylamin, 2- oder 3-Hydroxypropylamin, Ethoxy-ethylamin, Ethoxy-ethoxy-ethylamin, Butoxy-ethoxy-ethoxy-ethylamin, 2-Methoxy-ethyl-amin, Tetrahydrofurfurylamin, 5-Aminopentanol, Benzylamin, 4-Aminocyclohexylamin, N-Methylaminoethyl-sulfonsäure-Na-Salz, Dehydroabietylamin, Stearoyloxypropylamin,

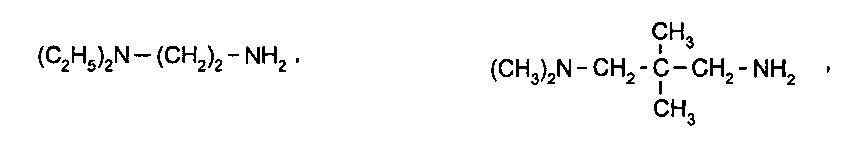

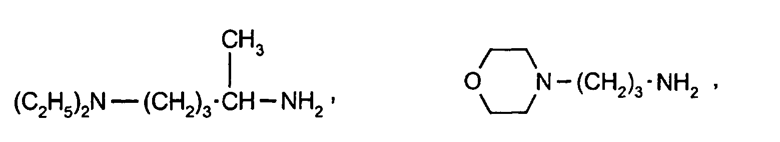

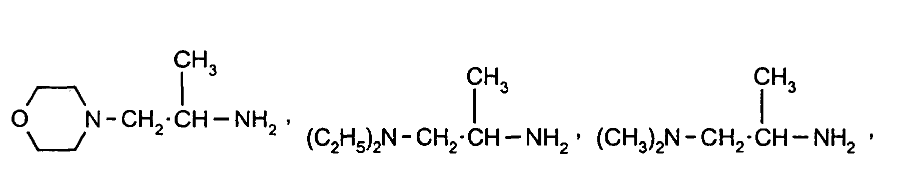

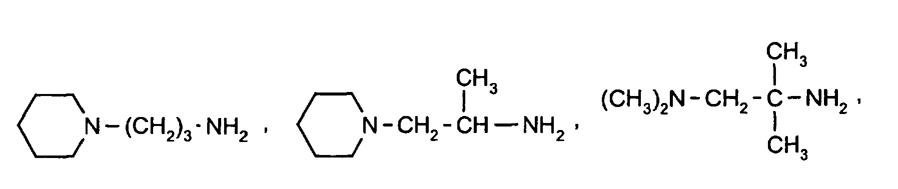

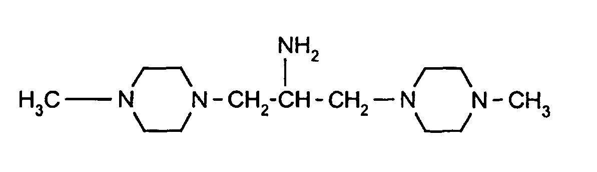

Die Umsetzung des Polysuccinimids mit dem Amin ist aus EP 0 842 300 bekannt und wird vorzugsweise in organischen Lösungsmitteln durchgeführt, die unter Reaktionsbedingungen inert sind. Als solche eignen sich beispielsweise Lactame wie Caprolactam, N-Methylpyrrolidon, N-Methylcaprolactam, Polyalkylendiole und deren Mono- und Diether, wie Ethylenglykol, Diethylenglykol, Triethylenglykol, Ethylenglykoldimethyl- und -diethylether und Diethylenglykolmonoethylether, sowie Dimethylformamid und Dimethylsulfoxid. Der Lösungsmittelgehalt wird in der Regel 30 Gew.-%, bezogen auf die gesamte Reaktionsmischung, nicht überschreiten.

Die Reaktion wird in einem Temperaturbereich von 20 bis 160°C durchgeführt, wobei die Reaktionszeiten zwischen 2 bis 72 Stunden liegen. Das Produkt kann durch destillatives Entfernen des Lösungsmittels oder durch Ausfällen des Produktes in einem Nichtlösemittel wie Aceton, Methanol, Ethanol, Wasser, Isopropanol isoliert und danach, falls gewünscht, getrocknet werden.

Aus dem Umsetzungsprodukt aus B2-A) und B2-B) lassen sich die erfindungsgemäß zu verwendenden Polyasparaginsäureamide durch Öffnung der verbliebenen eingebauten Succinimidringe herstellen.

Als ringöffnende Basen B2-c) kommen sowohl Alkalihydroxide, -carbonate und -hydrogencarbonate, insbesondere Natrium- und Kaliumhydroxid und Natriumcarbonat, als auch Ammoniak und Amine - einschließlich der Amine B2-B) - in Frage.

Nach einer besonderen Ausführungsform kann man Maleinsäure bzw. Maleinsäureanhydrid und wässrigen Ammoniak im Molverhältnis 1:0,75 bis 1:1,5 mischen und Wasser abdestillieren. Wenn das Polysuccinimid, gegebenenfalls unter Mitverwendung eines organischen Lösemittels wie Diethylenglykol, Pyrrolidon, N-Methylpyrrolidon das gewünschte Molekulargewicht erreicht hat, wird Amin B2-B) zudosiert und bei 130 bis 160°C umgesetzt. Eine Reaktionszeit von 3 bis 18, vorzugsweise von 4 bis 8 Stunden ist in der Regel für die Umsetzung mit dem Amin B2-B) ausreichend. Gegebenenfalls kann ein organisches Lösungsmittel zugesetzt werden. Es entsteht direkt das erfindungsgemäß zu verwendende Polyasparaginsäureamid, das sich unter gleichzeitiger Öffnung der verbliebenen eingebauten Succinimidringe mit ringöffnender Base B2-c) leicht in Wasser dispergieren läßt, wobei die Mitverwendung von üblichen Dispergiermitteln vorteilhaft ist.

Die erfindungsgemäß zu verwendenden Polyasparaginsäureamide enthalten in einer idealisierten Form wiederkehrende Struktureinheiten der Formeln 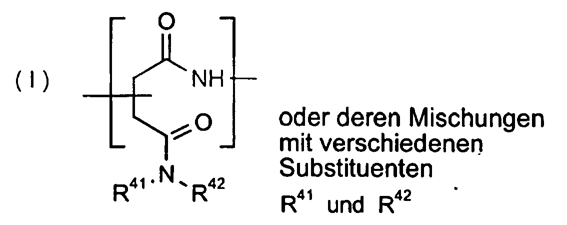 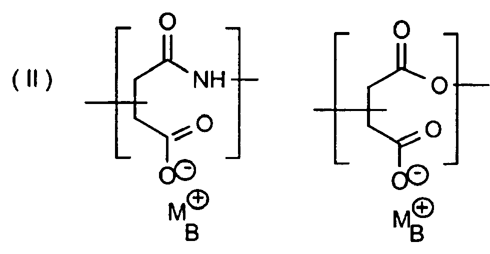 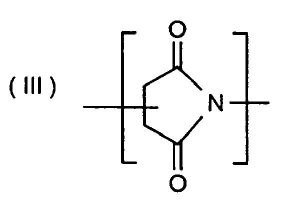 worin
- R⁴¹, R⁴²: Wasserstoff oder einen der oben als Stickstoffsubstituenten bezeichneten Reste bedeuten mit der Maßgabe, dass mindestens einer der beiden Reste ungleich Wasserstoff ist, und
- M_{B}⁺ für H⁺: oder ein Alkaliion, ein NH₄-Ion oder einen primären, sekundären oder tertiären aliphatischen Ammoniumrest, der vorzugsweise mindestens eine C₁-C₂₂-Alkyl- oder -Hydroxyalkylgruppe trägt, steht.

Geeignete Reste M_{B}⁺ sind beispielsweise Hydroxyethylammonium, Dihydroxyethylammonium, Trishydroxyethylammonium, Triethylammonium, Ammonium, Butylammonium, Benzyltrimethylammonium, Morpholinium, Stearylammonium, Oleylammonium.

Die Struktureinheiten I sind im Polymer vorzugsweise in einer Menge von 5 bis 90, insbesondere 20 bis 80 Mol-%, bezogen auf sämtliche wiederkehrende Einheiten, enthalten. Bevorzugte Polyasparaginsäureamide enthalten durchschnittlich pro Struktureinheit I mindestens einen C₁₂-C₂₂-Alkyl- und/oder -Alkylenrest.

Die Struktureinheiten II sind im Polymer vorzugsweise in einer Menge von 95 bis 10, insbesondere 80 bis 20 Mol-%, bezogen auf sämtliche wiederkehrende Einheiten, enthalten. Besonders bevorzugt sind Polyasparaginsäureamide, deren Carboxylgruppen in teilneutralisierter Form vorliegen. Der bevorzugte Neutralisationsgrad beträgt 10 bis 80, vorzugsweise 20 bis 60 %.

Die Struktureinheiten III sind im Polymer in einer Menge von 0 bis 5 Mol-%, bezogen auf sämtliche wiederkehrende Einheiten, enthalten. Bevorzugte Polyasparaginsäureamide enthalten weniger als 1 Mol-% der Struktureinheiten III.

Bevorzugte Stickstoffsubstituenten R⁴¹, R⁴² umfassen unabhängig voneinander beispielsweise gegebenenfalls Hydroxyl-substituierte C₁-C₂₂-Alkyl- oder C₂-C₂₂-Alkenylgruppen von Hydroxyethyl, Hydroxypropyl, Methyl, Ethyl, Butyl, Hexyl, Octyl, Octenyl, Decyl, Undecyl, Undecenyl, Dodecyl, Tetradecyl, Hexadecyl, Oleyl, Octadecyl, 12-Hydroxy-octadecenyl, C₅-C₁₀-Cycloalkylreste wie Cyclohexyl, durch Sauerstoffatome unterbrochene C₁₂-C₃₀-Reste wie Stearoyloxyethyl, Stearyloxyethoxyethyl, und leiten sich von den oben genannten Aminen B₂-B) ab.

Durch Sauerstoffatome unterbrochene Stickstoffsubstituenten werden am besten durch Verwendung entsprechender Aminoether eingeführt.

Die erfindungsgemäß zu verwendenden Polyasparaginsäureamide sind selbstdispergierend, besonders wenn der Anteil der Struktureinheiten I unter 50 Mol-% liegt. Es können aber auch externe Dispergatoren mitverwendet werden.

Bevorzugte Dispergatoren umfassen beispielsweise C₈-C₁₈-n-Alkylsulfate, C₈-C₁₈-n-Alkyl-benzolsulfonate, C₈-C₁₈-n-Alkyl-trimethyl-ammoniumsalze, n-Di-C₈-C₁₈-alkyl-dimethyl-ammoniumsalze, C₈-C₁₈-n-Alkyl-carboxylate, C₈-C₁₈-n-Alkyl-dimethylaminoxide, und -vorzugsweise- Oligoethylenglykol-mono-C₆-C₁₈-alkylether mit durchschnittlich 2 bis 30 Ethoxygruppen pro Molekül. Die n-Alkylreste können auch durch teilweise ungesättigte lineare aliphatische Reste ersetzt sein. Besonders bevorzugte Dispergatoren sind Oligoethylenglykolmono-C₁₀-C₁₄-alkylether mit durchschnittlich 4 bis 12 Ethoxygruppen pro Molekül, insbesondere Oligo-ethylenglykol-mono-C₁₂-alkylether mit durchschnittlich 8 Ethoxygruppen pro Molekül.

Bevorzugte Dispergatoren umfassen weiterhin Ölsäure, Ölsäuresarcoside, Ricinolsäure, Stearinsäure, Fettsäurepartialester von Polyolen wie Glycerin, Trimethylolpropan oder Pentaerythrit und deren Acylierungs-, Ethoxylierungs- und Propoxylierungsprodukte, z.B. Glycerinmonostearat und -monooleat, Sorbitanmonostearat und -monooleat, Sorbitantristearat und -trioleat und deren Umsetzungsprodukte mit Dicarbonsäureanhydriden wie Bernsteinsäureanhydrid, Maleinsäureanhydrid, Phthalsäureanhydrid oder Tetrahydrophthalsäureanhydrid, Umsetzungsprodukte aus Bis-(hydroxymethyl)-tricyclodecan und Maleinsäureanhydrid oder Bemsteinsäureanhydrid und deren Derivate, vorzugsweise in Form ihrer Alkali- oder Ammoniumsalze.

Besonders bevorzugte Dispergatoren sind Salze aus langkettigen Fettsäuren, vorzugsweise Ölsäure und einem Aminoalkohol, vorzugsweise Hydroxyethylamin, Bishydroxyethylamin oder Trishydroxyethylamin.

Die Bildung der Dispersion der erfindungsgemäß zu verwendenden Polyasparaginsäureamide kann so geschehen, dass man die Polyasparaginsäureamide in einer wässrigen Dispergatorlösung, vorzugsweise unter Erwärmen auf Temperaturen von 40 bis 95°C, unter Rühren dispergiert.

Im allgemeinen ist zu empfehlen, die erfindungsgemäß zu verwendenden Polyasparaginsäureamide ohne Zwischenisolierung direkt aus dem Reaktionsgemisch heraus, das gegebenenfalls organisches Lösungsmittel enthält, zu dispergieren. So kann man beispielsweise den Dispergator zum Reaktionsgemisch hinzufügen und eine wässrige Lösung der ringöffnenden Base B₂-c) unter Rühren bei Temperaturen von 70 bis 130°C zudosieren, so dass sich eine Mischtemperatur von 70 bis 95°C einstellt, und gegebenenfalls das organische Lösungsmittel abdestillieren. Umgekehrt kann man natürlich auch das Reaktionsgemisch invers in wässrige Dispergatorlösung oder eine Mischung von Reaktionsgemisch und Dispergator in Wasser dispergieren. Man kann auch auf die Entfernung des Lösungsmittels verzichten.

Bevorzugt ist auch die Verwendung von ringöffnenden Basen B2-c) zur Einstellung des pH-Wertes nach der Dispergierung. Besonders bevorzugt sind pH-Werte von 5,5 bis 11, vorzugsweise von 6,0 bis 9. Weiterhin ist es bevorzugt, die Dispersion einer Bleiche mit Oxidationsmitteln zu unterziehen. Besonders geeignet ist Wasserstoffperoxid, Ammoniumpersulfat, Natriumsulfat. Nach beendeter Bleiche wird nicht verbrauchtes Oxidationsmittel mit einem Reduktionsmittel oder durch enzymatische Zersetzung desaktiviert. Geeignete Reduktionsmittel sind Natriumbisulfit, Natriumdithionit sowie die entsprechenden Kalium- oder Lithiumsalze oder ein enzymatisches Reduktionsmittel (BAYREDUKT^{®} EPK).

Der Dispergatorgehalt beträgt im allgemeinen nicht mehr als 30, vorzugsweise 3 bis 15 Gew.-%, bezogen auf fertige Dispersion.

Der Festgehalt der Dispersionen beträgt 5 bis 70 Gew.-% betragen, bevorzugt 20 bis 50 Gew.-%. Die mittlere Teilchengröße der dispergierten Polyasparaginsäureamide beträgt im allgemeinen 50 bis 1000, vorzugsweise 50 bis 700 und insbesondere 50 bis 400 nm.

Die Dispersionen können insbesondere bei Feststoffgehalten oberhalb von 45 Gew.-% in Form von Pasten vorliegen, die sich aber mit Wasser leicht verdünnen lassen. Bevorzugte Dispersionen mit einem Feststoffgehalt von 30-40 Gew.-% liegen in der Regel als dünnflüssigenn Emulsionen vor, die bei 20°C eine Viskosität < 1000 mPas aufweisen. Der pH-Wert der Dispersionen liegt zwischen 5 und 10, vorzugsweise im pH-Bereich zwischen 5 und 9.

Eine besonders bevorzugte Komponente B₂ ist dadurch erhältlich, dass man
B2-a) Maleinsäureanhydrid, gegebenenfalls in einem inerten Lösemittel mit Ammoniak umsetzt im Molerhältnis 1:1,0 bis 1:1,3 und danach thermisch kondensiert, wobei das gebildete Wasser abdestilliert wird,
B2-b) das Produkt aus B2-a) mit mindestens einem Amin der Formel 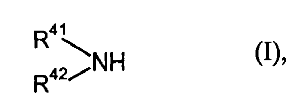 in der R⁴¹ und R⁴² die angegebene Bedeutung haben, umsetzt, wobei bezoen auf 1 Mol Maleinsäureanhydrid 0,2 bis 0,5 Mol Amin (I) eingesetzt werden, und
B2-c) das Reaktionsprodukt gegebenenfalls in Gegenwart eines Dispergators in einer wässrigen Phase, die eine Base enthält, dispergiert und das Produkt in Festgehalt, Viskosität, pH-Wert, Teilchengröße und Farbe je nach Verwendungszweck einstellt und gegebenenfalls einer Bleiche unterzieht.

Eine bevorzugte Komponente B₃ ist ein paraffinischer Kohlenwasserstoff, der gegebenenfalls durch Hydroxyl- und/oder Carboxylgruppen substituiert sein kann (Weißöl 285, Paraffinöl, Paraffinwachs, Montanwachs, Carnaubawachs, oxidiertes Polyethylen, langkettige Fettalkohole wie Guerbet-Alkohole, Fettsäuren, Fettsäureester, Phospholipide), wobei der paraffinische Kohlenwasserstoff vorzugsweise gemeinsam mit der Komponente B₁ und/oder B₂ eine stabile Dispersion ergibt.

### Beschreibung der Komponente B₃

Als geeignete Komponenten B₃ sind beispielsweise paraffinische Kohlenwasserstoffe wie C₁₀-C₆₀-Paraffine, besonders C₁₄-C₁₇-Paraffin-Öle, Weißöl, Wachse, Fettalkohole wie Stearylalkohol, Oleyalkohol, oder Gemische daraus wie Talgfettalkohol, darüber hinaus auch handelsüblicher Wollwachsalkohol, handelsübliches Carnaubawachs, handelsübliches Polyethylenwachs, Montanwachs, Guerbetalkohole, sowie Umsetzungsprodukrte der Fettalkohole mit Dicarbonsäure-anhydriden, bevorzugt Maleinsäureanhydrid oder Bernsteinsäureanhydrid, Fettsäuren wie handelsübliche Dimerfettsäure zu nennen, wobei die in den Wachsen enthaltenen Carboxylgruppen in freier Form vorliegen können oder in neutralisierter Form als Salze. Besonders bevorzugt sind C₁₄-C₁₇-Paraffin-Öle, Weißöl und Wachse mit einem Erweichungspunkt zwischen 25 und 60°C.

Zur Neutralisation eignen sich Basen wie NaOH, KOH, Soda, Ammoniak, oder primäre, sekundäre, tertiäre Amine oder Aminoalkohole. Besonders bevorzugt sind KOH, NaOH, Ammoniak, Ethanolamin, Morpholin, Diethanolamin, Triethylamin, Triethanolamin.

Vorzugsweise liegen die Komponenten B₃ als wässrige Dispersionen vor. Der Festgehalt solcher Dispersionen beträgt 5 bis 60 Gew.-%, bevorzugt 10 bis 35 Gew.-%.

Besonders bevorzugt ist es weiterhin, die Komponente B₃ gemeinsam mit Komponente B₁ und B₂ einzusetzen. Vorzugsweise wird dazu die Komponente B₃ zu Komponente B₁ und/oder B₂ hinzugegeben und durch Anwendung hoher Scherkräfte mit Hilfe von üblichen Dispergiermaschinen, Dissolvern, Homogenisatoren oder Ultraschallgeräten in eine stabile Dispersion überführt.

Vorzugsweise weisen solche Dispersionen die folgende Zusammensetzung auf:
- 1 bis 50 Gew.-% Komponente B₁ (jeweils als Festgehalt gerechnet) und/oder Komponente B₂,
- 0 bis 50 Gew.-% Komponente B₃ (jeweils als Festgehalt gerechnet),
- 0 bis 99 Gew.-% Wasser (Summe = 100 %).

Besonders bevorzugt sind Mischungen aus Komponente B₃ und B₁.

Besonders bevorzugt sind solche Mischungen aus Komponente B₁ und Komponente B₃, die folgende Zusammensetzung aufweisen:
- 3 bis 30 Gew.-% (auf Festgehalt bezogen) B₁,
- 10 bis 40 Gew.-% (auf Festgehalt bezogen) B₃,
- 30 bis 87 Gew.-% Wasser
   (Summe = 100 %)

Ganz besonders bevorzugt sind Mischungen aus Komponente B₁ und Komponente B₃ mit einem Festgehalt von 10 bis 70 Gew.-%, bevorzugt 20 bis 50 Gew.-%.

Es ist auch bevorzugt, die Komponente B₃ als solche zu einer Komponente B₁ und/oder B₂ hinzuzugeben, wobei eine vorherige Dispergierung der Komponente B₂ in Wasser nicht erforderlich ist.

Eine bevorzugte Komponente B₄ ist ein Umsetzungsprodukt aus
B₄-a) einem organischen Polyisocyanat
B₄-b) pro Äquivalent in B₄-a) enthaltenem NCO oder latentem NCO 0,0 bis 0,9 Äquivalente C₆-C₂₄, vorzugsweise C₁₂-C₁₈-Alkohol,
B₄-c) pro Äquivalent in B₄-a) enthaltenem NCO oder latentem NCO 0,1 bis 1,0 Mol Cyanamid und
B₄-d) Ammoniak oder flüchtigem Amin als Neutralisationsmittel für die Cyanamidgruppen, wobei die Umsetzungsprodukte frei von Polyester- oder Polyethergruppen und frei von Halogenatomen sind.

Der Begriff "Cyanamidgruppen" im Sinne der Erfindung umfaßt funktionelle Gruppen jeglicher Art, sofern sie Gruppierungen der Formel 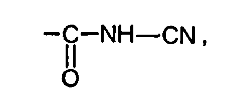 also z.B. Cyanharnstoffgruppen 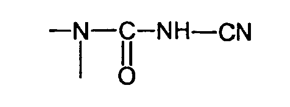 oder Cyanaminocarbonylharnstoffgruppen 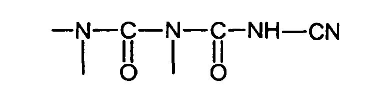 enthalten, und die Salze dieser Verbindungen enthaltend Gruppierungen der Formel

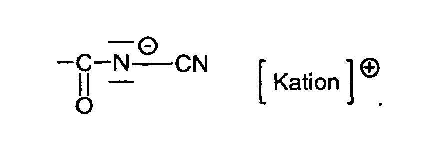

Bevorzugte Isocyanat-Additionsprodukte (Komponente B₄) sind auch die in der DE-A 41 33 572 bzw. EP-A 0 538 649 und die in der EP-A 0 814 102 (Beispiele 1-3) beschriebenen anionisch modifizierten Polyharnstoffe auf Basis von
I.a) organischen Polyisocyanaten und
II. polyfunktionellen NCO-reaktiven Verbindungen aus der Reihe
b) Polyhydroxylverbindungen,
c) Polyamine,
d) Aminoalkohole und gegebenenfalls
III. monofunktionellen NCO-reaktiven Verbindungen e) und gegebenenfalls
IV. Wasser f),
die in der Polymerkette eingebaute anionische N-Cyanaminocarbonylharnstoff gruppen der Formel 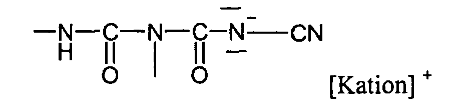 und gegebenenfalls endständige anionische Cyanharnstoffgruppen der Formel 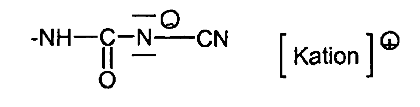 enthalten, wobei das Verhältnis von in die Polymerkette eingebauten Gruppen zu endständigen Gruppen mehr als 1 : 1 beträgt und wobei [Kation]+ für ein Alkali-oder gegebenenfalls subsituiertes Ammoniumion steht.

Bevorzugte Isocyanat-Additionsprodukte (Komponente B₄) sind auch die in der EP-A 0 814 102 beschriebenen, Pfropfcopolymerisate von ungesättigten Monomeren auf Cyanamidgruppen aufweisende, anionisch modifizierte Polyurethanhamstoff-Dispersionen als Pfropfgrundlage, die ihrerseits durch Reaktion von NCO-Prepolymeren mit Cyanamid zugänglich sind.

Bei Verwendung der Komponente B₄ als Emulgator entstehen sehr weiche Leder mit hervorragendem Griff.

Ein wesentlicher Vorteil der Komponente B₄ besteht darin, dass sie im Leder zu einem wasserunlöslichen (nicht hydrophilen) Dimerisat oder Oligomerisat reagiert und folglich weder ausgewaschen wird noch nennenswert migriert, sobald diese Reaktion abgeschlossen ist, und ihre emulgierende Wirkung verliert.

### Beschreibung der Komponente B₄

Die Komponente Komponente B₄ ist beispielsweise aus der DE-A 41 33 572 oder aus der EP-A-814 102 bekannt und wird vorzugsweise durch Umsetzung von einem Polyharnstoff, der Oxadiazintrion-Strukturen der Formel (ii) 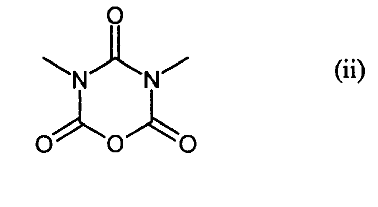 und / oder Uretdion-Einheiten der Formel (i) 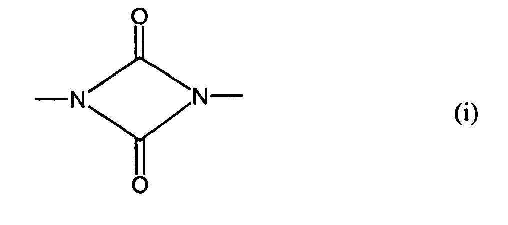 enthält, mit einem Cyanamid-Salz der Formel H-N-CN Ka⁺, worin Ka⁺ für ein Alkali oder gegebenenfalls substituiertes Ammoniumion steht, erhalten.

Besonders bevorzugte anionisch modifizierte Polyharnstoffe sind beispielsweise die Polyharnstoffe gemäss den Beispielen 1 bis 5 der DE-A 41 33 572 und gemäss den Beispielen 1 bis 3 der EP-A 0 814 102.

Die Komponente B₄ ist beispielsweise aus DE-A 43 30 378 bekannt und wird vorzugsweise durch Umsetzung von NCO-Gruppen in Polyisocyanaten mit einem C₆-C₂₄-Alkohol und anschließend mit Cyanamid und anschließende Neutralisation mit Ammoniak oder flüchtigen Basen hergestellt. Die Reaktionsprodukte enthalten keine freien NCO-Gruppen mehr und sind in Wasser löslich oder in Wasser emulgierbar. Die Umsetzung mit dem C₆-C₂₄-Alkohol kann gegebenenfalls auch entfallen.

Die anionischen Polyisocyanat-Additionsprodukte besitzen vorzugsweise mittlere Molmassen (Zahlenmittel) von unter 5000 g/mol, vorzugsweise von 300 bis 3000 g/mol.

Geeignete Polyisocyanate sind insbesondere aliphatische Polyisocyanate mit mindestens 2 freien Isocyanatgruppen pro Molekül. Vorzugsweise werden Diisocyanate T(NCO)₂ eingesetzt, wobei T für einen zweiwertigen aliphatischen Kohlenwasserstoffrest mit 4 bis 12 Kohlenstoffatomen oder einen cycloaliphatischen oder aromatischen Rest mit 6 bis 15 Kohlenstoffatomen oder einen araliphatischen Rest mit 7 bis 15 Kohlenstoffatomen steht. Beispielsweise seien genannt:

Butylendiisocyanat, Hexamethylendiisocyanat (HDI), Isophorondiisocyanat (IPDI), Diisocyanato-cyclohexan, 4-Isocyanato-4-methyl-1-isocyanatomethyl-cyclohexan, Bis-cyclohexylmethan-4,4'-diisocyanat (H₁₂ MDI), Nonyltriisocyanat, 1,4-Diisocyanatobenzol, 2,4-Diisocyanatotoluol (2,4-TDI), 2,6-Diisocyanatotoluol (2,6-TDI), p-Xylylendiisocyanat, 4,4'-, 2,2'-, 2,4'-Diisocyanato-diphenylmethan (MDI) sowie deren Gemische.

Vorzugsweise werden auch die in der Polyurethanchemie an sich bekannten üblichen höherfunktionellen Polyisocyanate eingesetzt, die z.B. durch Trimerisierung von Hexamethylendiisocyanat oder Isophorondiisocyanat oder deren Gemischen erhältlich sind und die Isocyanurat-Einheiten als zusätzliche Struktureinheiten enthalten und eine NCO-Funktionalität von 2 bis 3,5 aufweisen können. Solche Trimerisate sind handelsüblich (BAYER AG, Produkte der DESMODUR^{®}-Reihe).

Weiter geeignet sind auch an sich bekannte und handelsübliche modifizierte Polyisocyanate, die durch katalytische Dimerisierung von Hexamethylendiisocyanat erhalten werden und zusätzliche Uretdion-Struktureinheiten (i) 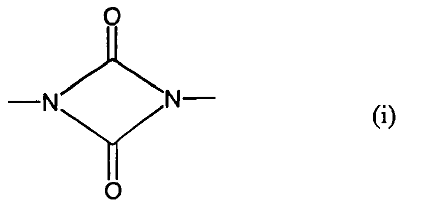 und gegebenenfalls auch Isocyanuratstrukturen enthalten. Weiter geeignet sind Oxadiazintrion-Struktureinheiten (ii) 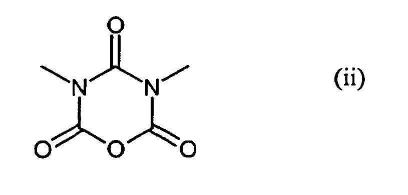 enthaltende Polyisocyanate, die sich von Hexamethylendiisocyanat ableiten. Weiter geeignet sind an sich bekannte modifizierte Polyisocyanate, die Carbodiimid-, Harnstoff, Urethan-, Allophanat-, Biuret-Gruppen enthalten und eine NCO-Funktionalität zwischen 2,0 und 3,5 aufweisen können und sich von Hexamethylendiisocyanat ableiten.

Besonders bevorzugte Biuretgruppen enthaltende HDI-Polyisocyanate sind solche, die eine NCO-Funktionalität von 2,5 bis 3,5 aufweisen, beispielsweise DESMODUR^{®} N 3200 (Bayer AG).

Die oben beschriebenen Polyisocyanate können auch als Mischung eingesetzt werden.

Als Aufbaukomponenten zur Einführung der Oxadiazintrion- und/oder Uretdion-Struktureinheiten der Formeln (i) bzw. (ii) eignen sich ihrerseits Diisocyanate der Formeln (iii) und/oder (iv) 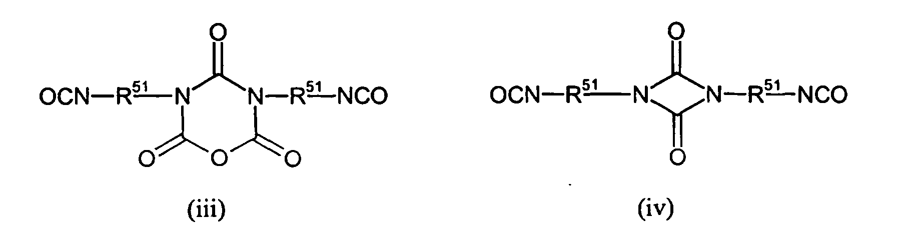 worin die Reste
- R⁵¹: unabhängig voneinander für den zweiwertigen Rest eines aliphatischen Koh- lenwasserstoffs mit 1 bis 15 C-Atomen, eines cycloaliphatischen Kohlenwas- serstoffs mit 3 bis 15 C-Atomen, eines araliphatischen Kohlenwasserstoffs mit 7 bis 15 C-Atomen oder eines aromatischen Kohlenwasserstoffs mit 6 bis 12 C-Atomen stehen.

Beispiele für derartige Polyisocyanate B₄-a) sind 1,3-Bis-(5-isocyanato-1,3,3-trimethylcyclohexyl-methylen)-2,4-dioxo-1,3-diazetidin; 1,3-Bis-(3-isocyanato-4-methylphenyl)-2,4-dioxo-1,3-diazetidin; 1,3-Bis-(6-isocyanato-hexyl)2,4-dioxo-1,3-diazetidin; 3,5-Bis-(5-isocyanato-1,3,3-trimethyl-cyclohexyl-methylen)-2,4,6-trioxotetrahydro-1,3,5-oxadiazin; 3,5-Bis-(4-isocyanato-cyclohexyl)-2,4,6-trioxo-tetrahydro-1,3,5-oxadiazin und 3,5-Bis-(6-isocyanato-hexyl)-2,4,6-trioxo-tetrahydro-1,3,5-oxadiazin (Desmodur^{®} LB 202, Bayer AG).

Von den Isocyanaten der Formeln (iii) und (iv) werden diejenigen der Oxadiazintrion-Reihe (iii) bevorzugt eingesetzt, besonders bevorzugt 3,5-Bis-(6-isocyanatohexyl)-2,4,6-trioxo-tetrahydro-1,3,5-oxadiazin.

Da man durch Umsetzung mit dem Alkohol B₄-b) Isocyanatgruppen verliert, sind Polyisocyanate mit mehr als 2 Isocyanatgruppen ganz besonders bevorzugt. Zu diesen Isocyanaten zählen die Isocyanurate, Biurete, Trisurethane (und deren höherfunktionelle Analoga) des TDI, IPDI, MDI, HDI, H12-MDI, 1,4-Diisocyanatocyclohexans etc. Wegen der besseren Lichtechtheiten sind auch hier die aliphatischen Polyisocyanate ganz besonders bevorzugt.

Beispiele für geeignete Polyisocyanate sind Trimerisate von Hexamethylendiisocyanat, 1,3-Bis-(6-isocyanatohexyl)-2,4-dioxo-1,3-diazetidin, 3,5-Bis-(6-Isocyanatohexyl)-2,4,6-trioxo-tetrahydro-1,3,5-oxadiazin (DESMODUR^{®} LB 202). Falls die Umsetzung mit einem C₆-C₂₄-Alkohol erfolgt, werden die Polyisocyanate mit einer Funktionalität größer 2 bevorzugt, weil durch die Umsetzung mit dem Alkohol ein Teil der NCO-Funktionalität verloren geht.

Geeignete C₆-C₂₄-Alkohole sind Alkanole wie n-Hexanol, n-Octanol, 2-Ethylhexanol, Dodecanol, Cetylalkohol, Stearylalkohol, hydrierte Talgfettalkohole, Guerbetalkohole oder Alkenole wie Oleylakohol, Talgfettalkohol, Cyclohexenol, Butenol, Hexenol, Hexadecenol, Octadecenol.

Geeignete Basen zur Neutralisation der Cyanamidgruppen B₄-d) sind Ammoniak und flüchtige Amine, vorzugsweise tertiäre Amine mit bis zu 12 Kohlenstoffatomen, wie Triethylamin, Trimethylamin, Triisopropylamin, Tri-n-butylamin, N,N-Dimethylaminoethanol, N-Methylmorpholin, Pyridin, Triisopropanolamin. Besonders bevorzugt ist Ammoniak und Triethylamin.

Herstellung der Komponenten B₄ erfolgt in der Weise, dass man ein Polyisocyanat B₄-a) gegebenenfalls partiell mit einem C₆-C₂₄-Fettalkohol B₄-b) umsetzt und das modifizierte Polyisocyanat beziehungsweise das nicht modifizierte Polyisocyanat in Wasser in Gegenwart von Cyanamid B₄-c) und Neutralisationsmittel (Base) B₄-d) oder in Gegenwart eines mit einer Base neutralisierten Cyanamids zum gewünschten Endprodukt umsetzt.

Die Reaktionstemperatur beträgt im allgemeinen zwischen 20 und 100°C, vorzugsweise zwischen 30 und 60°C. Die Reaktion ist abgeschlossen, wenn das Endprodukt keine freien NCO-Gruppen mehr aufweist. In einer bevorzugten Ausführungsform werden 0 bis 0,7 mol, besonders bevorzugt 0 bis 0,3 mol Alkohol B₄-a) pro NCO-Äquivalent des Polyisocyanats B₄-b) eingesetzt. Die restlichen NCO-Gruppen werden dann mit Cyanamid B₄-c) und Neutralisationsmitel B₄-d) weiter umgesetzt. Es ist möglich, Cyanamid und Neutralisationsmittel im Unterschuß einzusetzen. In diesem Fall reagieren die übrigen NCO-Gruppen mit dem Alkohol bzw. Wasser ab.

Man erhält Dispersionen oder Lösungen B₄, je nach Anwesenheit bzw. Art und/oder Anteil der Fettalkohol-Komponente. Der Feststoffgehalt dieser Lösung bzw. Dispersion beträgt bevorzugt 5 bis 70 Gew.-%, besonders bevorzugt 20 bis 60 Gew.-%. Der Rest ist Wasser.

Besonders bevorzugt ist ein Umsetzungsprodukt aus einem Biuretgruppen enthaltenden Trimerisat von Hexamethylendiisocyanat (Desmodur^{®}N3200) oder einem Isocyanuratgruppen enthaltenden Trimerisat von Hexamethylendiisocyanat (Desmodur^{®} N 3300, N 3600) und 1 mol Cyanamid pro Äquivalent NCO und 1 mol Triethylamin pro Äquivalent Cyanamid. Das Produkt wird in Wasser dispergiert, wobei eine 40-60, insbesondere 50-60%ige Lösung erhalten wird.

Bevorzugt liegt die Komponente B₄ als wässrige Dispersion oder Lösung vor.

Die Komponente B₄ besitzt folgende Eigenschaften:
- beim Auftrocknen und Abgeben ihres Gegenions dimerisieren oder oligomerisieren die Verbindungen und verlieren ihren ionischen Charakter;
- damit verlieren sie auch ihre dispergierenden Eigenschaften; damit dispergierte Polymere werden ausgefällt;
- sofern sie Reste längerkettiger Alkohole B₄-b) besitzen, können sie hydrophobe Eigenschaften besonders unterstützen;
- sofern die Produkte B₄ eine Funktionalität größer 2 besitzen, wirken sie als Vernetzer.

Sie eignen sich insbesondere zur:
- weichmachenden und gegebenenfalls hydrophobierenden Nachgerbung von Leder;
- Verstärkung der Hydrophobierwirkung beim Einsatz von Komponenten B₁) bis B₄) und Polysiloxanen a);
- als Dispersionsstabilisator für andere übliche Lederhilfsmittel;
- als Emulgator für Silicone.

Werden die Komponenten B₄ als Emulgatoren für Komponente a) (carboxylgruppen-haltiges Polysiloxan) eingesetzt, können sie in Mengen von 0,1 bis 100 Gew.-% (festes Umsetzungsprodukt) bezogen auf die Menge des Polysiloxan-Wirkstoffs eingesetzt werden. Es genügt im allgemeinen die Verwendung von 0,1 bis 50, vorzugsweise 0,1 bis 10 Gew.-% (festes Umsetzungsprodukt) bezogen auf die Menge des Polysiloxan-Wirkstoffs.

Die mit den Komponenten B₄ versetzten Mischungen können in einfacher Weise (durch Rühren oder Eingießen in die Anwendungsflotte) in eine Dispersion überführt werden. Komponente B₄ wird im allgemeinen in die Nachgerbflotte oder die Hydrophobiermittelflotte, die die Komponente a) enthält, gegossen; durch die Drehbewegung des Fasses oder der Gerbmaschinen wird die Dispersion aufgenommen. Der pH-Wert der Nachgerbflotte bzw. des Leders sollte oberhalb 4, besser oberhalb 5 bis 5,5 liegen. Selbstverständlich kann man noch synthetische Gerbstoffe, Polymergerbstoffe oder mineralische Gerbstoffe, Fettungsmittel und Farbstoffe hinzufügen. Durch Zugabe von Säure kann man die Komponente B₄ gezielt dimerisieren bzw. oligomerisieren.

Besonders bevorzugt ist es ebenfalls, die Komponente B₄ als selbstinhibierenden Emulgator in Mischung mit Komponente a) und/oder in Mischung mit den Komponenten B₁ bis B₃ oder deren Mischungen einzusetzen.

Ganz besonders bevorzugt ist es, die Komponente B₄ in Kombination mit Komponente a) einzusetzen. Vorzugsweise haben diese Mischungen folgende Zusammensetzung:
1 bis 20 Gew.-% Komponente B₄ (bezogen auf Festgehalt)
0,01 bis 40 Gew.-% Komponente a) (bezogen auf Wirkstoff/Festgehalt)
40 bis 99,89 Gew.-% Wasser (Summe = 100 %)

Die Herstellung solcher Mischungen erfolgt beispielsweise durch Lösen einer Dispersion oder Lösung der Komponente B₄ in einer Emulsion der Komponente a) bei 10 bis 60°C. Es ist auch möglich, den Wirkstoff der Komponente B₄ in dem Polysiloxan zu lösen oder zu dispergieren und die erhaltene Mischung gemeinsam in Wasser zu dispergieren, wie dies bei der Herstellung der Polysiloxan-Emulsion (Komponente a) bereits beschrieben wurde.

Bevorzugt sind Hydrophobiermittelsysteme, enthaltend (bezogen auf das System)
1) 1 bis 60 % einer Dispersion bestehend aus (jeweils als Festgehalt gerechnet) 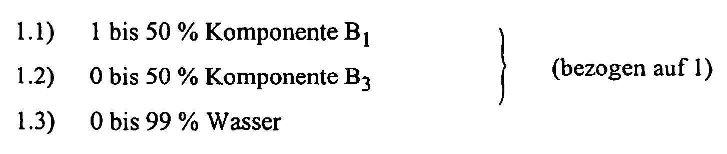 und
2) 0,1 bis 40 % einer Polysiloxan-Emulsion aus (jeweils als Festgehalt gerechnet) 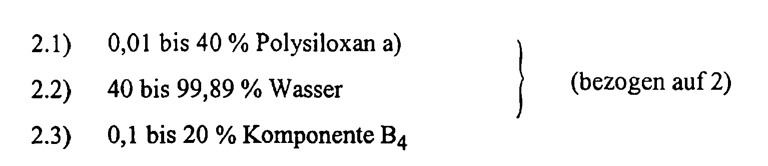 und Wasser zur Ergänzung auf 100 %.

Besonders bevorzugt sind Hydrophobiemittelsysteme enthaltend
1) 1 bis 60 % einer Dispersion bestehend aus
   1.1) 3 bis 30 % Komponente B₁ (jeweils als Festgehalt gerechnet)
   1.2) 10 bis 40 % Komponente B₃ (jeweils als Festgehalt gerechnet)
   1.3) 30 bis 87 % Wasser
   und
2) 0,1 bis 40 % einer Polysiloxan-Emulsion aus 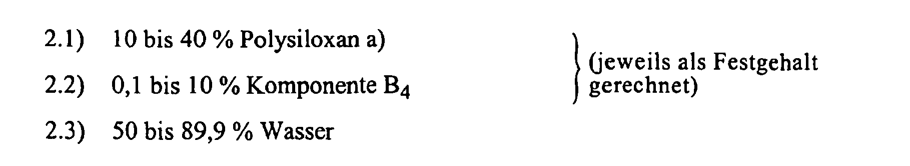 und Wasser zur Ergänzung auf 100 %.

Weiterhin wurde gefunden, dass die Leder, die durch Einsatz der Komponenten B₁ und B₃ sowie B₂ und B₃ und eine anschließende Top-Hydrophobierung mit Polysiloxanen a), gegebenenfalls mit Zusatz der Komponente B₄, hergestellt werden, ein besonders gutes Ergebnis liefern und das Spektrum der gestellten Aufgaben in seiner Gesamtheit am besten erfüllen.

Gegenstand der Erfindung ist auch ein Verfahren zur Hydrophobierung von Substraten vorzugsweise solcher mit flexibler, insbesondere faseriger Struktur, das dadurch gekennzeichnet ist, dass man das Substrat mit dem erfindungsgemäßen Polysiloxan und/oder dem erfindungsgemäßen Hydrophobiermittelsystem, insbesondere mit dem erfindungsgemäßen Hydrophobiermittelsystem behandelt.

Geeignete Substrate können sein: cellulosehaltige Materialien wie Papier, Pappe, Karton, Vliese, textile Gebilde wie Wolle- oder Baumwollartikel, Leder, Pelze, Ledersubstitutionsprodukte, vorzugsweise Leder und Pelze.

Die weichmachende Nachgerbung und/oder Hydrophobierung der Substrate erfolgt vorzugsweise durch Behandeln der Substrate mit einer wässrigen Flotte, die das erfindungsgemäße Polysiloxan und/oder erfindungsgemäße Hydrophobiermittelsystem enthält. Dazu wird das Substrat mit der Flotte durch Auftrag mittels Walzen oder in einem Behälter, bei Leder vorzugsweise in einem Gerbfaß, in Kontakt gebracht. Nach der Behandlung wird das Substrat getrocknet.

Die weichmachende Nachgerbung und/oder Hydrophobierung von Leder, Pelzen und Lederfasermaterial (Lefa) besteht aus mehreren Einzelschritten, wobei man vorzugsweise von Wet blue, d.h. chromgegerbten Fellen und Häuten, ausgeht. Die Verfahrensschritte sollen für Wet blue im einzelnen erläutert werden:
1. Neutralisieren des chromgegerbten Leders
2. Nachgerbung und gegebenenfalls Färbung
3. Zugabe des erfindungsgemäßen Polysiloxans, insbesondere in Form des Hydrophobiermittelsystems (Dosierung der Komponenten a) und b) entweder gemeinsam oder vorzugsweise nacheinander),

In einer bevorzugten Ausführungsform werden eine oder mehrere Komponenten aus der Gruppe B₁, B₂, B₃ oder B₄ unabhängig voneinander im Verfahrensschritt 3 dosiert und nach einer Einwirkdauer von 0,1 bis 5 Stunden die Komponente a), gegebenenfalls in Kombination mit Komponente B₄ zugegeben. Nach weiteren 0,1 bis 5 Stunden wird mit Verfahrensschritt 4 fortgefahren.

Nach Schritt 3 wird gegebenenfalls eine Metallsalzfixierung bzw. mit Cr(III)-Salzen, zwingend und vorzugsweise aber eine Fixierung mit Ameisensäure oder einer anorganischen Säure durchgeführt. Vorzugsweise erfolgt dies durch die Verfahrensschritte 4 bis 6.
4. Verminderung des pH-Wertes durch Zugabe einer Carbonsäure, bevorzugt Ameisensäure auf pH-Werte < 4,5, vorzugsweise auf 3,0 bis 4,5
5. Waschen
6. übliches Fertigstellen (Ausstoßen oder Abwelken, Hängetrocknung, Stollen, vakuumieren (1 Minute, 70°C)).

In einer ebenfalls bevorzugten Auführungsform wird nach Verfahrensschritt 2 die Komponente B₁ oder B₂ oder eine Mischung der Komponenten B₁ und B₃ oder eine Mischung der Komponenten B₂ und B₃ dosiert, und nach einer Einwirkdauer von 0,1 bis 5 Stunden die Komponente a) oder eine Mischung der Komponenten a) und B₄ zugegeben. Nach einer weiteren Einwirkdauer von 0,1 bis 5 Stunden wird mit Verfahrensschritt 4 fortgefahren.

Vorteile des erfindungsgemäßen Verfahrens sind:
1. Es werden keine Chromsalze oder andere Mineralsalze zur Fixierung benötigt.
2. Zusätzliche Fettungsmittel zur Einstellung eines weichen Griffs können eingesetzt werden, sind aber nicht notwendig.
3. Die Anwendung kann auch in einer sogenannten Kompaktarbeitsweise erfolgen:
   Dabei werden vorzugsweise die Komponenten B₁ + B₂ oder B₁ + B₃ oder B₂ + B₃ oder B₁ + B₂ + B₃ von b) des Hydrophobiermittelsystems nach der Neutralisation des Leders zum Beispiel als Mischung zugegeben und nach einer bestimmten Laufzeit, vorzugsweise nach 1 bis 5 Stunden bei 20-60°C, ohne Ablassen der Flotte oder einen Waschvorgang die Komponente a) und gegebenenfalls die Komponente B₄ im Gemisch mit a) zugegeben. Nach einer Laufzeit von a) bzw. B₄ + a) von ca. 1 bis 2 Stunden bei 20-60°C wird die Ameisensäure zur gleichen Flotte zugegeben und die Produkte a) und b) fixiert. Durch diese Arbeitsweise und die gute Flottenauszehrung fallen kaum Abwässer an.
4. Zur Fixierung der erfindungsgemäßen Polysiloxan/Dispersionen genügt eine Verminderung des pH-Werts durch Zugabe einer Carbonsäure mit einem pKs-Wert unter 5 nach ausreichender Laufzeit mit dem Hydrophobiermittelsystem. Die Flottenauszehrung ist in der Regel so gut, dass eine Zugabe der Säure in das Faß auch ohne Ablassen der Hydrophobierflotte möglich ist. Bevorzugte pH-Werte sollten kleiner als 4,5 sein, um eine ausreichende Fixierung in der Hautsubstanz zu erreichen. Besonders bevorzugt ist der Bereich zwischen 3,0 und 4,5. Bevorzugte Carbonsäure ist Ameisensäure. Es ist auch möglich, eine anorganische Säure zu verwenden, wobei darauf zu achten ist, dass der pH-Wert zwischen 3,0 und 4,5 eingestellt wird. Die Laufzeit mit der Säure beträgt in der Regel 0,1 bis 5 Stunden.

Statt einer Fixierung mit einer Carbonsäure oder in Kombination mit einer Säurefixierung kann auch eine Zugabe von polyvalenten Metallverbindungen, wie Aluminium-, Titan-, Zirkon- oder Chromsalzen oder -Carboxylaten oder -Alkoxiden zur Flotte erfolgen. Aus ökologischen Gründen wird aber im allgemeinen darauf verzichtet. Zumindest bringt eine Fixierung mit einem Mineralsalz keinen Vorteil mehr gegenüber der Fixierung mit Säure.

Zur Erzielung einer ausreichenden Hydrophobwirkung werden vorzugsweise im erfindungsgemäßen Verfahren folgende Mengen (Angaben in Festgehalt, bezogen auf Falzgewicht des Leders bzw. Naßgewicht der Pelze) eingesetzt:
0 bis 30 Gew.-% Komponente B₁, vorzugsweise 0,1 bis 15 Gew.-% B₁,
0 bis 30 Gew.-% Komponente B₂, vorzugsweise 0,1 bis 15 Gew.-% B₂,
0 bis 50 Gew.-% Komponente B₃, vorzugsweise 0,1 bis 20 Gew.-% B₃,
0 bis 20 Gew.-% Komponente B₄, vorzugsweise 0,1 bis 5 Gew.-% B₄,
0,1 bis 25 Gew.-% Komponente a), vorzugsweise 0,1 bis 6 Gew.-% a),
wobei die Mengen unabhängig voneinander eingesetzt werden und die Einsatzmengen der Komponenten B₁ bis B₄ vorzugsweise nicht gleichzeitig 0 Gew.-% betragen.

Der pH-Wert der Flotte beträgt zu Beginn der Hydrophobierung vorzugsweise 5,5 bis 7. Der pH-Wert kann gegebenenfalls vor Zugabe des Hydrophobiermittelsystems durch Zusatz von Basen wie Ammoniak oder Natriumbicarbonat korrigiert werden. Zur Erzielung einer ausreichenden Hydrophobwirkung werden nach dem erfindungsgemäßen Verfahren insbesondere bis zu 10 Gew.-%, vorzugsweise bis zu 8 Gew-%, an Wirksubstanz des erfindungsgemäßen Polysiloxans a), bezogen auf Falz- bzw. Fellgewicht eingesetzt. Die Behandlung erfolgt bei einer Temperatur zwischen 20 und 60°C, vorzugsweise zwischen 35 und 50°C. Nach der Behandlung stellt sich in der Flotte ein pH-Wert von etwa 5 bis 6 ein. Durch Zugabe einer Carbonsäure wird der pH-Wert auf 3 bis 4,5 vermindert. Bevorzugte Carbonsäure zur Ansäuerung ist Ameisensäure. Die Ansäuerung läuft vorzugsweise bis zu einer halben Stunde bei 20-60°C. Dann wird das Leder gründlich mit Wasser gewaschen und wie üblich fertiggestellt.

In einer besonders bevorzugten Ausführungsform wird das Verfahren zur Herstellung hydrophobierter Leder wie folgt durchgeführt (die Mengenangaben beziehen sich auf Wirksubstanz bzw. Festgehalt bezogen auf Falzgewicht des Leders bzw. Naßgewicht der Pelze):
1. Neutralisation
   Wet-blue wird zunächst mit einer Flotte, enthaltend 1 % Natriumbicarbonat und 1 % Natriumformiat, bei 20-60°C neutralisiert (Laufzeit 2 bis 24 Stunden), so dass ein pH zwischen 5,0 und 5,5 resultiert. Flottenlänge 100 bis 400 %. Anschließend wird das Leder gespült.
2. Nachgerbung/Färbung
   Es wird eine frische Flotte zugegeben, enthaltend einen Nachgerbstoff, z.B. einen Vegetabil-Gerbstoff wie Kastanienrindenextrakt (Kastanie gesüßt) und einen synthetischen Gerbstoff (wie TANIGAN QF), und einen Farbstoff (zum Beispiel BAYGENAL Braun CGG). Man läßt das Faß 1 bis 5 Stunden bei 20-60°C, vorzugsweise bei 30-45°C laufen. Zum Schluß wird die Flotte abgelassen und gewaschen.
3. Hydrophobierung
   Es wird eine Flotte, die 0,1-0,5 % Ammoniak oder 0,3-0,5 % NaHCO₃ enthält, in das Gerbfaß gegeben und 10 -60 Minuten nachneutralisiert, danach wird die Flotte abgelassen. Anschließend werden 2-8 Gew.-% der Komponente B₁) und/oder B₂), oder 2 bis 8 Gew.-% einer fertigen Formulierung aus Komponente B₁) und/oder Komponente B₂) mit Komponente B₃) enthalten, und 100 % Wasser zugegeben (Flottenlänge 50-200 %). Nach einer Walkzeit von 1-3 Stunden bei 20-60°C und vollständiger Auszehrung der Flotte werden 0,5 - 2,5 % der Komponente a) oder einerMischung a) + B₄ ohne weiteren Wasserzusatz zugegeben und 30-120 Minuten weiter bei 20-60°C gewalkt.
4. Fixieren
   Dann werden ohne Flottenwechsel 0,3-2 % Ameisensäure (85%ig, 1:10) zugegeben und das Leder auf pH 3,0-4,5, vorzugsweise auf pH 3,5-4,0, abgesäuert. Dann wird die Flotte abgelassen.
5. Fertigstellen
   Es wird zunächst mit warmem Wasser gespült (30-50°C), ausgestoßen oder abgewelkt und das Leder wie üblich fertiggestellt (Hängetrocknung, stollen, Vakuumieren 1 Minute bei 50-70°C).

Das erfindungsgemäße Verfahren ergibt Leder mit einer hervorragenden Hydrophobie und einem weichen und vollen Griff.

### Herstellungsbeispiele

### Polyacrylat-Dispersion 1 (PAC 1)

### Herstellung des Polyacrylats (Komponente B1)

In einem 50 L-Rührbehälter werden 2500 g Xylol vorgelegt und auf 140-145°C erhitzt. Eine Lösung von 18750 g C17,4-Methacrylat (Fa. Röhm) bzw. Stearylmethacrylat, 6250 g Acrylsäure und 1250 g Mercaptoethanol in 3750 Xylol und eine Lösung von 750 g Di-tert-Butylperoxid in 2500 g Xylol werden unter Rühren innerhalb von 2 Stunden getrennt und gleichzeitig zu der Vorlage zugetropft. Dann wird 2 Stunden bei 140-145°C nachgerührt. Die Polymerlösung wird über eine beheizte Leitung in einen 200 L-Reaktor, der mit 125 L Wasser mit der Temperatur von 80-90°C gefüllt ist, mit Vakuum eingezogen. Dabei wird das Xylol azeotrop abdestilliert, wobei das Polymer ausfällt. Die Zugabe der Polymerlösung in den Fällreaktor erfolgt mit einer solchen Geschwindigkeit, dass die abdestillierende Xylolmenge ungefähr dem Zulauf entspricht. Nach beendeter Destillation wird noch 1 Stunde bei vollem Vakuum destilliert. Nach der vollständigen Entfernung des Xylols hat sich ein heterogenes, leicht rührbares Gemisch gebildet, das aus dem ausgefällten Polymerisat und Wasser besteht. Zur Herstellung der Dispersion wird unter Rühren eine Lösung aus 6900 g 50%iger NaOH-Lösung und 12500 g Wasser zugepumpt. Es wird bei 80-90°C eine Stunde nachgerührt. Zur Entfernung von Xylolresten wird im Vakuum bei 50-60°C entgast. Man erhält eine lösemittelfreie, weiße Dispersion mit folgenden Eigenschaften:

| | |
|---|---|
| Festgehalt: | 33 Gew.-% |
| pH-Wert: | 13,5 |
| mittlere Teilchengröße: | 250 nm |
| Viskosität: | ca. 2000 mPas (20°C, 100 s⁻¹) |

### Polyacrylat-Dispersion 2 (PAC 2)

### Formulierung mit C14-C17-Paraffinöl (Komponente B₁ und B₃)

Die oben beschriebene Polyacrylat-Dispersion 1 (Komponente B₁) wird mit Wasser auf einen Festgehalt von 30 Gew.-% eingestellt. 1000 g dieser 30%igen Emulsion werden mit 500 g C₁₄-C₁₇-Paraffinöl (Komponente B₃) am Dissolver 10 Minuten dispergiert. Anschließend wird gegebenenfalls mit einem Strahldispergator (Dispergierdüse) oder einem Ultraschallhomogenisator nachdispergiert, um die Teilchengröße auf den Anwendungszweck einzustellen. Man erhält die stabile Polyacrylat-Dispersion 2.
Festgehalt: 53,0 Gew.-%

### Polyacrylat-Dispersion 3 (PAC 3)

### Formulierung mit Weißöl 285 (Komponente B₁ und B₃)

Die oben beschriebene Polyacrylat-Dispersion 1 (Komponente B₁) wird mit Wasser auf 30 % Festgehalt eingestellt. Dann werden 1000 g dieser 30%igen Emulsion mit 500 g Weißöl 285 (Komponente B₃) am Dissolver 10 Minuten dispergiert. Anschließend wird gegebenenfalls mit einem Strahldispergator (Dispergierdüse) oder einem Ultraschallhomogenisator nachdispergiert, um die Teilchengröße auf den Anwendungszweck einzustellen.
Festgehalt: 53,0 Gew.-%
mittlere Teilchengröße: 300 nm - 1 000 nm (einstellbar)

### Polyacrylat-Dispersion 4 (PAC 4)

Formulierung aus LEUKOTAN NS 3 und Weißöl 285 (Komponente B₁ und B₃) Leukotan^{®} NS 3 (ROHM and HAAS) ist eine pastöse Polyacrylat-Dispersion (Festgehalt 34,0 bis 38,0 Gew.-%, pH 7,0 bis 8,0, Dichte 1,04 g/cm³).

In einem Rührbehälter werden 240 g Wasser vorgelegt. Dann werden bei 20-25°C unter Rühren 460 g der Polyacrylat-Dispersion LEUKOTAN^{®} NS 3 (Rohm and Haas) (=Komponente B₁) eingetragen. Der Ansatz wird 30 Minuten bei dieser Temperatur gerührt, bis das Leukotan^{®} NS 3 homogen verteilt ist. Anschließend werden bei 20-25°C unter Rühren 300 g Weißöl 285 (Komponente B₃) innerhalb von 10 Minuten zudosiert. Das Gemisch wird noch 60 Minuten bei 20-25°C nachgerührt und anschließend mit Hilfe eines Dissolvers 10 Minuten bei 20-30°C dispergiert. Dann wird auf ≤30°C abgekühlt und gegebenenfalls unter Verwendung eines 100 µm-Filters filtriert. Man erhält eine lagerstabile, weiße Dispersion mit folgenden Eigenschaften:

| | |
|---|---|
| Feststoffgehalt: | 46,6 Gew.% |
| pH-Wert: | 6,4 (unverdünnt, potentiometrisch) |
| Viskosität: | 2100 mPas (20°C, D =100 sec⁻¹) |

### Polyacrylat-Dispersion 5 (PAC 5)

### Formulierung aus LELTKOTAN^{®} NS 3 und Weißöl 285 (20:80) (Komponente B₁ und B₃)

In einem Rührbehälter werden 376 g Wasser vorgelegt. Dann werden bei 20-25°C unter Rühren 256 g der Polyacrylat-Dispersion LEUKOTAN^{®} NS 3 (Rohm and Haas) (=Komponente B₁) eingetragen. Der Ansatz wird 30 Minuten bei dieser Temperatur gerührt, bis das Leukotan^{®} NS 3 homogen verteilt ist. Anschließend werden bei 20-25°C unter Rühren 368 g Weißöl 285 (Komponente B₃) innerhalb von 10 Minuten zudosiert. Das Gemisch wird noch 60 Minuten bei 20-25°C nachgerührt und anschließend mit Hilfe eines Dissolvers 10 Minuten bei 20-30°C dispergiert. Dann wird auf ≤ 30°C abgekühlt und gegebenenfalls unter Verwendung eines 100 µm-Filters filtriert. Man erhält eine lagerstabile, weiße Dispersion mit folgenden Eigenschaften:

| | |
|---|---|
| Feststoffgehalt: | 46,6 Gew.-% |
| pH-Wert: | 6,4 (unverdünnt, potentiometrisch) |
| Viskosität: | 510 mPas (20°C, D = 100 sec⁻¹) |

### Polyacrylat-Dispersion 6 (PAC 6)

### Formulierung aus LEUKOTAN^{®} NS 3 und Weißöl 285 (Komponente B₁ und B₃)

In einem Rührbehälter (Dissolver) werden 585 g einer auf 40°C erwärmten Polyacrylat-Dispersion LELTKOTAN^{®} NS 3 (Rohm and Haas) (=Komponente B₁) eingetragen. Anschließend werden 715 g Weißöl 285 (Komponente B₃) hinzugegeben und 1-2 Minuten mit dem Dissolver vermischt. Dabei wird gekühlt auf 30°C. Bei stehendem Dissolver werden 715 g Wasser zudsiert. Dann wird 15-20 Minuten bei maximaler geschwindigkeit unter Kühlung (30°C ca.) dispergiert. Unter Verwendung eines 100 µm-Filters wird filtriert. Man erhält eine lagerstabile, weiße mittelviskose Dispersion mit folgenden Eigenschaften:

| | |
|---|---|
| Feststoffgehalt: | 46,0 Gew.-% |
| pH-Wert: | 6,5 (unverdünnt, potentiometrisch) |

### Dispersion eines Polyasparaginsäureamids (Komponente B₂) (PAS1)

In einem Reaktionskessel werden unter Rühren 16,61 kg Maleinsäureanhydrid in 13,22 kg Diethylenglykol eingetragen. Dann wird auf 10-20°C gekühlt und unter Kühlung 13,84 kg wässrige Ammoniak-Lösung (25 %) so eindosiert, dass die Temperatur unterhalb von 60°C gehalten wird. Nach beendeter Zugabe wird noch 1 Stunde bei 70 °C nachgerührt. Dann wird in 2,5 Stunden auf 140-145°C geheizt und Wasser abdestilliert. Danach wird bei 700-900 mbar weiter destilliert, um die Kondensationsreaktion zu vervollständigen. Es werden 13,44 kg Destillat entnommen. Nach beendeter Destillation werden bei 140-145°C 11,43 kg eines techn. Gemischs von Hexadecylamin und Octadecylamin (hydriertes Talgfettamin) zudosiert. Der Ansatz wird 6 Stunden bei 140-145°C nachgerührt. Anschließend wird der Ansatz abgekühlt und beginnend bei 110 °C werden 2,85 kg Ölsäure zudosiert. Nach 10 Minuten werden 0,14 kg eines siliconhaltigen Entschäumers (z.B. RESPLTMIT^{®} S, Bayer AG) zugegeben und 10 Minuten verrührt. Innerhalb von 5 bis 30 Minuten wird eine Lösung von 1,23 kg Monoethanolamin in 47,19 kg Wasser eingerührt, wobei die Temperatur zwischen 80°C und 95°C gehalten wird. Nach beendeter Zugabe wird der Ansatz 15 Minuten verrührt. Danach wird auf 60-70°C gekühlt, innerhalb von 60 Minuten 2,92 kg Natronlauge 50% eingezogen und 1 Stunde bei 60-70°C nachgerührt. Anschließend werden 4,01 kg Wasserstoffperoxid-Lösung (35 %) in 30 Minuten zugepumpt. Es wird ca. 3 Stunden bei 60-70°C nachgerührt. Dann wird unter Rühren auf ≤35°C abgekühlt. Gegebenenfalls vorhandene Spuren von Wasserstoffperoxid werden mit einem Reduktionsmittel, z.B. BAYREDUKT^{®} EPK (Bayer AG) entfernt und das Produkt über ein 30 µm-Filter filtriert.

| | |
|---|---|
| Feststoffgehalt: | 34 Gew.-% |
| pH-Wert: | 6,5 - 7,5 (1 Teil Probe + 4 Teile Wasser) |
| Viskosität: | 100 - 500 mPas bei 20°C (D=100 sec⁻¹) |
| Teilchengröße: | d₅₀ = 100 - 300 nm |

### Isocyanat-Polyadditionsprodukt 1 (PU 1) (Komponente B₄)

20 g Cyanamid werden in 50 g Tetrahydrofuran gelöst. Unterhalb von 25°C werden unter Kühlung 48,2 g Triethylamin zugegeben. Direkt anschließend werden 95,25 g eines durch Trimerisierung von Hexamethylendiisocyanat erhaltenen und Isocyanuratgruppen aufweisenden Polyisocyanats, gekennzeichnet durch eine mittlere NCO-Funktionalität von ca. 3,3 (NCO-Gehalt = 22,5 Gew.-%) und eine Viskosität von 800 mPas bei 20°C (DESMODUR^{®} N3600, BAYER AG), zugetropft. Anschließend werden 125 g Wasser eingerührt. Dann wird bei 80 °C unter Rühren das Lösemittel aus dem Reaktionsgemisch abdestilliert. Der Festgehalt der klaren, wässrigen Lösung beträgt ca. 64 Gew.-%. Durch Wasserzugabe wird der Festgehalt auf 57 Gew.-% eingestellt.

### Isocyanat-Polyadditionsprodukt 2 (PU2) (Komponente B₄)

In einem 11-Dreihalskolben werden 186,4g (1 mol) Laurylalkohol und 222g (1 mol) Isophorondisocyanat 6 Stunden bei 60°C gerührt. Das Reaktionsgemisch hat einen Isocyanatgehalt von 10,28 %. In das Reaktionsgemisch werden 42 g (1 mol) Cyanamid eingetragen und 30 Minuten nachgerührt. Bei 60°C werden 101,2 g (1 mol) Triethylamin portionsweise zugegeben. Nach 1 Stunde Nachrührzeit wird in eine flache Form gegossen. Man erhält eine bei Raumtemperatur glasartig erstarrende Masse, die gut wasserlöslich ist.

### Isocyanat-Polyadditionsprodukt 3 (PU 3) (Komponente B₄)

In einem 1 1-Dreihalskolben werden 380,6 g (2,04 mol) Laurylalkohol und 932,4 g (4,20 mol) Isophorondiisocyanat 4 Stunden bei 70°C gerührt. Das Gemisch hat einen Isocyanatgehalt von 20 %. In das Reaktionsgemisch wird langsam in eine Lösung von 252 g (6 mol) Cyanamid und 607 g (6 mol) Triethylamin in 3250 g Wassser eingegossen. Man erhält eine wässrige Lösung mit einem Festkörpergehalt von 40 %.

### Isocyanat-Polyadditionsprodukt 4 (PU 4) (Komponente B₄)

Wiederholung des Beispiels PU3 mit folgenden Änderungen:
1 mol Oleylalkohol, 1 mol 3,5-Bis-(6-isocyanatohexyl)-2,4,6-trioxo-tetrahydro-1,3,5-oxadiazin, 1,35 mol Triethylamin und 1,5 mol Cyanamid. Man erhält eine 30,6 %ige wässrige Dispersion.

### Isocyanat-Polyadditionsprodukt 5 (PU 5) (Komponente B₄)

587 g Cyanamid (10%ig in Wasser) werden bei 20°C vorgelegt. Unter Kühlung werden 147,2g Triethylamin in 30 Minuten bei 20-25°C zugegeben. Direkt anschließend werden 800 g Aceton zugegeben. Danach werden innerhalb von 60 Minuten 265,8 g eines durch Trimerisierung von Hexamethylendiisocyanat erhaltenen und Biuretgruppen aufweisenden Polyisocyanats, gekennzeichnet durch eine mittlere NCO-Funktionalität von ca. 3,5 (NCO-Gehalt = 23 Gew.-%) und eine Viskosität von 2500 mPas bei 20°C (DESMODUR^{®} N 3200, Bayer AG) gelöst in 200 g Aceton bei 20-30°C zugetropft. Dann wird 30 Minuten nachgerührt. Das Lösemittel wird bei 40°C und 150-600 mbar aus dem Reaktionsgemisch abdestilliert. Man erhält eine klare, wässrige Lösung mit ca. 47 Gew.-% Festgehalt (pH-Wert 7,7, Viskosität 60 mPas).

### Isocyanat-Polyadditonsprodukt 6 (PU 6) (Kompomnente B₄)

2240 g eines difunktionellen Hexandiolpolycarbonatdiols (OH-Zahl = 56), 82 g eines difunktionellen Propylenoxidpolyethers (OH-Zahl = 56) werden bei 120°C / 15 hPa entwässert. Bei 80 °C werden 363 g 3,5-Bis-(6-isocyanatohexyl)-2,4,6-trioxo-tetrahydro-1,3,5-oxadiazin (techn. Produkt, MG = 422,0), 67,2 g Hexa-methylendiisocyanat und 184,3 g Isophorondiisocyanat zugegeben. Nach 3 Stunden bei 90°C wird das Prepolymer mit 6000 g Aceton verdünnt. Zu dieser Lösung gibt man 18,0 g Ethylendiamin und 12,5 Hydrazinhydrat in 300 g Wasser und rührt 15 Minuten bei 50°C nach. Danach wird eine Lösung von 33,6 g Cyanamid in 400 g Wasser zugegeben. Weitere 20 Minuten später werden 80,7 g Triethylamin zugegeben. Nach 45 Minuten ist die CO₂-Entwicklung beendet. Der Ansatz wird mit 6000 g Wasser verdünnt und anschliessend das Aceton unter vermindertem Druck abdestilliert. Es resultiert eine feinteilige Dispersion mit einer mittleren Teilchengrösse der dispersen Phase von ca. 95 nm, einem Feststoffgehalt von 32,5 % und einer Auslaufviskosität von 12 Sekunden.

Die Zusammensetzung geeigneter Cyanamid-Polyadditionsprodukte ist, wie das folgende Beispiel zeigt, nicht auf die bereits erwähnte Zusammensetzung von PU 6 beschränkt. Ebenfalls geeignet ist ein Cyanamid-Polyadditions-Produkt, bei dem analog PU 6 die Einsatzstoffe und -mengen variiert wurden:
Zu einer entwässerten Polyolmischung aus 157,1 g eines difunktionellen Hexandiolpolycarbonatdiols (OH-Zahl = 56), 51,9 g eines difunktionellen auf Bisphenol A gestarteten Propylenoxidpolyethers (OH-Zahl = 56), 0,86 g 2-Ethylhexanol werden bei 60°C 32,5 g 3,5-Bis-(6-isocyanatohexyl)-2,4,6-trioxo-tetrahydro-1,3,5-oxadiazin (techn. Produkt, MG = 422,0), 11,3 g Hexa-methylendiisocyanat und 29,7 g Isophorondiisocyanat zugegeben.

Nach 3 Stunden bei 90-95°C wird das Prepolymer mit 663 g Aceton verdünnt. Nach Erreichen eines NCO-Gehalts von 1,1 % wird bei 50-55°C eine Lösung von 1,43 g Hydrazinhydrat und 5,69 g Isophorondiamin in 42,1 g Wasser zugegeben und der Ansatz 15 Minuten bei 50°C nachgerührt. Danach werden 36,6 g einer 10%igen wässrigen Lösung von Cyanamid zugegeben. Weitere 10 Minuten später werden 8,7 g Triethylamin zugegeben. Nach 1 Stunde ist die CO₂-Entwicklung beendet. Der Ansatz wird mit 632 g Wasser verdünnt und anschliessend das Aceton unter vermindertem Druck abdestilliert. Es resultiert eine feinteilige Dispersion mit einer mittleren Teilchengrösse der dispersen Phase von ca. 70 nm, einem Feststoffgehalt von 30 % und einer Viskosität von ca. 10 mPas bei 20°C / 10 s⁻¹.

### Silicon-Emulsion 1 (Komponente a)) (SIL 1)

In einem Rührbehälter werden 332,8 g Trimethylsilyl-terminiertes Polydimethylsiloxan (Viskosität 5000 mm²/s, 25°C) (z.B. BAYSILONE^{®} Öl M 5000, Bayer AG) vorgelegt. Dann werden bei Raumtemperatur unter Rühren 14,9 g 2-Aminoethyl-3-aminopropyl-methyl-dimethoxysilan (Dynasilan 1411, Fa. Hüls) und anschließend 0,2 g Natronlauge (50 %ig) zugegeben. Der Kesselinhalt wird im Verlauf von 2 Stunden auf 115°C erwärmt. Es wird 5,25 Stunden bei 115°C gerührt, wobei ein leichter N₂-Strom übergeleitet wird. Dann wird noch 0,75 Stunden unter Vakuum bei 100-150 hPa gerührt. Während dieser Kondensation (6 Stunden) werden 1,1 g Destillat abgenommen. Nach beendeter Methanol-Abspaltung wird der Ansatz unter Rühren auf 20-30°C abgekühlt. Man erhält ein mit 2-Aminoethyl-3-aminopropyl-Seitenketten funktionalisiertes Polysiloxan (Gehalt Basen-N = 0,56 Gew.-%, Viskosität bei 20°C/100 S⁻¹ = 95 mPas).

Bei 20-30°C werden unter Rühren 14,7 g Maleinsäureanhydrid zugegeben. Die erhaltene Suspension wird auf 65°C erwärmt und 1 Stunde bei 65°C gerührt. Es entsteht eine klare Lösung. Das IR-Spektrum einer Probe zeigt keine Anhydridbande bei 1850 cm⁻¹. Die Viskosität des Zwischenprodukts beträgt ca. 40000 mPas bei 100s⁻¹ und 20°C. Dann werden bei 50-55°C 15,3 g Triethylamin zudosiert. Der Ansatz wird bei 50-55°C noch 20 Minuten nachgerührt (Viskosität 20°C, D=10 s⁻¹: 65000 mPas). Dann werden bei 50-55°C 115,6 g Isopropanol eingerührt. Es wird 30 Minuten bei 50-55°C nachgerührt. Der Ansatz ist dünnflüssig.

Bei 50-55°C werden unter schnellem Rühren 635,9 g Wasser (Raumtemperatur) mit einer Pumpe zu dem zuvor beschriebenen Silicon-Wirkstoff gegeben und dabei 50-55°C gehalten. Die Dosierung erfolgt linear und kontinuierlich im Verlauf von 3,5 Stunden. Der Ansatz bleibt während der gesamten Dosierphase leicht rührbar. Die Dosiergeschwindigkeit wird so eingestellt, dass das zugesetzte Wasser stets gut verteilt wird. Nach etwa 50% der gesamten Wassermenge wird das Viskositätsmaximum erreicht. Bei weiterer Wasserzugabe wird die Emulsion rasch wieder dünnflüssig. Nach beendeter Zugabe wird der Ansatz noch 15 Minuten verrührt. Dann werden bei 50-55°C und 180-250 hPa 128,3 g Isopropanol-Wasser-Gemisch abdestilliert. Man erhält eine weiße, feinteilige Emulsion. Schaumbildung tritt unter den gegebenen Bedingungen der Destillation nicht auf. Zuletzt wird auf Raumtemperatur (≤ 30°C) abgekühlt und über ein 20 µm-Sieb filtriert.

| | |
|---|---|
| Feststoffgehalt: | 37,8 % |
| pH-Wert | ca. 7 (unverdünnt) |
| mittl. Teilchengröße: | 112 nm |
| Mischbarkeit mit Wasser: | ohne Stippen |
| Viskosität: | < 100 mPas, 30 mPas bei 100 sec⁻¹, 20°C |
| Lagerstabilität: | sehr gut |

### Silicon-Emulsion 2 (Komponente a)) (SIL 2)

1923,6 g BAYSILONE^{®} Öl M 5000 (Viskosität 5000 mm²/s, 25°C) werden mit 86,2 g Wacker Silan GF 95 in Gegenwart von 1,96 g NaOH 30% äquilibriert. Nach 6 Stunden Kondensation bei 115°C und Abnahme von 3,1 g Destillat erhält man ein 2-Aminoethyl-3-aminopropyl-Gruppen enthaltendes Polysiloxan (Basen-N-Gehalt von 0,6%, Viskosität 20°C = 103 mPas).

300 g dieses Polysiloxans werden in 300 g Tetrahydrofuran gelöst und mit 12,6 g Maleinsäureanhydrid in 120 Teilen Tetrahydrofuran gemischt. Die Mischung wird auf 65°C erwärmt und 0,5 Stunden bei 65°C gerührt. Bei 55°C werden 18,0 g Triethyl-amin zugegeben und 30 Minuten nachgerührt. Bei 55°C werden 750 g Wasser innerhalb von 3 Stunden zudosiert. Nach beendeter Zugabe wird das Lösemittel-Wasser-Gemisch abdestilliert. Man erhält eine stabile Silicon-Emulsion.

| | |
|---|---|
| Festgehalt: | 34 Gew.-% |
| Viskosität (20°C/100 s⁻¹): | ca. 20 mPas |
| mittlere Teilchengröße: | 220 nm |

### Silicon-Emulsion 3 (Komponente B₄ + a)) (SIL 3)

5,3 g des Cyanamid-Polyisocyanat-Reaktionsprodukts 1 (PU1) (Komponente B₄) und 100 g der Silicon-Emulsion 2 (SIL2) werden bei Raumtemperatur 30 Minuten verrührt.
Man erhält die stabile Silicon-Emulsion 3.

| | |
|---|---|
| Festgehalt. | 35 Gew.-% |
| mittlere Teilchengröße: | 253 nm |
| Viskosität: | 25 mPas (20°C) |

### Silicon-Emulsion 4 (Komponente a)) (SIL 4)

1400 g Trimethylsilyl-terminiertes Polydimethylsiloxan (Viskosität 1000 mm²/s, 25°C) (Handelsprodukt: BAYSILONE^{®} Öl M 1000) werden vorgelegt. Dann werden 49,5 g 2-Aminoethyl-3-aminopropyl-methyl-dimethoxysilan (Dynasilan^{®} 1411, Fa. Hüls) und anschließend 0,86 g Natronlauge (50 %ig) zugegeben. Der Kesselinhalt wird im Verlauf von 2 Stunden auf 115°C erwärmt. Es wird 5,25 Stunden bei 115°C gerührt, wobei ein leichter N₂-Strom übergeleitet wird. Dann wird noch 0,75 Stunden unter Vakuum bei 65 hPa gerührt. Während der Kondensation (6 Stunden) werden 1,5 g Destillat abgenommen. Nach beendeter Methanol-Abspaltung wird der Ansatz unter Rühren auf 25°C abgekühlt. Man erhält ein mit 2-Aminoethyl-3-aminopropyl-Seitenketten funktionalisiertes Polysiloxan (Basen-N-Gehalt = 0,44 Gew.-%, Viskosität bei 20°C/100 s⁻¹ = 94 mPas).

300 g des so hergestellten Aminopolysiloxans mit 0,44 Gew.-% Basen-N-Gehalt werden bei 25°C vorgelegt und 10,3 g Maleinsäureanhydrid eingerührt. Die erhaltene Suspension wird auf 65°C erwärmt und 1 Stunde bei 65°C gerührt. Dabei entsteht eine klare Lösung. Das IR-Spektrum zeigt keine Anhydridbande bei 1850 cm⁻¹. Die Viskosität des Zwischenprodukts beträgt ca. 30000 mPas bei 100s⁻¹ und 20°C. Der Ansatz wird dann auf 50-55°C abgekühlt. Unter intensivem Rühren werden bei 55°C 10,6 g Triethylamin zudosiert. Der Ansatz wird bei 55°C noch 20 Minuten nachgerührt, wobei die Viskosität allmählich ansteigt (Viskosität 20°C, D=10 s⁻¹: ca. 50000 mPas). Dann werden 100 g Isopropanol zugegeben und 30 Minuten bei 55°C nachgerührt. Bei 50-55°C werden unter schnellem Rühren 550 g Wasser innerhalb von 3 Stunden zugepumpt.. Die erhaltene Dispersion wird bei 55°C und 140-250 hPa vom Lösemittel befreit. Es werden 117,5 g Isopropanol-Wasser-Gemisch abdestilliert. Man erhält eine weiße, feinteilige Emulsion. Unter diesen Bedingungen wird während der Destillation kein Schaum beobachtet. Dann wird auf Raumtemperatur (<30°C) abgekühlt und über ein 20 µm-Sieb filtriert.

| | |
|---|---|
| Feststoffgehalt: | 36,9 % |
| pH-Wert: | ca. 7 (unverdünnt) |
| mittlere Teilchengröße: | 174 nm |
| Mischbarkeit mit Wasser: | in jedem Verhältnis |
| Viskosität: | 36 mPas (bei 100 sec⁻¹, 20°C) |
| Lagerstabilität: | sehr gut |

### Silicon-Emulsion 5 (Komponente a)) (SIL 5)

332,8 g Trimethylsilyl-terminiertes Polydimethylsiloxan (Viskosität 5000 mm²/s, 25°C) (Handelsprodukt: BAYSILONE^{®} Öl M 5000) werden vorgelegt. Dann werden 14,9 g 2-Aminoethyl-3-aminopropyl-methyl-dimethoxysilan (Dynasilan^{®} 1411, Fa. Hüls) und anschließend 0,2 g Natronlauge (50 %ig) zugegeben. Der Kesselinhalt wird im Verlauf von 2 Stunden auf 115°C erwärmt. Es wird 6 Stunden bei 115°C gerührt, wobei ein leichter N₂-Strom übergeleitet wird. Dann wird noch 1 Stunde unter Vakuum bei 65 hPa gerührt. Während der Kondensation (6 Stunden) werden 1,2 g Destillat abgenommen. Man erhält ein mit 2-Aminoethyl-3-aminopropyl-Seitenketten funktionalisiertes Polysiloxan (Basen-N-Gehalt = 0,56 Gew.-%, Viskosität bei 20°C/100 s⁻¹ = 100 mPas).

150 g des so hergestellten Aminopolysiloxans mit 0,56 Gew.-% Basen-N-Gehalt (60mMol N) werden bei 25°C vorgelegt und 50 g Aceton, 0,68 g Caprolacton (6 mMol) und 5,3 g Maleinsäureanhydrid (54 mMol) zugegeben. Die Mischung wird auf 60°C erwärmt und 2 Stunden bei 60°C gerührt. Der Ansatz wird auf 25°C abgekühlt. Unter Rühren werden 5,46 g Triethylamin (54 mMol) zudosiert. Es wird bei 25°C noch 30 Minuten nachgerührt. Dann werden 19 g Cyclohexanol zugegeben. Bei 25°C werden unter schnellem Rühen 300 g Wasser innerhalb von 3 Stunden zugepumpt.. Die erhaltene Dispersion wird bei 50°C und 900-800 hPa vom Lösemittel befreit. Man erhält eine weiße, feinteilige Emulsion (während der Destillation kein Schaum, Filtration über 100 µm-Sieb).

| | |
|---|---|
| Feststoffgehalt: | 33,6 Gew.-% |
| pH-Wert: | ca. 7 (unverdünnt) |
| mittlere Teilchengröße: | 177 nm |
| Mischbarkeit mit Wasser: | in jedem Verhältnis |
| Viskosität: | 27 mPas (bei 100 sec⁻¹, 20°C) |
| Lagerstabilität: | sehr gut |

### Silicon-Emulsion 6 (Komponente a)) (SIL 6)

700,0 g Trimethylsilyl-terminiertes Polydimethylsiloxan (Viskosität 1000 mm²/s, 25°C) (Handelsprodukt: BAYSILONE^{®} Öl M 1000) werden vorgelegt. Dann werden 24,8 g 2-Aminoethyl-3-aminopropyl-methyl-dimethoxysilan (Dynasilan^{®} 1411, Fa. Hüls) und anschließend 0,43 g Natronlauge (50 %ig) zugegeben. Der Kesselinhalt wird im Verlauf von 2 Stunden auf 115°C erwärmt. Es wird 6 Stunden bei 115°C gerührt, wobei ein leichter N₂-Strom übergeleitet wird. Dann wird noch 1 Stunde unter Vakuum bei 65 hPa gerührt. Während der Kondensation (6 Stunden) werden 1,5 g Destillat abgenommen. Man erhält ein mit 2-Aminoethyl-3-aminopropyl-Seitenketten funktionalisiertes Polysiloxan (Basen-N-Gehalt = 0,45 Gew.-%, Viskosität bei 20°C/100 s⁻¹ = 94 mPas).

500 g des so hergestellten Aminopolysiloxans mit 0,45 Gew.-% Basen-N-Gehalt (160 mMol N) werden bei 25°C vorgelegt und 0,91 g Caprolacton (8 mMol), 100 ppm Dibutylzinndilaurat und 14,9 g Maleinsäureanhydrid (152 mMol) zugegeben. Die Mischung wird auf 60°C erwärmt und 2 Stunden bei 60°C gerührt. Bei 65°C werden unter Rühren 16,7 g Triethylamin (160 mMol) zudosiert und noch 30 Minuten nachgerührt. Dann werden 167 g Isopropanol zugegeben. Bei 55°C werden unter schnellem Rühren 916,6 g Wasser innerhalb von 3 Stunden zugepumpt. Die erhaltene Dispersion wird bei 40-60°C und 185-450 hPa vom Lösemittel befreit (199,4 g Destillat, während der Destillation kein Schaum, Filtration des Produkts über ein 20 µm-Sieb). Man erhält eine weiße, feinteilige Emulsion.

| | |
|---|---|
| Feststoffgehalt: | 36,7 Gew.-% |
| pH-Wert: | ca. 7 (unverdünnt) |
| mittlere Teilchengröße: | 134 nm |
| Mischbarkeit mit Wasser: | in jedem Verhältnis |
| Viskosität: | 19 mPas (bei 100 sec⁻¹, 20°C) |
| Lagerstabilität: | sehr gut |

### Silicon-Emulsion 7 (Komponente a)) (SIL 7)

700,0 g Trimethylsilyl-terminiertes Polydimethylsiloxan (Viskosität 1000 mm²/s, 25°C) (Handelsprodukt: BAYSILONE^{®} Öl M 1000) werden vorgelegt. Dann werden 24,8 g 2-Aminoethyl-3-aminopropyl-methyl-dimethoxysilan (Dynasilan^{®} 1411, Fa. Hüls) und anschließend 0,43 g Natronlauge (50 %ig) zugegeben. Der Kesselinhalt wird im Verlauf von 2 Stunden auf 115°C erwärmt. Es wird 6 Stunden bei 115°C gerührt, wobei ein leichter N₂-Strom übergeleitet wird. Dann wird noch 1 Stunde unter Vakuum bei 65 hPa gerührt. Während der Kondensation (6 Stunden) werden 1,5 g Destillat abgenommen. Man erhält ein mit 2-Aminoethyl-3-aminopropyl-Seitenketten funktionalisiertes Polysiloxan (Basen-N-Gehalt = 0,45 Gew.-%, Viskosität bei 20°C/100 s⁻¹ = 128 mPas).

500 g des so hergestellten Aminopolysiloxans mit 0,45 Gew.-% Basen-N-Gehalt (160 mMol N) werden bei 25°C vorgelegt und 18,4 g Caprolacton (160 mMol), 100 ppm Zinnoctoat und 100 g Aceton zugegeben. Die Mischung wird 12 Stunden bei 62°C gerührt (im IR-Spektrum ist die Carbonyl-Bande des Lactons (bei 1722 cm⁻¹ nicht mehr vorhanden). Dann werden 15,7 g Maleinsäureanhydrid (160 mMol) zugegeben und bei 65°C 2 Stunden gerührt (Anhydrid nicht mehr nachweisbar). Danach werden unter Rühren 16,7 g Triethylamin (160 mMol) zudosiert und noch 30 Minuten nachgerührt. Dann werden 100 g Isopropanol zugegeben. Bei 55°C werden unter schnellem Rühren 916,6 g Wasser innerhalb von 2,5 Stunden zugepumpt. Die erhaltene Dispersion wird bei 50°C und 140-250 hPa vom Lösemittel befreit (212 g Destillat, während der Destillation kein Schaum, Filtration des Produkts über ein 20µm-Sieb). Man erhält eine weiße, feinteilige Emulsion.

| | |
|---|---|
| Feststoffgehalt: | 37,5 Gew.-% |
| pH-Wert: | ca. 7 (unverdünnt) |
| mittlere Teilchengröße: | 412 nm |
| Mischbarkeit mit Wasser: | in jedem Verhältnis |
| Viskosität: | 13 mPas (bei 100 sec⁻¹, 20°C) |
| Lagerstabilität: | sehr gut |

### Silicon-Emulsion 8 (Komponente a) + B₄)) (SIL 8)

700,0 g Trimethylsilyl-terminiertes Polydimethylsiloxan (Viskosität 5000 mm²/s, 25°C) (Handelsprodukt: BAYSILONE^{®} Öl M 5000) werden vorgelegt. Dann werden 24,8 g 2-Aminoethyl-3-aminopropyl-methyl-dimethoxysilan (Dynasilan^{®} 1411, Fa. Hüls) und anschließend 0,43 g Natronlauge (50 %ig) zugegeben. Der Kesselinhalt wird im Verlauf von 2 Stunden auf 115°C erwärmt. Es wird 6 Stunden bei 115°C gerührt, wobei ein leichter N₂-Strom übergeleitet wird. Dann wird noch 1 Stunde unter Vakuum bei 65 hPa gerührt. Während der Kondensation (6 Stunden) werden 1,7 g Destillat abgenommen. Man erhält ein mit 2-Aminoethyl-3-aminopropyl-Seitenketten funktionalisiertes Polysiloxan (Basen-N-Gehalt = 0,45 Gew.-%, Viskosität bei 20°C/100 s⁻¹ = 150 mPas).

500 g des so hergestellten Aminopolysiloxans mit 0,45 Gew.-% Basen-N-Gehalt (160 mMol N) werden bei 25°C vorgelegt und 18,4 g Caprolacton (160 mMol), 100 ppm Zinnoctoat und 100 g Aceton zugegeben. Die Mischung wird 10 Stunden bei 62°C gerührt (im IR-Spektrum ist die Carbonyl-Bande des Lactons (bei 1722 cm⁻¹) nicht mehr vorhanden). Dann werden 15,7 g Maleinsäureanhydrid (160 mMol) zugegeben und bei 65°C 2 Stunden gerührt (Anhydrid nicht mehr nachweisbar). Danach werden unter Rühren 16,7 g Triethylamin (160 mMol) zudosiert und noch 30 Minuten nachgerührt. Dann werden 167 g Isopropanol zugegeben. Bei 55°C werden unter schnellem Rühren 916,6 g Wasser innerhalb von 2,5 Stunden zugepumpt. Es werden 50 g eines Cyanamid-Polyisocyanat-Reaktionsprodukts 1 (PU1) zugegeben. Die erhaltene Dispersion wird bei 50°C und 140-250 hPa vom Lösemittel befreit (295 g Destillat, während der Destillation kein Schaum, Filtration des Produkts über ein 20µm-Sieb). Man erhält eine weiße, feinteilige Emulsion.

| | |
|---|---|
| Feststoffgehalt: | 38,8 Gew.-% |
| pH-Wert: | ca. 7 (unverdünnt) |
| mittlere Teilchengröße: | 118 nm |
| Mischbarkeit mit Wasser: | in jedem Verhältnis |
| Viskosität: | 30 mPas (bei 100 sec⁻¹, 20°C) |
| Lagerstabilität: | sehr gut |

### Silicon-Emulsion 9 (Komponente a) + B₄)) (SIL 9)

524 g Trimethylsilyl-terminiertes Polydimethylsiloxan (Viskosität 1000 mm²/s, 25°C) (Handelsprodukt: BAYSILONE^{®} Öl M 1000) werden vorgelegt. Dann werden 24 g 2-Aminoethyl-3-aminopropyl-methyl-dimethoxysilan (Dynasilan^{®} 1411, Fa. Hüls) und anschließend 0,32 g Natronlauge (50 %ig) zugegeben. Der Kesselinhalt wird im Verlauf von 2 Stunden auf 115°C erwärmt. Es wird 6 Stunden bei 115°C gerührt, wobei ein leichter N₂-Strom übergeleitet wird. Dann wird noch 1 Stunde unter Vakuum bei 65 hPa gerührt. Während der Kondensation (6 Stunden) werden 8 g Destillat abgenommen. Man erhält ein mit 2-Aminoethyl-3-aminopropyl-Seitenketten funktionalisiertes Polysiloxan (Basen-N-Gehalt = 0,56 Gew.-%, Viskosität bei 20°C/100 s⁻¹ = 100 mPas).

Das so hergestellte Aminopolysiloxan wird bei 55°C vorgelegt und mit 13,0g Caprolacton und 100 g Ethylacetat versetzt. Dann werden 0,16 g Dibutylzinndilaurat und 10 g Ethylacetat zugegeben. Die Mischung wird 10 Stunden bei ca. 75°C gerührt (im IR-Spektrum ist die Carbonyl-Bande des Lactons (bei 1722 cm⁻¹) nicht mehr vorhanden). Dann wird das Ethylacetat abdestilliert (ca. 110 g). Nach Abkühlen auf 30-40°C werden 115 g Aceton und 21 g Maleinsäureanhydrid in 20 g Aceton zugegeben und bei 65°C 2 Stunden gerührt (Anhydrid nicht mehr nachweisbar). Danach werden unter Rühren 24 g Triethylamin zudosiert und noch 10 Minuten nachgerührt. Dann werden 270 g Isopropanol zugegeben. Bei 55°C werden unter schnellem Rühren 950 g Wasser innerhalb von 3 Stunden zugepumpt. Nach Zugabe von 0,3 g Respumit S in 50 g Wasser werden 16 g eines Cyanamid-Polyisocyanat-Reaktionsprodukts 5 (PU 5) zugegeben. Die erhaltene Dispersion wird bei 50°C und 140-250 hPA vom Lösemittel befreit (413 g Destillat) und über ein 20 µm-Sieb filtriert. Man erhält eine weiße feinteilige Emulsion.

| | |
|---|---|
| Feststoffgehalt: | 37 Gew.-% |
| pH-Wert: | ca. 7 (unverdünnt) |
| mittlere Teilchengröße: | 200 nm |
| Mischbarkeit mit Wasser: | in jedem Verhältnis |
| Viskosität: | 25 mPas (bei 100 sec⁻¹, 20°C) |
| Lagerstabilität: | sehr gut |

### Silicon-Emulsion 10 (Komponente a) + B₄)) (SIL 10)

524 g Trimethylsilyl-terminiertes Polydimethylsiloxan (Viskosität 5000 mm²/s, 25°C) (Handelsprodukt: BAYSILONE^{®} Öl M 5000) werden vorgelegt. Dann werden 24 g 2-Aminoethyl-3-aminopropyl-methyl-dimethoxysilan (Dynasilan^{®} 1411, Fa. Hüls) und anschließend 0,32 g Natronlauge (50 %ig) zugegeben. Der Kesselinhalt wird im Verlauf von 2 Stunden auf 115°C erwärmt. Es wird 6 Stunden bei 115°C gerührt, wobei ein leichter N₂-Strom übergeleitet wird. Dann wird noch 1 Stunde unter Vakuum bei 65 hPa gerührt. Während der Kondensation (6 Stunden) werden 6 g Destillat abgenommen. Man erhält ein mit 2-Aminoethyl-3-aminopropyl-Seitenketten funktionalisiertes Polysiloxan (Basen-N-Gehalt = 0,56 Gew.-%, Viskosität bei 20°C/100 s⁻¹ = 150 mPas).

Das so hergestellte Aminopolysiloxan wird bei 55°C vorgelegt und mit 13,0g Caprolacton und 100 g Ethylacetat versetzt. Dann werden 0,16 g Dibutylzinndilaurat und 10 g Ethylacetat zugegeben. Die Mischung wird 10 Stunden bei ca. 75°C gerührt (im IR-Spektrum ist die Carbonyl-Bande des Lactons (bei 1722 cm⁻¹) nicht mehr vorhanden). Dann wird das Ethylacetat abdestilliert (ca. 110 g). Nach Abkühlen auf 30-40°C werden 115 g Aceton und 21 g Maleinsäureanhydrid in 20 g Aceton zugegeben und bei 65°C 2 Stunden gerührt (Anhydrid nicht mehr nachweisbar). Danach werden unter Rühren 24 g Triethylamin (160 mMol) zudosiert und noch 10 Minuten nachgerührt. Dann werden 270 g Isopropanol zugegeben. Bei 55°C werden unter schnellem Rühren 950 g Wasser innerhalb von 3 Stunden zugepumpt. Nach Zugabe von 0,3 g Respumit S in 50 g Wasser werden 16 g eines Cyanamid-Polyisocyanat-Reaktionsprodukts 5 (PU 5) zugegeben. Die erhaltene Dispersion wird bei 50°C und 140-250 hPA vom Lösemittel befreit (413 g Destillat) und über ein 20 µm-Sieb filtriert. Man erhält eine weiße feinteilige Emulsion.

| | |
|---|---|
| Feststoffgehalt: | 37 Gew.-% |
| pH-Wert: | ca. 7 (unverdünnt) |
| mittlere Teilchengröße: | 250 nm |
| Mischbarkeit mit Wasser: | in jedem Verhältnis |
| Viskosität: | 35 mPas (bei 100 sec⁻¹, 20°C) |
| Lagerstabilität: | sehr gut |

### Silicon-Emulsion 11 (Komponente a) + B₄)) (SIL 11)

524 g Trimethylsilyl-terminiertes Polydimethylsiloxan (Viskosität 1000 mm²/s, 25°C) (Handelsprodukt: BAYSILONE^{®} Öl M 1000) werden vorgelegt. Dann werden 23,5 g 2-Aminoethyl-3-aminopropyl-methyl-dimethoxysilan (Dynasilan^{®} 1411, Fa. Hüls) und anschließend 0,32 g Natronlauge (50 %ig) zugegeben. Der Kesselinhalt wird im Verlauf von 2 Stunden auf 140°C erwärmt. Es wird 6 Stunden bei 140°C gerührt, wobei ein leichter N₂-Strom übergeleitet wird. Dann wird noch 1 Stunde unter Vakuum bei 65 hPa gerührt. Während der Kondensation (6 Stunden) werden 8 g Destillat abgenommen. Man erhält ein mit 2-Aminoethyl-3-aminopropyl-Seitenketten funktionalisiertes Polysiloxan (Basen-N-Gehalt = 0,52 Gew.-%, Viskosität bei 20°C/100 s⁻¹ = 110 mPas).

Das so hergestellte Aminopolysiloxan wird bei 55°C vorgelegt und mit 12,5 g Caprolacton und 100 g Ethylacetat versetzt. Dann werden 0,16 g Dibutylzinndilaurat und 10 g Ethylacetat zugegeben. Die Mischung wird 10 Stunden bei ca. 75°C gerührt (im IR-Spektrum ist die Carbonyl-Bande des Lactons (bei 1722 cm⁻¹) nicht mehr vorhanden). Dann wird das Ethylacetat abdestilliert (ca. 110 g). Nach Abkühlen auf 30-40°C werden 115 g Aceton und 21,1 g Maleinsäureanhydrid in 20 g Aceton zugegeben und bei 65°C 2 Stunden gerührt (Anhydrid nicht mehr nachweisbar). Danach werden unter Rühren 23,6 g Triethylamin zudosiert und noch 10 Minuten nachgerührt. Dann werden 270 g Isopropanol zugegeben. Bei 55°C werden unter schnellem Rühren 950 g Wasser innerhalb von 3 Stunden zugepumpt. Nach Zugabe von 0,3 g Respumit S in 50 g Wasser werden 16 g eines Cyanamid-Polyhamstoff-Reaktionsprodukts 6 (PU 6) zugegeben. Die erhaltene Dispersion wird bei 50°C und 140-250 hPa vom Lösemittel befreit (500g Destillat) und über ein 20 µm-Sieb filtriert. Man erhält eine weiße feinteilige Emulsion.

Gegebenenfalls wird während des Emulgiervorgangs oder danach mittels eines Strahldispergators (Düsenprinzip), einer Durchflusszelle mit Ultraschall-Sonotrode oder mittels eines High Shear-Mischers (Rotor-Stator-Prinzip) bzw. durch Verwendung eines Hochdruckhomogenisators nachbehandelt, um die Teilchengrösse der Emulsion einzustellen.

| | |
|---|---|
| Feststoffgehalt: | 37 Gew.-% |
| pH-Wert: | ca. 7 (unverdünnt) |
| mittlere Teilchengröße: | 300 nm |
| Mischbarkeit mit Wasser: | in jedem Verhältnis |
| Viskosität: | 25 mPas (bei 100 sec⁻¹, 20°C) |
| Lagerstabilität: | sehr gut |

### Anwendungsbeispiele: Herstellung vom hydrophobiertem Leder

Die Dispersionen wurden als Hilfsmittel zur Herstellung hydrophobierter Leder geprüft. Die folgende Rezeptur eignet sich für hydrophobierte Oberleder.

| | |
|---|---|
| Material: | chromgegerbte Rind-Wet-blue, Narbenleder, enthält 2,5 % Cr₂O₃ |
| Falzstärke: | 2 mm |

Die folgenden %-Angaben beziehen sich jeweils auf das Falzgewicht.

Die Einsatzmengen der Hilfsmittel in der folgenden Rezeptur beziehen sich auf das Wirkstoff-Angebot bzw. den Festgehalt.

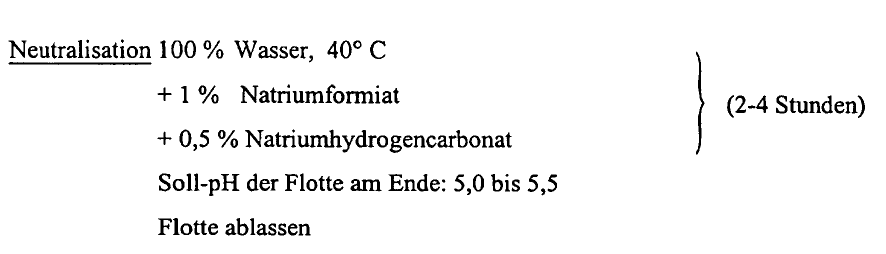

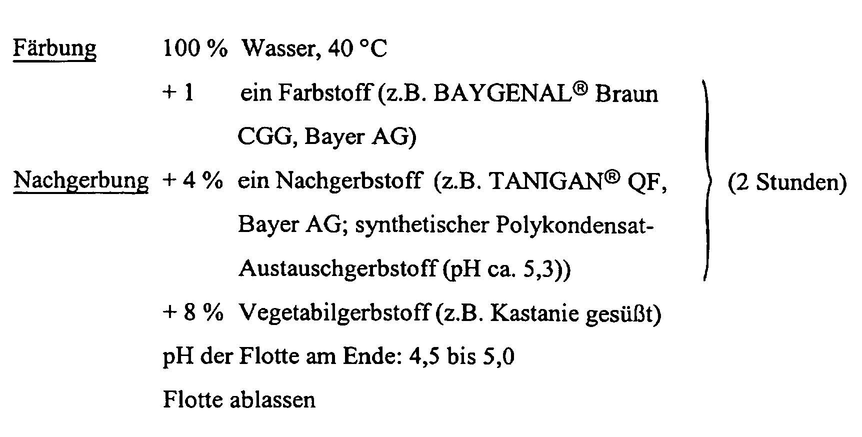

| | | | |
|---|---|---|---|
| Waschen | 200 % Wasser, 50°C | | 10 Minuten |
| | Flotte ablassen | | |
| Hydrophobierung | + 0,2 % NH₄OH (10%ige Lösung) | | 30 Minuten |
| | pH der Flotte 5 bis 6 | | |
| | Flotte ablassen | | |
| | | | |
| | + 100 % Wasser, 50°C | | |
| | + x % Dispersion b) | | |
| | | (Komponente B₁, B₂, B₃ | 3 Stunden |
| | | oder B₄ oder deren Gemische) | |
| | + y % Polysiloxan-Emulsion | | 1 Stunde |
| | | (= Komponente a) oder a) + B₄) | |
| | pH der Flotte am Ende: 4,9 bis 5,0 | | |
| | Flotte ablassen | | |
| | | | |
| Fixierung | + 0,5 % HCOOH | | 0,5 Stunden |
| | pH der Flotte am Ende 3,5-4,0 | | |
| | Flotte ablassen (klar und farblos). | | |
| | | | |
| Fertigstellen | gründlich spülen, Leder über Nacht auf Bock ablegen, ausrecken, hängetrocknen, stollen, vakuumieren (1 Minute bei 70°C). | | |

x% und y% beziehen sich auf die Einsatzmengen, wie in nachstehender Tabelle angegeben.

Es wurden weiche, festnarbige Leder mit angenehmem vollem Griff erhalten. Die Narbenseite war sehr glatt. Die Wasseraufnahme betrug bei dem nach oben beschriebenen Verfahren hergestellten Leder nach 24 Stunden weniger als 30 %.

Zur Bestimmung der Hydrophobwirkung eignen sich folgende Prüfungen:
*1. Wasseraufnahme nach 24 Stunden an einer Lederprobe* [*IUP 7*/*DIN 53330* (*Kubelka-Nemec*)]
*2. Bally-Penetrometer in Anlehnung an DIN 53338*/*IUP 10 der Internationalen Union der Leder-Chemiker-Verbände (s. Das Leder 12 Seite 36 bis 40 (1961))*
*3. Maeser-Test (in Anlehnung an ASTM D 2099-70)*

Besonders geeignet zur Beurteilung der dynamischen Hydrophobwirkung ist der Maeser-Test.

In der folgenden Tabelle sind die Prüfergebnisse bei Einsatz der erfindungsgemäßen Produkte und der Vergleichsprodukte dargestellt (falls nichts anderes angegeben ist, Fixierung mit 0,5 % COOH):

| Bsp. | Probenbezeichnung Komp. b) | x % | Typ der Komponente b) | Probenbezeichnung Komp. a) | y % | Maeser-Flexe | Oberfl. Griff | Griff | Fülle | Egalität |
|---|---|---|---|---|---|---|---|---|---|---|
| 1 | PAC 4 | 4 | B1 +B3 | SIL 1 | 2 | >44000 | 5 | 5 | 5 | 5 |
| 2 | PAC 3 | 4 | B1 +B3 | SIL 1 | 2 | 46000 | 5 | 5 | 5 | 5 |
| 3 | PAC 3 | 4 | B1 +B3 | SIL 2 | 1 | >55000 | 5 | 5 | 5 | 5 |
| 4 | PAC 3 | 4 | B1 +B3 | SIL 2 | 1,5 | >140000 | 5 | 5 | 5 | 5 |
| 5 | PAC 3 | 4 | B1 +B3 | SIL 2 | 2 | >140000 | 5 | 5 | 5 | 5 |
| 6 | PAC 3 | 4 | B1 + B3 | SIL 3* | 1 | >140000 | 5 | 5 | 5 | 5 |
| 7 | PAC 3 | 4 | B1 +B3 | SIL 3- | 2 | >140000 | 5 | 5 | 5 | 5 |
| 8 | PAC 3 | 4 | B1 +B3 | SIL 4 | 2 | >140000 | 5 | 5 | 5 | 5 |
| 9¹⁾ | ohne | 0 | - | SIL 2 | 2 | 22600 | 4 | 3 | 2 | 2 |
| 10¹⁾ | ohne | 0 | - | SIL 3* | 2 | >52500 | 3 (Si) | 3 | 2 | 2 |
| 11¹⁾ | PAC 1 | 4 | B1 | Ohne | 0 | 1380 | 5 | 4 | 2 | 5 |
| 12¹⁾ | PAC 2 | 4 | B1 + B3 | Ohne | 0 | 2200 | 5 | 5 | 5 | 5 |
| 13¹⁾ | PAC 3 | 4 | B1 + B3 | Ohne | 0 | 3300 | 5 | 5 | 5 | 5 |
| 14¹⁾ | PAC 4 | 4 | B1 + B3 | Ohne | 0 | 2500 | 5 | 4 | 5 | 5 |
| 15¹⁾ | Lubritan^{®} WP | 4 | B1 | Ohne | 0 | 900 | 5 | 5 | 5 | 4 |
| 16¹⁾ | Leukotan^{®} XE | 4 | B1 | Ohne | 0 | 150 | 5 | 5 | 4 | 4 |
| V1 | Densodrin^{®} EN | 8 | - | Vergleich | 2 | 10800 | 3 | 3 | 4 | 3 |
| V2 | Densodrin^{®} EN | 8 | - | Vergleich | 2 | 31000 | 5 | 5 | 5 | 4 |
| 17¹⁾ | PAS 1 | 4 | B2 | SIL 3* | 2 | >45000 | 5 | 5 | 4 | 5 |
| 18 | PAC 3 | 4 | B1 +B3 | SIL 5 | 2 | >68000 | 5 | 5 | 5 | 5 |
| 19 | PAC 4 | 4 | B1 +B3 | SIL 5 | 2 | >55000 | 5 | 5 | 5 | 5 |
| 20¹⁾ | ohne | 0 | - | SIL 5 | 2 | >60000 | 3 | 4 | 4 | 3 |
| 21 | PAC 1 | 4 | B1 | SIL 1 | 2 | >49000 | 5 | 5 | 5 | 5 |
| 22 | PAC 3 | 4 | B1 + B3 | SIL 6 | 2 | >48000 | 5 | 5 | 5 | 5 |
| 23 | PAC 3 | 4 | B1 + B3 | SIL 7 | 2 | 33600 | 5 | 5 | 5 | 5 |
| 24 | PAC 3 | 4 | B1 + B3 | SIL 8** | 2 | >48000 | 5 | 5 | 5 | 5 |
| 25 | PAC 6 | 4 | B1 + B3 | SIL 9*** | 2 | >45000 | 5 | 5 | 5 | 5 |
| 26 | PAC 6 | 4 | B1 + B3 | SIL 10*** | 2 | >50000 | 5 | 5 | 5 | 5 |
| 27 | PAC 6 | 4 | B1 + B3 | SIL 11*** | 2 | >70000 | 5 | 5 | 5 | 5 |

| | | | | | | | | | | |
|---|---|---|---|---|---|---|---|---|---|---|
| ¹⁾ : Vergleichsbeispiele * SIL 3 = Komponente a) + B4 ** SIL 8 = Komponente a) + B4 *** SIL 9 bis SIL11 = Komponente a) + B4 V1 (= Vergleichsbeispiel 1): 8 % Densodrin^{®} EN + 2 % Siloxan-Emulsion gemäß Bsp. 5 der DE 196 46 916 V2 (= Vergleichsbeispiel 2): wie V1, jedoch statt 0,5 % HCOOH mit 2 % Chrom(III)-Sulfat (CHROMOSAL^{®} B, Bayer AG) (33 % Basizität) fixiert. | | | | | | | | | | |

Man erkennt, dass mit dem erfindungsgemäßen Verfahren Leder erhalten werden, die den Stand der Technik hinsichtlich Hydrophobie, ausgedrückt als Anzahl der Knickungen im Maeser-Test und hinsichtlich Weichheit, Oberfächengriff und Farbegalität übertreffen oder zumindest erreichen. Besonderer Vorteil des erfindungsgemäßen Hydrophobiermittelsystems ist, dass das hohe Eigenschaftsniveau auch ohne eine Fixierung mit Mineralsalzen erzielt wird. Durch den Zusatz der Komponente B4 wird außerdem die Permanenz, d.h. Waschbeständigkeit, und die Lagerstabilität verbessert. Eine Anwendung von Chromsalzen beispielsweise bringt keine zusätzlichen Vorteile mehr gegenüber einer Fixierung mit Ameisensäure. Bei den bekannten Hydrophobiermitteln wird eine Chromfixierung zur Erreichung hoher Hydrophobwerte immer empfohlen.

Es ist auch vorteilhaft, der Behandlungsflotte, die die Silicon-Emulsion enthält, zusätzlich bei der Anwendung im Fass Polyisocyanat-Addukte zuzusetzen, insbesondere solche, die mit den Carboxylgruppen der Silicon-Komponente reagieren können, wie beispielsweise insbesondere Carbodiimid-Funktionen aufweisende Produkte wie BAYDERM^{®} Fix PCL oder Polyisocyanate wie BAYDERM^{®} Fix CIN oder AQUADERM^{®} XL 50.

Außerdem zeichnen sich die mit dem erfindungsgemäßen Hydrophobiermittelsystem behandelten Leder durch eine bessere Zurichtbarkeit und Wasserdampfdurchlässigkeit gegenüber den Ledern aus, die mit Hydrophobiermitteln nach dem Stand der Technik hergestellt wurden.

Insbesondere ist die Haftung der aufzubringenden Zurichtungsprodukte auf organischer oder wässriger Basis (BAYDERM^{®} Vorgrund APV, dann zum Beispiel BAYDERM^{®} Finish 65UD oder BAYDERM^{®} Finish DLF) nach dem Trocknen der Beschichtungen deutlich besser als nach dem Stand der Technik. Vor allem Polyurethan-Dispersionen, die als Grundierungen eingesetzt werden, zeigen gegenüber dem erfindungsgemäßen Hydrophobiermittelsystem überraschend eine verbesserte Affinität. Dadurch wird insgesamt ein wesentlich verbesserter Verbund zwischen Lederoberfläche und den aufgetragenen Zurichtfilmen erzielt.

Ein weiterer Vorteil ist, dass die Einsatzmengen des erfindungsgemäßen Hydrophobiermittelsystems sehr gering sind, so dass die Wasserdampfdurchlässigkeit der ausgerüsteten Leder und somit die Atmungsaktivität des gesamten Substrats nicht beeinträchtigt wird.

## Patentansprüche

1. Hydrophobiermittelsystem enthaltend
a) ein Carboxylgruppen-haltiges Polysiloxan, das **dadurch gekennzeichnet ist,**
**dass** die Polysiloxankette mindestens eine Struktureinheit der Formel (1)
[A Rₐ Si O_{(3-a)/2}] ₖ (1)
und/oder mindestens eine Struktureinheit der Formel (2)
[ R_{c} Si O_{(4-c)/2}]ₙ (2)
und gegebenenfalls mindestens eine Endgruppe ausgewählt aus den Formeln
R₃SiO_{1/2} (3)
und
AR₂SiO_{1/2} (3a)
enthält, wobei
A für einen carboxylgruppen-haltigen Rest der Formel 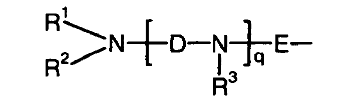 steht, in der
R¹, R² und R³ unabhängig voneinander für Wasserstoff oder für einen einwertigen C₂-C₆₀-Kohlcnwasserstoffrest stehen, der gegebenenfalls eine oder mehrere nicht benachbarte Ether-, Imino-, Amid-, Harnstoff-, Urethan-, Ester- oder Carboxylgruppen enthält und der gegebenenfalls mit einer oder 2 Carboxylgruppen -COOM und/oder 1 oder 2 Hydroxylgruppen substituiert ist, und wobei der Rest A mindestens mit einer Gruppe COOM substituiert ist
wobei
M für Wasserstoff oder Na⁺, K⁺, Li⁺, NH⁺4, 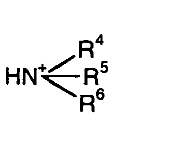 steht,
wobei R⁴, R⁵ und R⁶ unabhängig voneinander für C₁-C₁₈- Alkyl, insbesondere C₁-C₄-Alkyl oder substituiertes C₁- C₁₈-Alkyl, insbesondere Hydroxyalkyl, oder Aralkyl, insbesondere Benzyl, stehen,
und wobei R¹ bis R³ unabhängig voneinander über eine Einfachbindung, eine Gruppe -COO-, -CO- oder -CONH- mit dem Stickstoffatom verknüpft sind, und
wobei R¹ und R² nicht gleichzeitig für H stehen und auch nicht gleichzeitig über eine Carbonylgruppe mit dem Stickstoffatom verknüpft sind,
D und E unabhängig voneinander für einen zweiwertigen C₂-C₂₀-Kohlenwasserstoffrest stehen, der durch Hydroxyl substituiert oder durch nicht benachbarte O-Atome unterbrochen sein kann,
q für 0 bis 3 steht,
R für einen C₁ bis C₁₂-Alkylrest oder einen Phenylrest steht,
a für 0 oder 1 steht,
k für 0 bis 50 steht
c für 1 oder 2 steht, und
n für 10 bis 1000 steht,
mit der Maßgabe, dass mindestens eine Endgruppe der Formel (3a) vorhanden ist für den Fall, dass die Polysiloxankette nur Struktureinheiten der Formel (2) enthält, und
b) wenigstens eine Komponente aus der Gruppe B₁ bis B₄,
wobei
B₁ ein anionisches Copolymerisat ist,
B₂ Polyasparaginsäure oder ein Derivat davon ist,
B₃ ein Paraffin ist und
B₄ ein Isocyanat-Additionsprodukt ist,
wobei als Komponente b) mindestens eine Komponente B₁ enthalten ist, bei der es sich um ein anionisches Copolymerisat handelt, hergestellt durch radikalisch initiierte Copolymerisation von (jeweils bezogen auf Monomergemisch)
α) 10-90 Mol-% des Esters einer monoethylenisch ungesättigten C₃- C₅-Carbonsäure auf Basis eines Alkohols mit 4 bis 40 C-Atomen
β) 90-10 Mol-% einer monoethylenisch ungesättigten Carbonsäure
γ) 0-20 Mol-% eines monoethylenisch ungesättigten C₄-C₆- Dicarbonsäureanhydrids
δ) 0-30 Mol-% eines C₂-C₈-Olefins (Isobuten, Diisobutylen) und
ε) 0-10 Mol-% eines weiteren Comonomers aus der Gruppe Styrol, alpha-Methylstyrol, Vinylester von C₁ -C₈-Carbonsäuren
und gegebenenfalls anschließende partielle Umsetzung der Anhydridgruppen mit einem primären oder sekundären C₁-C₄₀-Alkohol und/oder einem primären oder sekundären Amin mit einem oder zwei C₁- C₁₈-Alkyl-oder Alkenylresten, mit der Maßgabe, dass mindestens 20 Mol- % der den Anhydridgruppen entsprechenden Carboxylgruppen nicht mit Alkohol und/oder Amin umgesetzt werden, sondern mit einer Base neutralisiert werden,
wobei wenigstens 50 Mol % der Carboxylgruppen neutralisiert werden.

2. Hydrophobiermittelsystem gemäss Anspruch 1, **dadurch gekennzeichnet, dass** in Formel (1) in der Bedeutung von A die Reste R¹ bis R³ unabhängig voneinander für 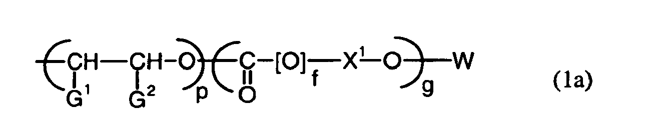 stehen, worin
G¹ und G² unabhängig voneinander für H oder CH₃ stehen,
X¹ für einen zweiwertigen Kohlenwasserstoffrest mit 2 bis 30 C-Atomen steht,
W für H oder die Gruppe 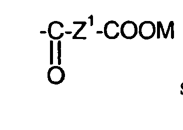 steht, wobei
Z¹ für einen zweiwertigen Kohlenwasserstoffrest mit 1 bis 20 C- Atomen steht und
M die obengenannte Bedeutung hat,
p für 0 bis 5 steht,
f für 0 oder 1 steht,
g für 0 bis 3 steht,
oder für 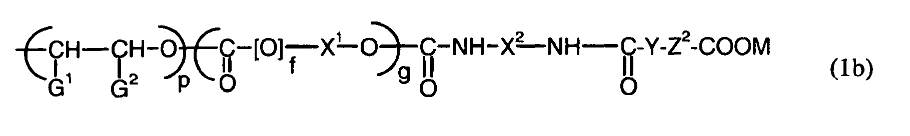 stehen, worin
G¹, G², X¹, W, p, f, g und M die obengenannte Bedeutung haben und
X² für einen zweiwertigen Kohlenwasserstoffrest mit 2 bis 20 C-Atomen steht,
Z² für einen zweiwertigen Kohlenwasserstoffrest mit 1 bis 20 C-Atomen steht, der gegebenenfalls durch eine weitere Gruppe -COOM, -NH₂, -OH substituiert sein kann, wobei M die obengenannte Bedeutung hat, und
Y für -O-, -NH-, -N(C₁₋₄-Alkyl)- steht, oder für
-Z³-COOM (1c)
stehen, worin
Z3 für einen Alkylenrest mit 1 bis 10 Kohlenstoffatomen steht, der gegebenenfalls durch eine weitere Gruppe -COOM substituiert sein kann, und
M die obengenannte Bedeutung hat.

3. Hydrophobiermittelsystem gemäss wenigstens einem der Ansprüche 1 oder 2, **dadurch gekennzeichnet, dass** es sich bei der Komponente B₂ um ein Polyasparaginsäure-Derivat mit einem als Zahlenmittel bestimmten Molekulargewicht von 700 bis 30 000, vorzugsweise 1 300 bis 16 000, erhältlich durch Umsetzung von
B2-A) Polysuccinimid mit einem als Zahlenmittel bestimmten Molekulargewicht von 500 bis 10 000, vorzugsweise 500 bis 6 000, insbesondere 1 000 bis 4 000, erhältlich durch Umsetzung von Maleinsäureanhydrid und NH₃-Lösung und anschließende Kondensation, mit
B2-B) 5 bis 90, vorzugsweise 20 bis 80 Mol-%, bezogen auf Succinimideinheiten des Polysuccinimids, primärem und/oder sekundärem Amin, dessen Stickstoffsubstituenten 1 bis 60, vorzugsweise 1 bis 36 Kohlenstoffatome enthalten, die durch Hydroxyreste substituiert und/oder durch Sauerstoffatome unterbrochen sein können, wobei mindestens 2,5 Mol-%, vorzugsweise mindestens 15 Mol-%, insbesondere mindestens 30 Mol-% der Stickstoffsubstituenten des Amins mindestens 12 Kohlenstoffatome enthalten, und
B2-C) mit 95 bis 10 Mol-%, vorzugsweise 80 bis 20 Mol-% ringöffnender Base in Gegenwart von Wasser, handelt.

4. Hydrophobiermittelsystem gemäss wenigstens einem der Ansprüche 1 bis 3, **dadurch gekennzeichnet, dass** es sich bei der Komponente B₃ um einen paraffinischen Kohlenwasserstoff, der gegebenenfalls durch Hydroxyl und/oder Carboxylgruppen substituiert sein kann, handelt.

5. Hydrophobiermittelsystem gemäss wenigstens einem der Ansprüche 1 bis 4, **dadurch gekennzeichnet, dass** es sich bei der Komponente B₄ um ein Umsetzungsprodukt aus
B₄-a) einem organischen Polyisocyanat
B₄-b) pro Äquivalent in B₄-a) enthaltenem NCO oder latentem NCO 0,0 bis 0,9 Äquivalente C₆-C₂₄, vorzugsweise C₁₂-C₁₈-Alkohol,
B_{4-c}) pro Äquivalent in B₄₋ₐ) enthaltenem NCO oder latentem NCO 0,1 bis 1,0 Mol Cyanamid und
B_{4-d}) Ammoniak oder flüchtigem Amin als Neutralisationsmittel für die Cyanamidgruppen, wobei die Umsetzungsprodukte frei von Polyester-oder Polyethergruppen und frei von Halogenatomen sind, handelt.

6. Hydrophobiermittelsystem gemäss wenigstens einem der Ansprüche 1 bis 4, **dadurch gekennzeichnet, dass** es sich bei der Komponente B₄ um einen anionisch modifizierten Polyharnstoff auf Basis von
I.a) organischen Polyisocyanaten und
II. polyfunktionellen NCO-reaktiven Verbindungen aus der Reihe
b) Polyhydroxylverbindungen,
c) Polyamine,
d) Aminoalkohole und gegebenenfalls
m. monofunktionellen NCO-reaktiven Verbindungen e) und gegebenenfalls
IV. Wasser f) handelt,
der in der Polymerkette eingebaute anionische N-Cyanaminocarbonylharnstoffgruppen der Formel 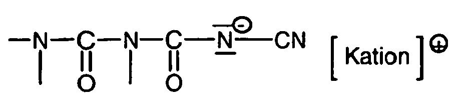 und gegebenenfalls endständige anionische Cyanharnstoffgruppen der Formel 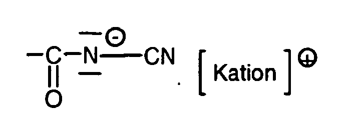 enthält, wobei das Verhältnis von in die Polymerkette eingebauten Gruppen zu endständigen Gruppen mehr als 1 : 1 beträgt und wobei [Kation]⁺ für ein Alkali-oder gegebenenfalls subsituiertes Ammoniumion steht.

7. Hydrophobiermittelsystem gemäss Ansprüchen 1 und 2, enthaltend als b) eine Mischung aus mindestens einer Komponente B₁ gemäss Anspruch 1 und mindestens einer Komponente B₃ gemäss Anspruch 4.

8. Hydrophobiermittelsystem gemäss Ansprüchen 1 und 2 enthaltend als b) mindestens eine Komponente B₄ gemäss Ansprüchen 5 bis 6.

9. Hydrophobiermittelsystem nach Anspruch 1, worin
worin A A¹ ist und für einen Rest aus der Gruppe 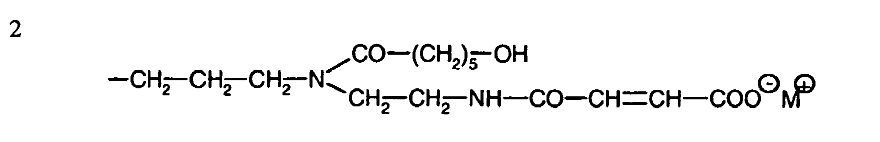 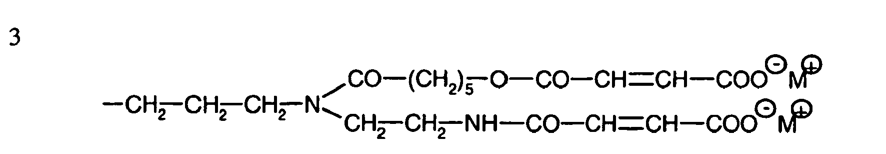 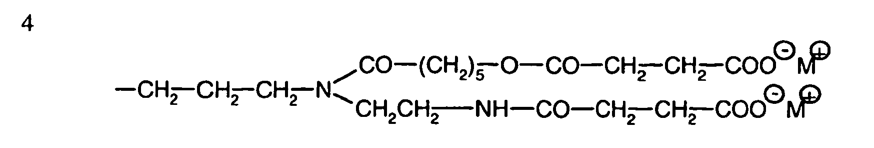 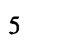 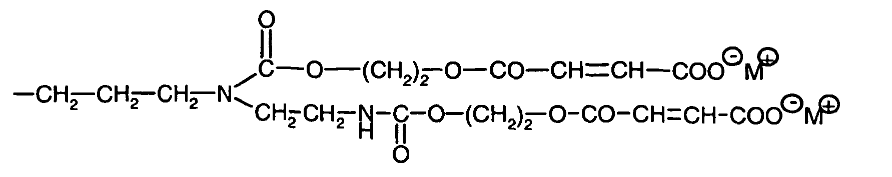 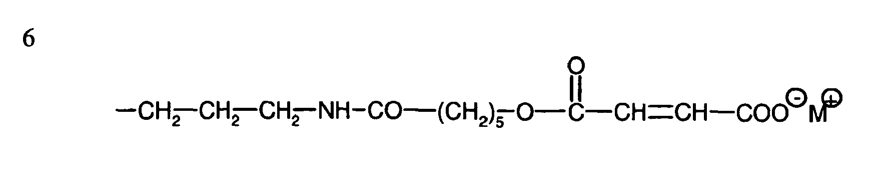 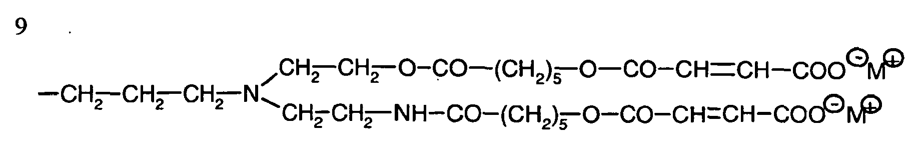 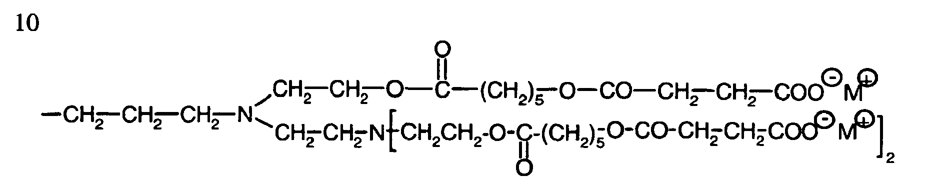 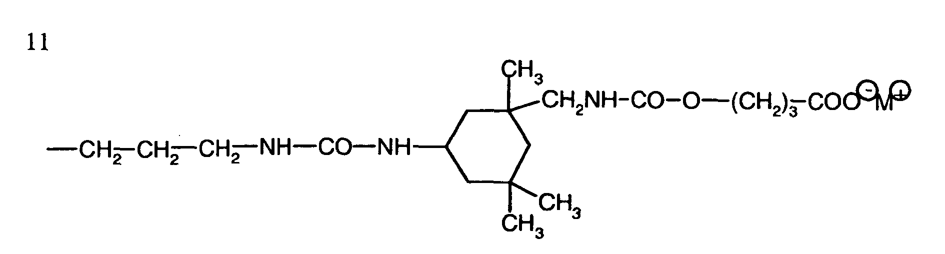 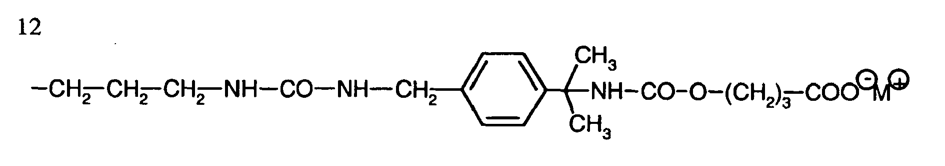 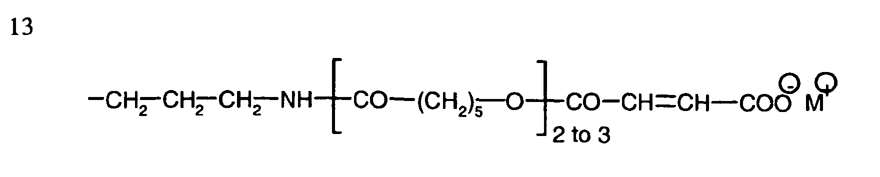 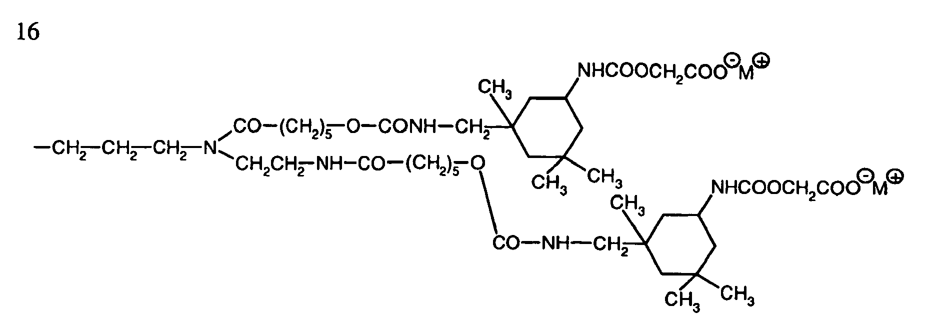 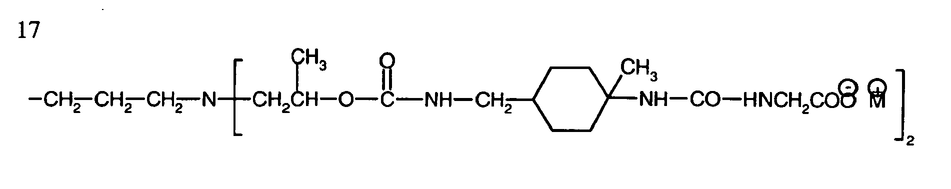 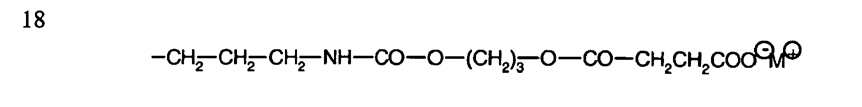 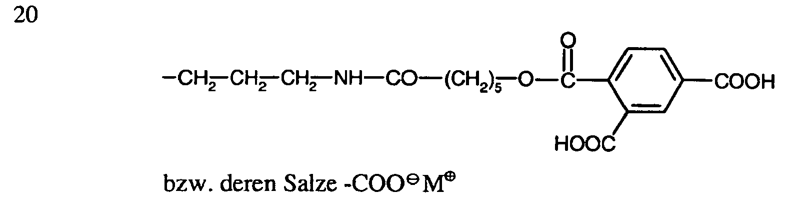 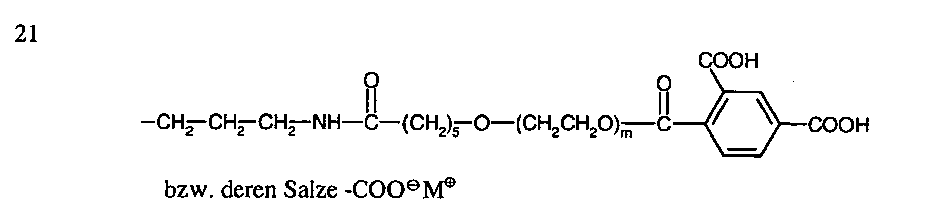 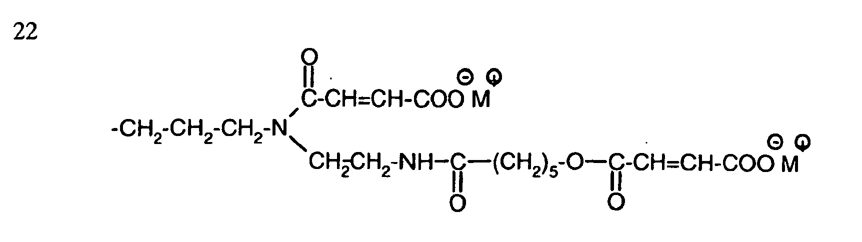 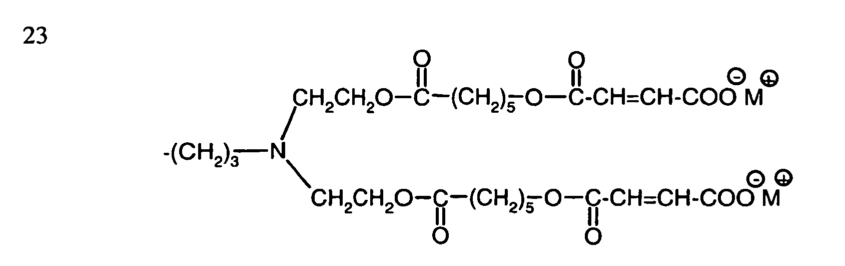 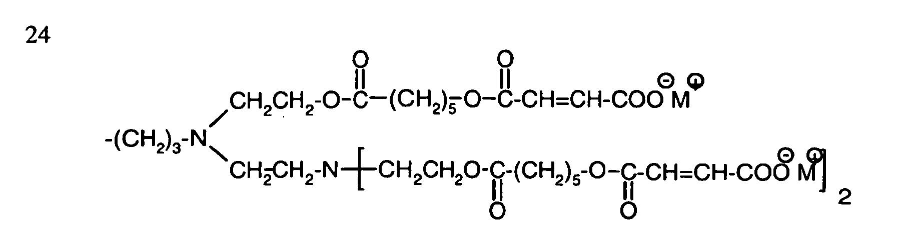 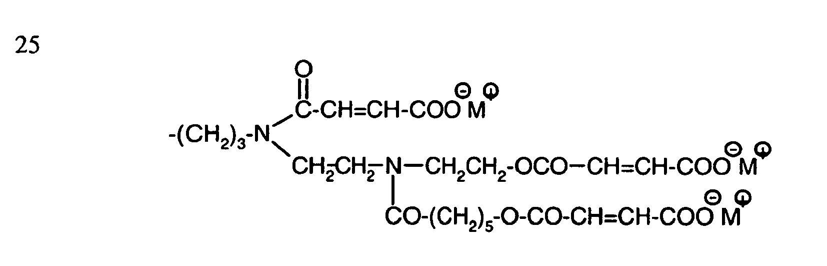 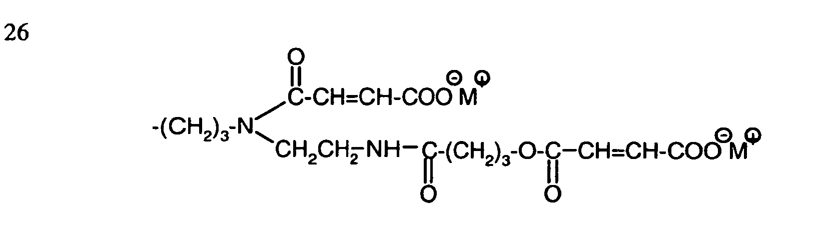 steht, wobei
M, R, a, c und k die in Anspruch 1 angegebene Bedeutung haben,

10. Verfahren zur Hydrophobierung von Substraten, **dadurch gekennzeichnet, dass** man das Substrat mit einem Hydrophobiermittelsystem gemäss mindestens einem der Ansprüche 1 bis 9 behandelt.

11. Substrate, hydrophobiert mit mindestens einem Hydrophobiermittelsystem gemäss mindestens einem der Ansprüche 1 bis 9.

12. Verwendung der Hydrophobiermittelsysteme gemäss wenigstens einem der Ansprüche 1 bis 9 zur Hydrophobierung von Leder und/oder Pelzen.

## Claims

1. Water-repellent system containing
a) a polysiloxane containing carboxyl groups, which is **characterized in**
**that** the polysiloxane chain contains at least one structural unit of the formula (1)
[A Rₐ Si O_{(3-a)/2}]ₖ (1)
and/or at least one structural unit of the formula (2)
[R_{c}SiO_{(4-c)/2}]ₙ (2)
and optionally at least one terminal group selected from the formulae
R₃SiO_{1/2} (3)
and
AR₂SiO_{1/2} (3a),
A representing a radical containing carboxyl groups and of the formula 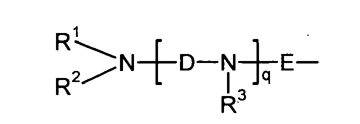 in which
R¹, R² and R³, independently of one another, represent hydrogen or represent a monovalent C₂-C₆₀-hydrocarbon radical which optionally contains one or more non-neighbouring ether, imino, amido, urea, urethane, ester or carboxyl groups and which is optionally substituted by one or 2 carboxyl groups - COOM and/or 1 or 2 hydroxyl groups, and
the radical A being substituted at least by one group COOM,
M representing hydrogen or Na⁺, K⁺, Li⁺, 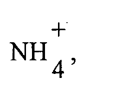 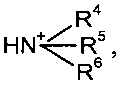 R⁴, R⁵ and R⁶, independently of one another, representing C₁-C₁₈-alkyl, in particular C₁-C₄-alkyl, or substituted C₁- C₁₈-alkyl, in particular hydroxyalkyl, or aralkyl, in particular benzyl,
and R¹ to R³, independently of one another, being linked to the nitrogen atom via a single bond, or a group -COO-, -CO- or -CONH-, and
R¹ and R² not simultaneously representing H and also not simultaneously being linked to the nitrogen atom via a carbonyl group,
D and E, independently of one another, represent a divalent C₂-C₂₀- hydrocarbon radical which may be substituted by hydroxyl or interrupted by non-neighbouring O atoms,
q represents 0 to 3,
R represents a C₁- to C₁₂-alkyl radical or a phenyl radical,
a represents 0 or 1,
k represents 0 to 50,
c represents 1 or 2 and
n represents 10 to 1000,
with the proviso that at least one terminal group of the formula (3a) is present where the polysiloxane chain contains only structural units of the formula (2), and
b) at least one component from the group B₁ to B₄,
B₁ being an anionic copolymer,
B₂ being polyaspartic acid or a derivative thereof,
B₃ being a paraffin and
B₄ being an isocyanate adduct,
there being present as component b) at least one the component B₁ which is an anionic copolymer prepared by free radical copolymerization of (based in each case on monomer mixture)
α) 10-90 mol % of the ester of a monoethylenically unsaturated C₃-C₅-carboxylic acid based on an alcohol having 4 to 40 carbon atoms
β) 90-10 mol % of a monoethylenically unsaturated carboxylic acid
γ) 0-20 mol % of a monoethylenically unsaturated C₄-C₆-dicarboxylic anhydride
δ) 0-30 mol % of a C₂-C₈-olefin (isobutene, diisobutylene) and
ε) 0-10 mol % of a further comonomer from the group consisting of styrene, alpha-methylstyrene and vinyl esters of C₁-C₈-carboxylic acids
and optionally subsequent partial reaction of the anhydride groups with a primary or secondary C₁-C₄₀-alcohol and/or a primary or secondary amine having one or two C₁-C₁₈-alkyl or alkenyl radicals, with the proviso that at least 20 mol % of the carboxyl groups corresponding to the anhydride groups are not reacted with alcohol and/or amine but are neutralized with a base,
at least 50 mol % of the carboxyl groups being neutralized.

2. Water-repellent system according to Claim 1, **characterized in that**, in formula (1), in the meaning of A, the radicals R¹ to R³, independently of one another, represent 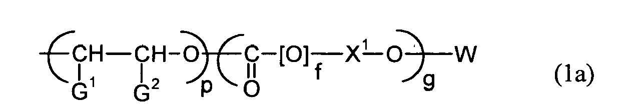 in which
G¹ and G², independently of one another, represent H or CH₃,
X¹ represents a divalent hydrocarbon radical having 2 to 30 carbon atoms,
W represents H or the group 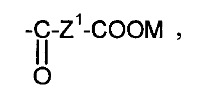
Z¹ representing a divalent hydrocarbon radical having 1 to 20 carbon atoms and
M having the above-mentioned meaning,
p represents 0 to 5,
f represents 0 or 1,
g represents 0 to 3,
or represent 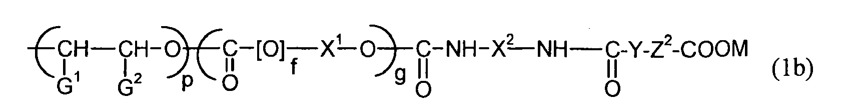 in which
G¹, G², X¹, W, p, f, g and M have the above-mentioned meaning and
X² represents a divalent hydrocarbon radical having 2 to 20 carbon atoms,
Z² represents a divalent hydrocarbon radical having 1 to 20 carbon atoms which may optionally be substituted by a further group - COOM, -NH₂ or -OH, M having the above-mentioned meaning, and
Y represents -O-, -NH- or -N(C₁₋₄-alkyl)-, or represent
-Z³-COOM (1c)
in which
Z³ represents an alkylene radical having 1 to 10 carbon atoms which may optionally be substituted by a further group -COOM, and
M has the above-mentioned meaning.

3. Water-repellent system according to at least one of Claims 1 and 2, **characterized in that** the component B₂ is a polyaspartic acid derivative having a molecular weight, determined as the number average, of 700 to 30000, preferably 1300 to 16000, obtainable by reacting
B2-A) polysuccinimide having a molecular weight, determined as the number average, of 500 to 10000, preferably 500 to 6000, in particular 1000 to 4000, obtainable by reaction of maleic anhydride and NH₃ solution and subsequent condensation, with
B2-B) 5 to 90, preferably 20 to 80, mol %, based on succinimide units of the polysuccinimide, of primary and/or secondary amine whose nitrogen substituents contain 1 to 60, preferably 1 to 36, carbon atoms which may be substituted by hydroxyl radicals and/or interrupted by oxygen atoms, at least 2.5 mol %, preferably at least 15 mol %, in particular at least 30 mol %, of the nitrogen substituents of the amine containing at least 12 carbon atoms, and
B2-C) with 95 to 10 mol %, preferably 80 to 20 mol %, of ring-opening base in the presence of water.

4. Water-repellent system according to at least one of Claims 1 to 3, **characterized in that** the component B₃ is a paraffinic hydrocarbon which may optionally be substituted by hydroxyl and/or carboxyl groups.

5. Water-repellent system according to at least one of Claims 1 to 4, **characterized in that** the component B₄ is a reaction product of
B₄-a) an organic polyisocyanate
B₄-b) 0.0 to 0.9 equivalent of C₆-C₂₄-alcohol, preferably C₁₂-C₁₈-alcohol, per equivalent of NCO or latent NCO contained in B₄-a),
B₄-c) 0.1 to 1.0 mol of cyanamide per equivalent of NCO or latent NCO contained in B₄-a) and
B₄-d) ammonia or volatile amine as neutralizing agent for the cyanamide groups, the reaction products being free of polyester or polyether groups and free of halogen atoms.

6. Water-repellent system according to at least one of Claims 1 to 4, **characterized in that** the component B₄ is an anionically modified polyurea based on
I.a) organic polyisocyanates and
II. polyfunctional NCO-reactive compounds from the series consisting of
b) polyhydroxy compounds
c) polyamines
d) aminoalcohols and optionally
III. monofunctional NCO-reactive compounds e) and optionally
IV. water f),
which contains anionic N-cyanaminocarbonylurea groups of the formula 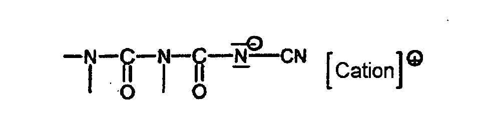 which are incorporated in the polymer chain and optionally terminal anionic cyanourea groups of the formula 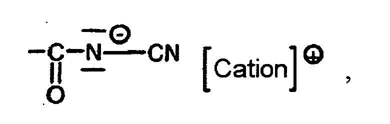 the ratio of groups incorporated into the polymer chain to terminal groups being more than 1:1 and [Cation]⁺ representing an alkali metal ion or optionally substituted ammonium ion.

7. Water-repellent system according to Claims 1 and 2, containing, as b), a mixture of at least one component B₁ according to Claim 1 and at least one component B₃ according to Claim 4.

8. Water-repellent system according to Claims 1 and 2, containing, as b), at least one component B₄ according to Claims 5 to 6.

9. Water-repellent system according to Claim 1, in which
A is A¹ and represents a radical from the group consisting of 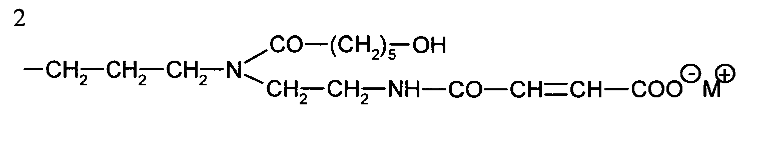 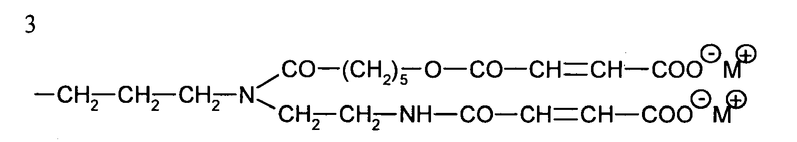 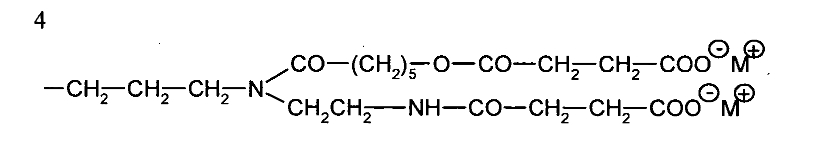 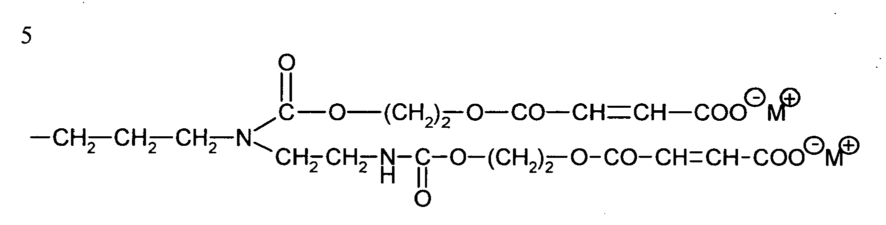 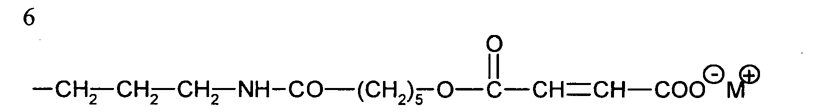 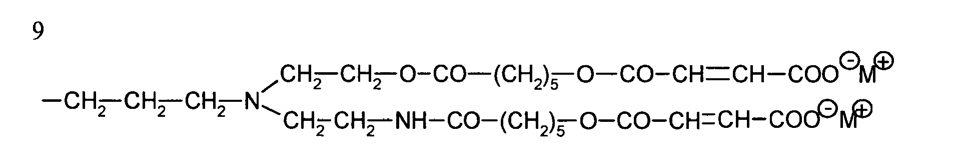 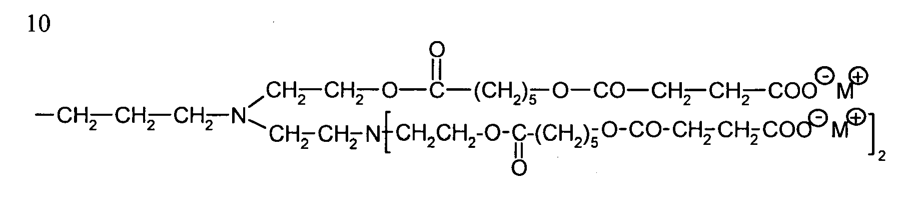 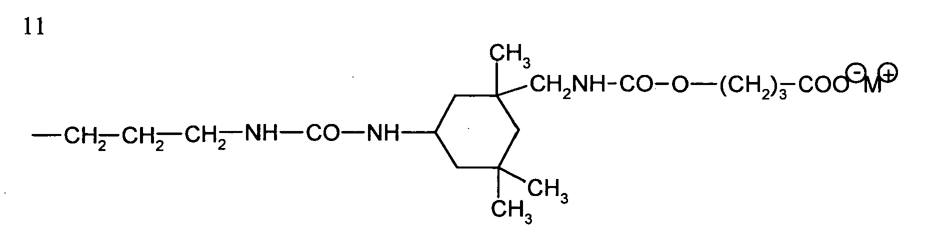 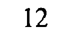 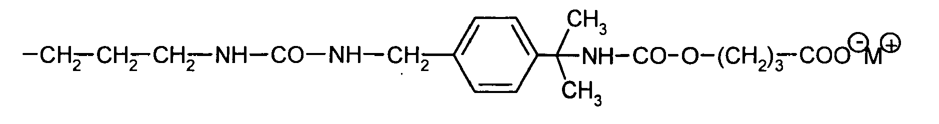 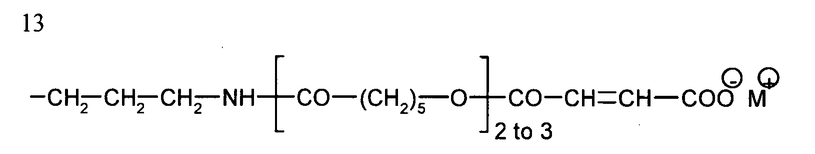 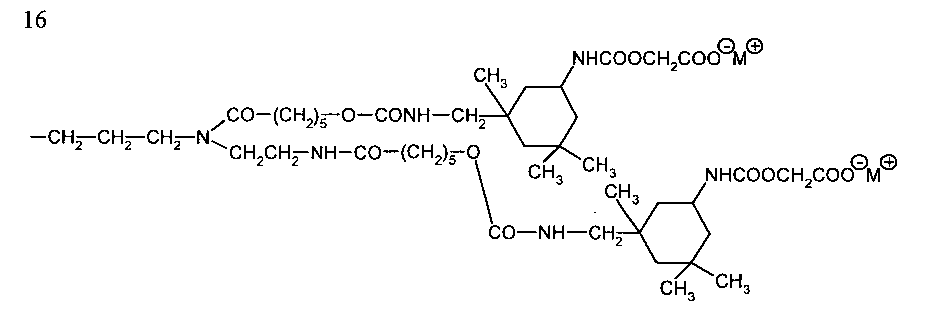 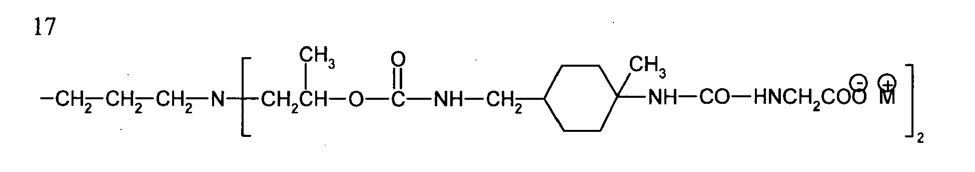 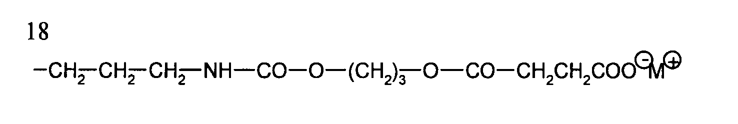 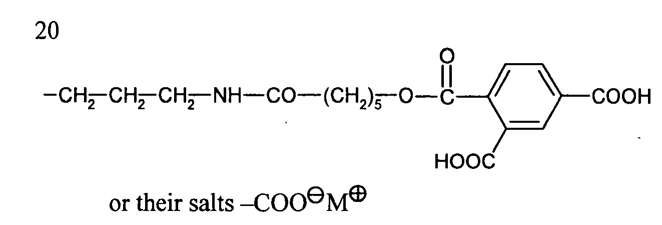 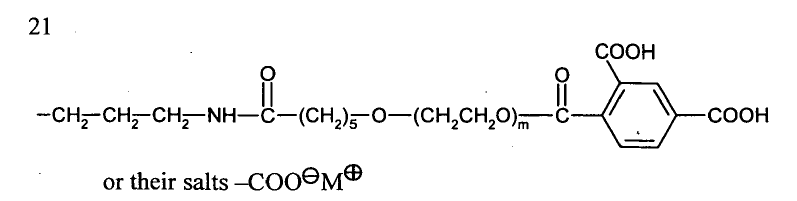 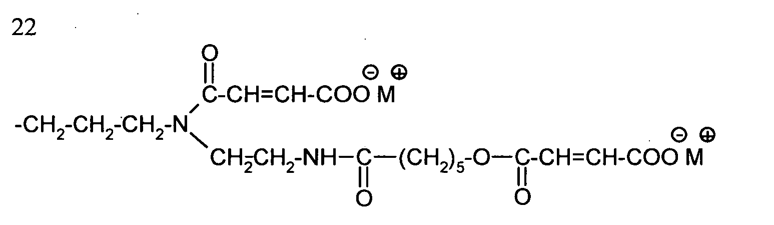 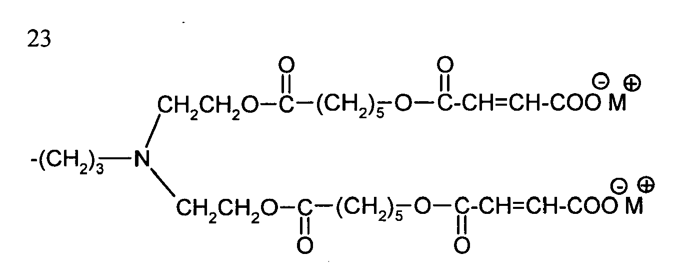 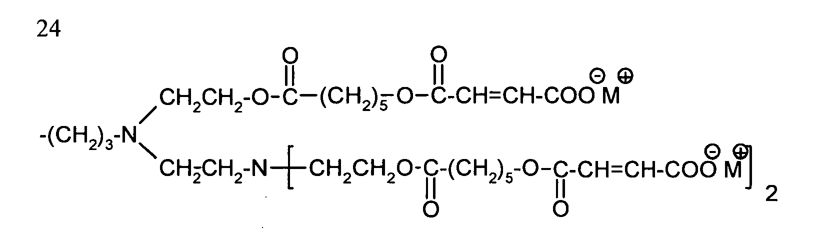 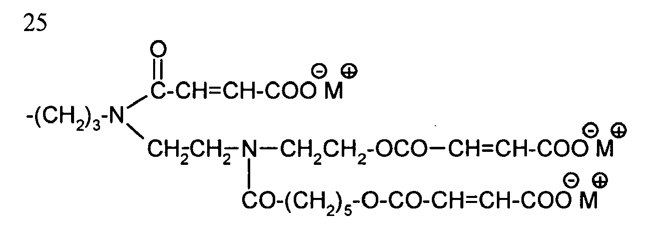 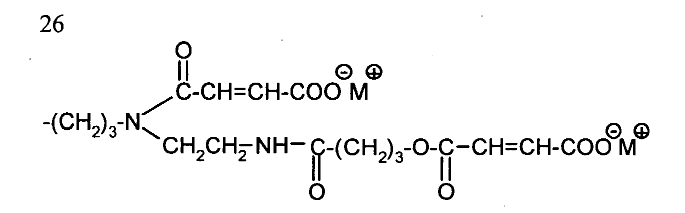
M, R, a, c and k having the meaning stated in Claim 1.

10. Process for imparting water repellency to substrates, **characterized in that** the substrate is treated with a water-repellent system according to at least one of Claims 1 to 9.

11. Substrate rendered hydrophobic with at least one water-repellent system according to at least one of Claims 1 to 9.

12. Use of the water-repellent systems according to at least one of Claims 1 to 9 for imparting water repellency to leather and/or hides.

## Revendications

1. Système d'agent d'hydrofugation contenant
a) un polysiloxane contenant des groupes carboxyle, qui est **caractérisé en ce que** la chaîne polysiloxane contient au moins une unité de structure de formule (1)
[ARₐSiO_{(3-a)/2}]ₖ (1)
et/ou au moins une unité de structure de formule (2)
[RcSiO_{(4-c)/2}]ₙ (2)
et le cas échéant au moins un groupe terminal choisi parmi les formules
R₃SiO_{1/2} (3)
et
AR₂SiO_{1/2} (3a)
où
A représente un radical contenant des groupes carboxyle de formule 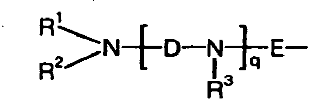 dans laquelle
R¹, R² et R³ représentent, indépendamment l'un de l'autre, hydrogène ou un radical hydrocarboné monovalent en C₂-C₆₀, qui contient le cas échéant un ou plusieurs groupes éther, imino, amide, urée, uréthane, ester ou carboxyle non adjacents et qui est le cas échéant substitué par un ou 2 groupes carboxyle -COOM et/ou 1 ou 2 groupes hydroxyle, et où le radical A est substitué par au moins un groupe COOM où
M représente hydrogène ou Na⁺, K⁺, Li⁺, NH⁺4, 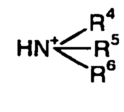 où R⁴, R⁵ et R⁶ représentent, indépendamment l'un de l'autre, C₁-C₁₈- alkyle, en particulier C₁-C₄-alkyle, ou C₁-C₁₈-alkyle substitué, en particulier hydroxyalkyle, ou aralkyle, en particulier benzyle,
et où R¹ à R³ sont liés à l'atome d'azote, indépendamment l'un de l'autre, via une liaison simple, un groupe -COO-, -CO- ou -CONH-, et
où R¹ et R² ne représentent pas simultanément H et ne sont pas non plus liés simultanément via un groupe carboxyle avec l'atome d'azote,
D et E représentent, indépendamment l'un de l'autre, un radical hydrocarboné divalent en C₂-C₂₀, qui peut être substitué par hydroxyle ou être interrompu par des atomes d'oxygène non adjacents,
q vaut 0 à 3,
R représente un radical alkyle en C₁ à C₁₂ ou un radical phényle,
a vaut 0 ou 1,
k vaut 0 à 50,
c vaut 1 ou 2 ; et
n vaut 10 à 1000,
à condition qu'au moins un groupe terminal de formule (3a) soit présent au cas où la chaîne polysiloxane ne contiendrait que des unités de structure de formule (2), et
b) au moins un composant du groupe B₁ à B₄, où
B₁ représente un copolymère anionique,
B₂ représente du poly(acide aspartique) ou un dérivé de celui-ci,
B₃ représente de la paraffine et
B₄ représente un produit d'addition d'isocyanate,
au moins un composant B₁ étant contenu comme composant b) pour lequel il s'agit d'un copolymère anionique préparé par une copolymérisation initiée par voie radicalaire (à chaque fois par rapport au mélange de monomères) de
α) 10-90% en mole d'ester d'un acide carboxylique éthyléniquement monoinsaturé en C₃-C₅ à base d'un alcool comprenant 4 à 40 atomes de carbone
β) 90-10% en mole d'un acide carboxylique éthyléniquement monoinsaturé
γ) 0-20% en mole d'un anhydride d'un acide dicarboxylique éthyléniquement monoinsaturé en C₄-C₆
δ) 0-30% en mole d'une oléfine en C₂-C₈ (isobutène, diisobutylène) et
ε) 0-10% en mole d'un autre comonomère du groupe formé par le styrène, l'alpha-méthylstyrène, les esters vinyliques d'acides C₁-C₈-carboxyliques
et le cas échéant par une transformation consécutive partielle des groupes anhydride avec un alcool primaire ou secondaire en C₁-C₄₀ et/ou avec une amine primaire ou secondaire présentant un ou deux radicaux alkyle ou alcényle en C₁-C₁₈, à condition qu'au moins 20% en mole des groupes carboxyle correspondant aux groupes anhydride ne soient pas transformés avec l'alcool et/ou l'amine, mais soient neutralisés par une base, où au moins 50% en mole des groupes carboxyle sont neutralisés.

2. Système d'agent d'hydrofugation selon la revendication 1, **caractérisé en ce que** dans la formule (1), dans la signification de A, les radicaux R¹ à R³ représentent, indépendamment l'un de l'autre 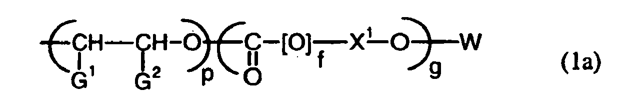 dans laquelle :
G¹ et G² représentent, indépendamment l'un de l'autre, H ou CH₃,
X¹ représente un radical hydrocarboné divalent, comprenant 2 à 30 atomes de carbone,
W représente H ou le groupe 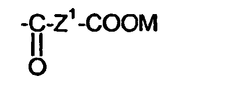 où
Z¹ représente un radical hydrocarboné divalent, comprenant 1 à 20 atomes de carbone, et
M a la signification susmentionnée,
p vaut 0 à 5,
f vaut 0 ou 1,
g vaut 0 à 3,
ou 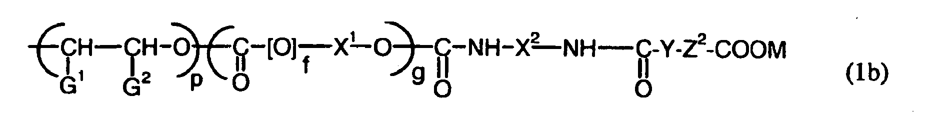 dans laquelle :
G¹, G², X¹, W, p, f, g et M ont la signification susmentionnée, et
X² représente un radical hydrocarboné divalent, comprenant 2 à 20 atomes de carbone,
Z² représente un radical hydrocarboné divalent comprenant 1 à 20 atomes de carbone, qui peut le cas échéant être substitué par un autre groupe -COOM, -NH₂, -OH, où M a la signification susmentionnée, et
Y représente -O-, -NH-, -N (C₁₋₄-alkyl) -,
ou
-Z³-COOM (1c)
où :
Z³ représente un radical alkylène comprenant 1 à 10 atomes de carbone, qui peut le cas échéant être substitué par un autre groupe -COOM, et
M a la signification susmentionnée.

3. Système d'agent d'hydrofugation selon au moins l'une quelconque des revendications 1 et 2, **caractérisé en ce qu'**il s'agit, pour le composant B₂, d'un dérivé de poly(acide aspartique) présentant un poids moléculaire déterminé en tant que moyenne numérique de 700 à 30 000, de préférence de 1300 à 16 000, pouvant être obtenu par transformation
B₂-A) d'un polysuccinimide présentant un poids moléculaire déterminé en tant que moyenne numérique de 500 à 10 000, de préférence de 500 à 6000, en particulier de 1000 à 4000, pouvant être obtenu par transformation d'un anhydride de l'acide maléique et d'une solution de NH₃ et condensation consécutive, avec
B₂-B) 5 à 90, de préférence 20 à 80% en mole, par rapport aux unités succinimide du polysuccinimide, d'amine primaire et/ou secondaire, dont les substituants azotés contiennent 1 à 60, de préférence 1 à 36 atomes de carbone, qui peuvent être substitués par des radicaux hydroxy et/ou interrompus par des atomes d'oxygène, au moins 2,5% en mole, de préférence au moins 15% en mole, en particulier au moins 30% en mole des substituants azotés de l'amine contenant au moins 12 atomes de carbone, et
B₂-C) avec 95 à 10% en mole, de préférence 80 à 20% en mole de base ouvrant le cycle en présence d'eau.

4. Système d'agent d'hydrofugation selon au moins l'une quelconque des revendications 1 à 3, **caractérisé en ce qu'**il s'agit, pour le composant B₃, d'un hydrocarbure paraffinique, qui peut le cas échéant être substitué par des groupes hydroxyle et/ou carboxyle.

5. Système d'àgent d'hydrofugation selon au moins l'une quelconque des revendications 1 à 4, **caractérisé en ce qu'**il s'agit, pour le composant B₄, d'un produit de transformation
B₄-a) d'un polyisocyanate organique
B₄-b) par équivalent de NCO contenu dans B₄-a) ou de NCO latent, de 0,0 à 0,9 équivalent d'alcool en C₆-C₂₄, de préférence en C₁₂-C₁₈,
B₄-c) par équivalent de NCO contenu dans B₄-a) ou de NCO latent, de 0,1 à 1,0 mole de cyanamide et
B₄-d) d'ammoniac ou d'amine volatile comme agent de neutralisation pour les groupes cyanamide, les produits de transformation étant exempts de groupes polyester ou polyéther et exempts d'atomes d'halogène.

6. Système d'agent d'hydrofugation selon au moins l'une quelconque des revendications 1 à 4, **caractérisé en ce qu'**il s'agit, pour le composant B₄, d'une polyurée modifiée anioniquement à base
I.a) de polyisocyanates organiques et
II. de composés polyfonctionnels réactifs avec NCO de la série
b) des composés polyhydroxyle,
c) des polyamines,
d) des aminoalcools et le cas échéant
III. de composés monofonctionnels réactifs avec NCO e) et le cas échéant
IV. d'eau f),
qui contient dans la chaîne polymère des groupes N-cyanoaminocarbonylurée anioniques incorporés de formule 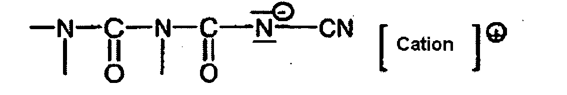 et le cas échéant des groupes cyano-urée anioniques en position terminale de formule 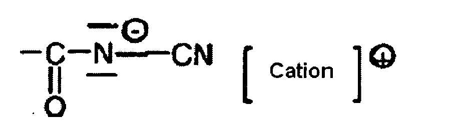 où le rapport des groupes incorporés dans la chaîne polymère aux groupes en position terminale est supérieur à 1:1 et où [cation]⁺ représente un ion de métal alcalin ou d'ammonium le cas échéant substitué.

7. Système d'agent d'hydrofugation selon les revendications 1 et 2, contenant comme b) un mélange d'au moins un composé B₁ selon la revendication 1 et au moins un composant B₃ selon la revendication 4.

8. Système d'agent d'hydrofugation selon les revendications 1 et 2 contenant comme b) au moins un composant B₄ selon les revendications 5 à 6.

9. Système d'agent d'hydrofugation selon la revendication 1, dans lequel
A représente A¹ et représente un radical du groupe formé par 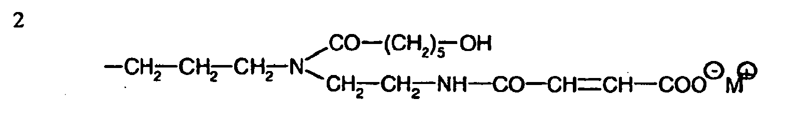 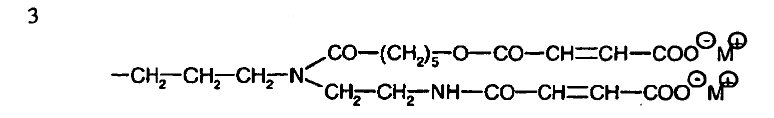 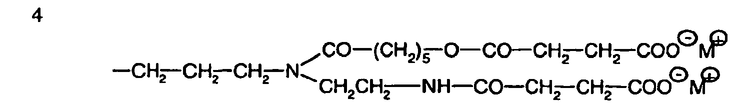 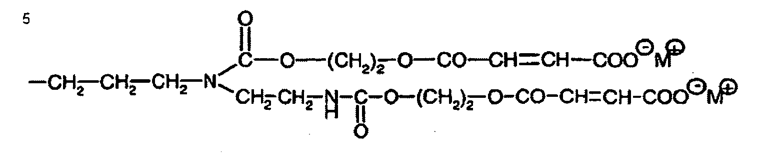 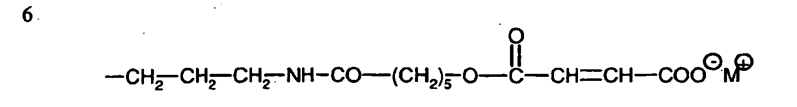 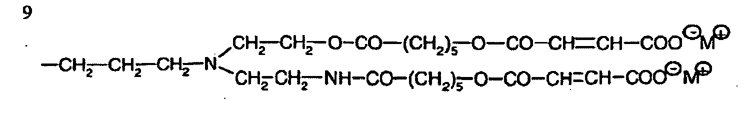 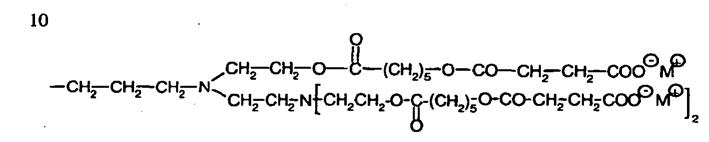 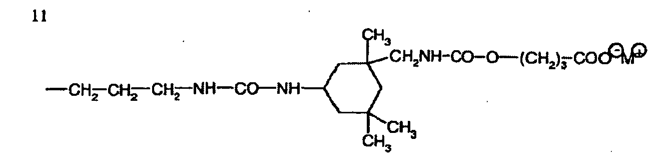 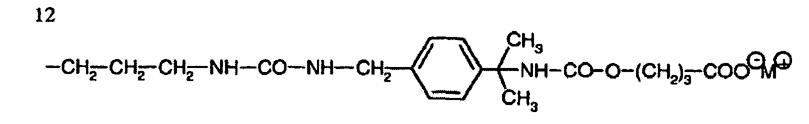 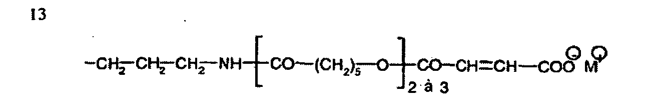 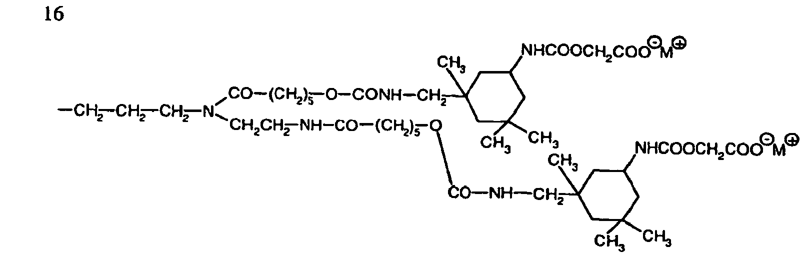 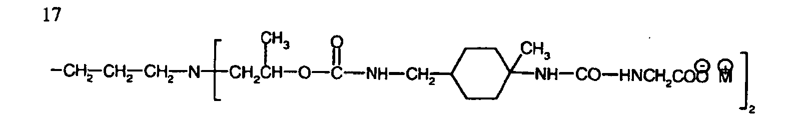 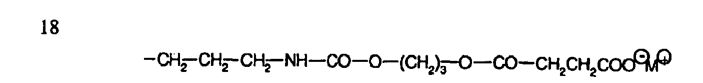 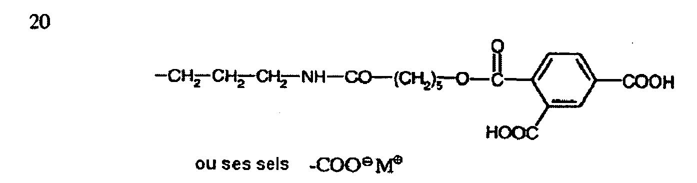 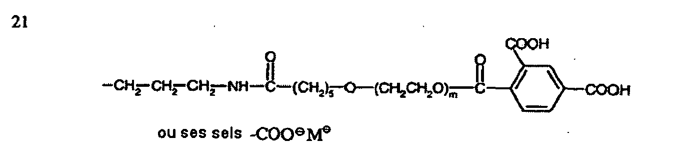 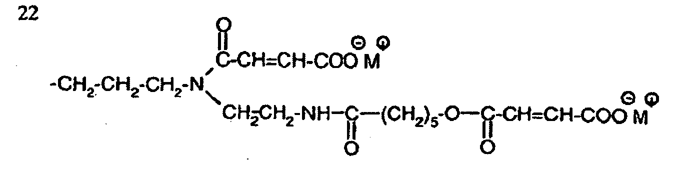 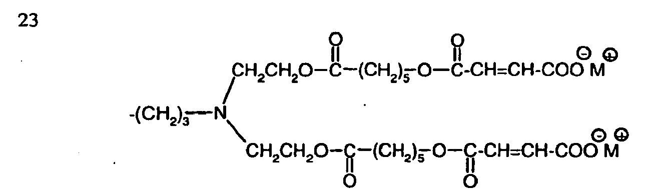 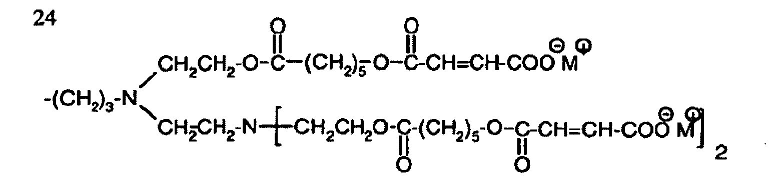 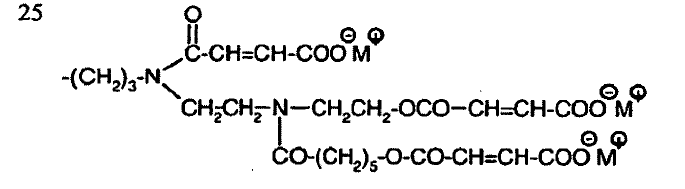 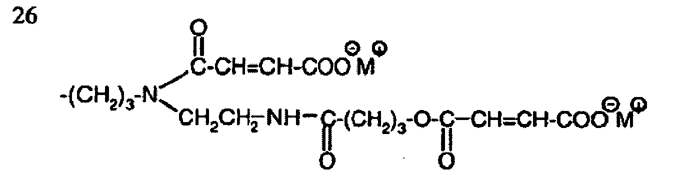
où
M, R, a, c et k ont la signification indiquée dans la revendication 1.

10. Procédé pour l'hydrofugation de substrats, **caractérisé en ce qu'**on traite le substrat avec un système d'agent d'hydrofugation selon au moins l'une quelconque des revendications 1 à 9.

11. Substrats hydrofugés avec au moins un système d'agent d'hydrofugation selon au moins l'une quelconque des revendications 1 à 9.

12. Utilisation des systèmes d'hydrofugation selon au moins l'une quelconque des revendications 1 à 9 pour l'hydrofugation de cuir et/ou de peaux.
